# EUROPEAN PATENT APPLICATION

(11) **EP 4 475 468 A1**
(43) Date of publication of application: **11.12.2024**
(21) Application number: 23210352.3
(22) Date of filing: 16.11.2023
(51) Int. Cl.: H04L 1/00, H04B 10/80

(54) **OPTICAL CONNECTIVITY FOR INTERCONNECT TECHNOLOGIES**

(30) Priority: 06.06.2023 US 202363471338 P; 31.08.2023 US 202318240762
(71) Applicant: Intel Corporation, Santa Clara, CA 95054 (US)
(72) Inventor: DAS SHARMA, Debendra, Saratoga 95070 (US)
(74) Representative: Maiwald GmbH

(57) **Abstract**

Optical connectivity for interconnects are described. A method includes determining an optical interconnect supports a defined optical mode, decoding electrical signals from an electrical interconnect, the electrical signals to represent a number of bits from one or more messages, converting the electrical signals to optical signals for the optical interconnect, and mapping the decoded bits to one or more optical channels of the optical interconnect. Other embodiments are described and claimed.

## Description

### CROSS-REFERENCE TO RELATED APPLICATIONS

This application claims the benefit of and priority to previously filed United States Patent Provisional Application Serial Number 63/471,338 filed June 6, 2023, entitled "OPTICAL CONNECTIVITY FOR INTERCONNECTED TECHNOLOGIES", which is hereby incorporated by reference in the entirety.

### BACKGROUND

Interconnect technology is fundamental to computer and communications systems. It refers to how data is transmitted between input/output (I/O) devices and a computer system or network. It encompasses the various physical and logical interfaces used to establish communication and facilitate the transfer of data. The I/O interconnect technology enables devices such as peripherals, storage devices, and networking components to interact with the central processing unit (CPU) and memory of a computer system. Some examples of I/O interconnect technologies include Universal Serial Bus (USB) which is a widely used standard for connecting devices to a computer, Ethernet which is a networking technology that enables communication between computers over a local area network (LAN), and Peripheral Component Interconnect (PCI) which is a bus standard used to connect peripheral devices directly to the computer's motherboard. These are just a few examples of I/O interconnect technologies. The choice of technology depends on the specific requirements of the devices being connected and the intended application.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates system-on-a-chip (SoC) in accordance with one embodiment.
FIG. 2 illustrates a system in accordance with one embodiment.
FIG. 3 illustrates a system in accordance with one embodiment.
FIG. 4A illustrates a signal flow in accordance with one embodiment.
FIG. 4B illustrates a signal flow in accordance with one embodiment.
FIG. 4C illustrates a signal flow in accordance with one embodiment.
FIG. 5A illustrates a signal flow in accordance with one embodiment.
FIG. 5B illustrates a signal flow in accordance with one embodiment.
FIG. 5C illustrates a signal flow in accordance with one embodiment.
FIG. 5D illustrates a signal flow in accordance with one embodiment.
FIG. 6 illustrates a mapping layout in accordance with one embodiment.
FIG. 7 illustrates a mapping layout in accordance with one embodiment.
FIG. 8 illustrates a mapping layout in accordance with one embodiment.
FIG. 9 illustrates a data structure in accordance with one embodiment.
FIG. 10 illustrates a logic flow in accordance with one embodiment.
FIG. 11 illustrates a logic flow in accordance with one embodiment.
FIG. 12 illustrates a logic flow in accordance with one embodiment.
FIG. 13 illustrates a logic flow in accordance with one embodiment.
FIG. 14 illustrates a logic flow in accordance with one embodiment.
FIG. 15 illustrates an aspect of the subject matter in accordance with one embodiment.

### DETAILED DESCRIPTION

In the following description, numerous specific details are set forth in order to provide a thorough understanding of various embodiments. However, various embodiments may be practiced without the specific details. In other instances, well-known methods, procedures, components, and circuits have not been described in detail so as not to obscure the particular embodiments. Further, various aspects of embodiments may be performed using various means, such as integrated semiconductor circuits ("hardware"), computer-readable instructions organized into one or more programs ("software"), or some combination of hardware and software. For the purposes of this disclosure reference to "logic" shall mean either hardware (such as logic circuitry, processing circuitry, or more generally circuitry or circuit), software, firmware, or some combination thereof.

The present disclosure is generally related to interconnect technologies suitable for edge computing, cloud computing, network communication, data centers, network topologies, communication system implementations, network/switch fabrics, interconnect implementations. In particular, embodiments are directed to optical connectivity for multiple interconnect technologies, such as PCI express (PCIe), Compute Express Link (CXL), and/or other interconnect technologies.

Interconnect technologies use either electrical or optical interconnects to transfer data between various components in computer and communications systems. An interconnect system that uses both electrical and optical interconnects is referred to as a hybrid interconnect system. In a hybrid interconnect system, electrical interconnects are used for certain connections, while optical interconnects are employed for others. The electrical interconnects handle the transmission of electrical signals, typically in the form of copper wires or traces on a printed circuit board (PCB). These electrical interconnects are commonly used for short-range, high-speed signaling within a device or between nearby components. On the other hand, optical interconnects utilize optical fibers or waveguides to transmit signals in the form of light. Optical interconnects are capable of high-speed, long-distance communication with low signal degradation and immunity to electromagnetic interference. They are often employed for long-range data transmission or connections between devices located at a distance from each other. In a hybrid interconnect system, the choice between electrical and optical interconnects depends on factors such as the required speed, distance, bandwidth, power consumption, electromagnetic compatibility, and cost. By combining both electrical and optical interconnect technologies, hybrid interconnect systems can leverage the advantages of each approach to optimize performance and meet specific design requirements. Hybrid interconnect systems can be found in various applications, such as high-performance computing (HPC), data centers, telecommunications, aerospace, and high-speed data networking. They provide a flexible solution that balances the benefits of electrical and optical interconnects in a single system.

PCIe and CXL are two widely adopted interfaces that use electrical interconnects. These interconnects offer relatively high data transfer rates and bandwidth for short-range, high-speed signaling within a device or between nearby components. As components become physically distant from each other, such as in a HPC or data center, the data transfer rates and bandwidth decrease. Optical technology can be used to extend the channel reach of these and other interconnect technologies to support rack and pod level disaggregation in HPC and data centers.

One challenge in hybrid interconnect systems involves converting electrical signals into optical signals, and vice-versa, along an end-to-end (E2E) path while staying in compliance with electrical specifications and optical specifications for the underlying protocols. The protocols may have different data transfer rates, bandwidth, power requirements, and other features. For example, assume a first system-on-a-chip (S0C) on a first device communicates with a second SoC on a different device. The first SoC transmits data as electrical signals along an electrical path using an electrical specification defined by PCIe, and it converts the electrical signals to optical signals for transmission along an optical path to the second device using an optical specification defined by Ethernet over Optical Transport Network (OTN). The second device receives the optical signals, and it converts them back to electrical signals that are received by the second SoC. The PCIe links may have a data rate of 64 gigatransfers per second (GT/s) while the OTN links may have a target data rate of 32 GT/s, or vice-versa. It becomes a technical challenge to convert signals carried by the PCIe links to the OTN links at different data rates in an efficient manner.

Conventional solutions address this challenge using a switching type approach with a full PCIe stack and separate optical channels for sideband signals to ensure interoperability. A significant downside to these approaches include higher latency, power, and costs in terms of time, resource consumption, and/or physical hardware space.

The present disclosure attempts to solve these and other challenges. Embodiments are generally directed to a hybrid interconnect system that combines electrical interconnects and optical interconnects to communicate data along an E2E communication path between endpoints, such as in a HPC center, data center, cloud computing, and other operating environments. Some embodiments are particularly directed to a hybrid interconnect system that uses one or more optical retimers along the E2E communication path. A retimer is a device used in telecommunications and data communication systems to improve signal integrity and extend the reach of high-speed signals transmitted over a channel or interconnect. In one embodiment, for example, a hybrid interconnect system uses optical retimers that are designed to perform retiming operations between electrical interconnects and optical interconnects, while imposing minimal changes to the interconnect ports. Each optical retimer is implemented as a chip that interfaces with interconnect ports using corresponding interconnect electrical connections. The optical retimer chips communicate with each other using optical interconnect technology (e.g., optical media), effectively providing an E2E connection between the ports. The optical retimer chips operate in a manner that make it appear that there is an E2E electrical connection between the ports by manipulating bits at the physical layer (PHY) level. As the speeds of interconnect PHYs continue to increase, the use of optical retimers can significantly reduce latency, power consumption, and costs in terms of time, resource consumption, and/or physical hardware space.

Various embodiments enable any type of optical technology (or any other alternate media) so that the ecosystem has the freedom to innovate on the underlying technology which can evolve over time and can be different for different usage models. Further, the approaches discussed herein require minimal changes to the interconnect ports (e.g., PCIe, CXL, and/or the like). The approaches discussed herein also provide low-latency and low-power solutions since only the PHY layer is involved in the optical retimer and separate channels for sideband are not required. Using the embodiments/implementations discussed herein may lead to innovations for building larger with applications such as rack/ pod level disaggregation, composable systems, and scale-out systems with shared memory.

Certain embodiments are designed to interoperate with one or more interconnect standards, such as the well-established industry standard Peripheral Component Interconnect Express (PCI Express^{®} or PCIe^{®}) as defined by the Peripheral Component Interconnect Special Interest Group (PCI-SIG), the Compute Express Link^{™} (CXL^{™}) as defined by the CXL Consortium, or other industry standards. More particularly, some embodiments are designed to improve upon the PCI-SIG family of standards, such as the PCI Express Base Specification, Version 6.0, January 2022 (PCIe 6.0), the PCI Express 6.1 Base Specification, Revision 6.1, dated July 12, 2023 (PCIe 6.1)(collectively "PCIe Standards"), and any progeny, revisions or variants. The PCIe Standards offer significant advancements over previous versions. They provide increased bandwidth and data transfer rates, reaching up to 64 GT/s per lane. The PCIe Standards are designed to meet the demanding requirements of high-performance computing, data centers, and emerging technologies such as artificial intelligence and machine learning. Embodiments are not limited to implementation by PCI-SIG standards, and are applicable to other interconnect standards, such as CXL standards.

PCIe and/or CXL are used as example interconnect technologies throughout the present disclosure, however, the various embodiments and/or implementations described herein should not be construed as limited to using such technologies, and the various embodiments and/or implementations discussed herein may be applicable to any interconnect technology or combinations thereof, such as any of the interconnect technologies discussed or mentioned herein and/or those developed in the future.

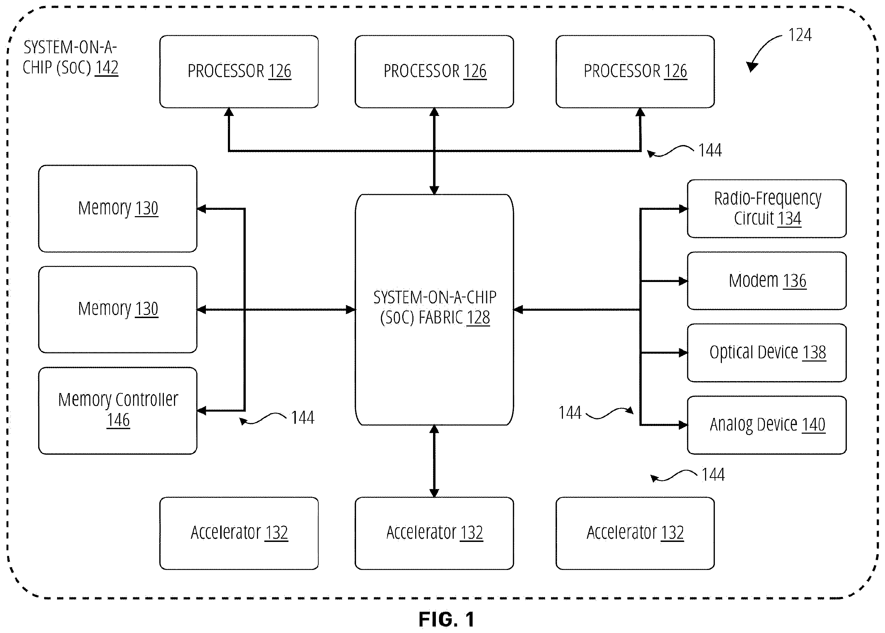

FIG. 1 illustrates an example of a system 124. System 124 may be an electronic system, such as a computing system, that implements one or more semiconductor devices on a semiconductor die in a system-on-a-chip (SoC) implementation. The semiconductor die may implement one or more interconnects and associated link protocols defined by a semiconductor specification. In one embodiment, device specifications are defined by a Universal Chiplet Interconnect Express (UCIe^{™}) specification promulgated by the UCIe Consortium, such as the UCIe specification, version 1.0, February 17, 2022, along with any progeny, revisions and variants (collectively referred to as the "UCIe Specification"). UCIe is an open industry standard interconnect offering high-bandwidth, low-latency, power-efficient, and cost-effective on-package connectivity between chiplets. Other device specifications may be used as well. Embodiments are not limited in this context.

System 100 illustrates an example of multiple semiconductor devices in a SoC 142. System 124 illustrates a die level integration to deliver power-efficient and cost-effective performance. The SoC 142 can be integrated with other semiconductor dies at the package level with applicability from hand-held to high-end servers with dies from multiple sources connected through different packaging options even on the same package.

As depicted in FIG. 1, the SoC 142 includes one or more processors 126 and one or more memory 130 coupled to a SoC fabric 128. A processor 126 may include any processing element, such as a microprocessor, a host processor, an embedded processor, a co-processor, or other processor. Each processor 126 is coupled to SoC fabric 128 through a link 144, such as a front-side bus (FSB), for example. In one embodiment, the link 144 is a serial point-to-point interconnect as described below. In another embodiment, link 144 includes a serial, differential interconnect architecture that is compliant with different interconnect standards. Interconnect protocols and features discussed below may be utilized to implement the links 144 coupling the set of components introduced here in FIG. 1.

Memory 130 includes any memory device, such as random access memory (RAM), non-volatile (NV) memory, or other memory accessible by devices in system 124. Memory 130 is coupled to SoC fabric 128 through a link 144, such as a memory interface, for example. Examples of a memory interface include a double-data rate (DDR) memory interface, a dual-channel DDR memory interface, a low power DDR (LPDDR), a dynamic RAM (DRAM) memory interface, or other types of memory interfaces.

The SoC fabric 128 is an interconnect infrastructure within a SoC design. It encompasses a network of wires, buses, and interconnects that facilitate communication and data transfer between various components and subsystems integrated on a single chip. The SoC fabric 128 serves as the backbone for connecting different functional blocks, such as the central processing unit (CPU) cores, memory controllers, input/output interfaces, graphics processors, accelerators, and other Intellectual Property (IP) blocks. It enables these components to communicate, share data, and work together to perform the desired tasks efficiently. The SoC fabric 128 is responsible for managing data flow, routing signals, and maintaining the necessary data paths between different components. It ensures that data is transmitted accurately and with low latency, while also optimizing power consumption and overall performance.

Although not shown, the SoC fabric 128 may be coupled to off-die devices. Input/Output (I/O) modules, also referred to as interfaces or ports, may implement a layered protocol stack to provide communication between SoC fabric 128 and one or more semiconductor devices implemented on other semiconductor dies in a semiconductor package.

The SoC 142 may further include one or more accelerators 132. An accelerator is a separate architectural substructure that is architected using a different set of objectives than the base processor, where these objectives are derived from the needs of a special class of applications. Examples of accelerators include a graphics accelerator to enhance graphics rendering capability, a cryptographic accelerator to help with encryption or decryption, a web accelerator to improve web applications, a hypertext preprocessor (PHP) accelerator to assist in web development, and so forth.

The SoC 142 may include other semiconductor devices or components to implement various compute or communications functions, such as a radio-frequency circuit 134, a modem 136, an optical device 138, an analog device 140, and so forth. Embodiments are not limited in the type or number of semiconductor devices implemented for the SoC 142.

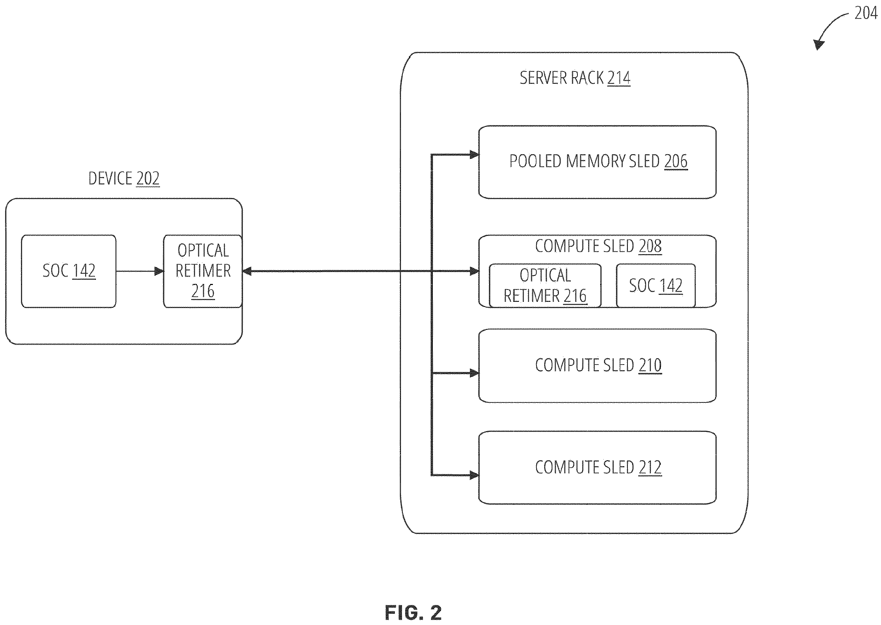

FIG. 2 illustrates a system 204. The system 204 comprises a device 202 implementing the SoC 142 and an optical retimer 216.

The optical retimer 216 provides off-package or off-device connectivity using different type of media (e.g., optical, electrical cable, mmWave) to transport the underlying protocols (e.g., PCIe, CXL) at the rack or even the pod level for enabling resource pooling, resource sharing, and even message passing using load-store semantics beyond the node level to the rack/ pod level to derive better power-efficient and cost-effective performance at the edge and data centers. The optical retimer 216 may communicate with various server-level compute, memory and communications resources implemented by various server sleds of a server rack 214, such as a pooled memory sled 206 and one or more compute sleds such as compute sled 208, compute sled 210 and compute sled 212.

One or more of the compute sleds of the server rack 214 may also include an optical retimer 216 and SoC 142. As depicted in FIG. 2, for example, the compute sled 208 may also comprise an optical retimer 216 coupled to a SoC 142. The SoC 142 of the device 202 can communicate with the SoC 142 of the compute sled 208 via the optical retimers 216 along an E2E communication path that includes both electrical interconnects and optical interconnects.

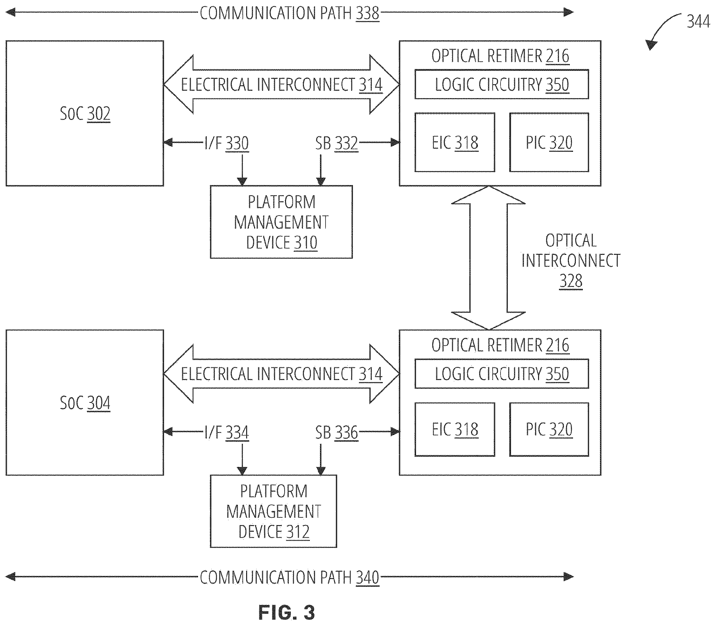

FIG. 3 illustrates a system 344. The system 344 is an example implementation for the embodiments discussed herein. More particularly, the system 344 depicts an example of a unifying input/output (I/O) architecture comprising a combination of electrical, optical, and interconnect components. Some embodiments are described with reference to a PCIe architecture and key concepts. PCIe is a high performance general purpose I/O interconnect defined for a wide variety of computing and communication platforms. The unifying I/O architecture may be suitable for desktop, mobile, workstation, server, communications platforms and embedded devices to support edge computing, cloud computing, network communication, data centers, network topologies, communication system implementations, network/switch fabrics, interconnect technologies, and interconnect implementations, and in particular, optical connectivity for multiple interconnect technologies, such as PCIe, CXL, and/or other interconnect technologies. The unifying I/O architecture supports multiple platform interconnect usages, such as chip-to-chip or board-to-board via connector or cabling, with a wide variety of mechanical form factors. Embodiments are not limited to PCIe architectures.

As depicted in FIG. 3, the system 344 comprises a SoC 302 and a SoC 304, which are endpoints in an E2E communication path. The SoC 302 and the SoC 304 are similar to the SoC 142 described with reference to FIG. 1. The SoC 302 is communicatively coupled to a first optical retimer 216 via a first electrical interconnect 314 along a first communication path 338. The SoC 302 is communicatively coupled to a platform management device 310 via a management interface 330. The first optical retimer 216 is also communicatively coupled to the platform management device 310 via a sideband link 332. Similarly, the SoC 304 is communicatively coupled to a second optical retimer 216 via a second electrical interconnect 314 along a second communication path 340. The SoC 304 is communicatively coupled to a platform management device 312 via a management interface 334. The second optical retimer 216 is also communicatively coupled to the platform management device 312 via a sideband link 336. The first optical retimer 216 and the second optical retimer 216 are communicatively coupled by an optical interconnect 328.

The system 344 is a hybrid interconnect system that performs E2E communication between the SoC 302 and the SoC 304 using both an electrical interconnect 314 and an optical interconnect 328. The system 344 implements a pair of optical retimers 216, sometimes referred to as peer retimers, that are designed to allow interoperability between one or more communication protocols having defined electrical specifications (e.g., PCIe, CXL, and others) and one or more communication protocols or optical interconnect technologies having defined optical specifications (e.g., Optical Ethernet). The optical retimers 216 map information bits between electrical signals and optical signals for efficient transport using an available bandwidth and bit error rate (BER) for lanes of the electrical interconnect 314 and an available bandwidth and BER for optical channels of the optical interconnect 328. The optical retimers 216 also orchestrate training operations and procedures to initialize, configure and otherwise prepare the electrical interconnect 314 and the optical interconnect 328 for normal data transport operations. In this manner, the system 344 ensures high-speed, low-latency communications between the SoC 302 and the SoC 304, even when implemented by devices physically separated from each other by longer distances typically found in HPC, data centers, and the like.

In one embodiment, for example, the system 344 includes a first SoC 142, a first electrical interconnect 314 communicatively coupled to the first SoC 142, an optical interconnect 328, and a first optical retimer 216 communicatively coupled to the first electrical interconnect 314 and the optical interconnect 328. The first optical retimer 216 determines the optical interconnect 328 supports a defined optical mode, decodes electrical signals from the electrical interconnect 314, the electrical signals to represent a number of bits from one or more messages from the first SoC 302, converts the electrical signals to optical signals for the optical interconnect 328, and maps the decoded bits from the first electrical interconnect 314 to one or more optical channels of the optical interconnect 328.

In one embodiment, the system 344 also includes a second SoC 304, a second electrical interconnect 314 communicatively coupled to the second SoC 304, and a second optical retimer 216 communicatively coupled to the second electrical interconnect 314 and the optical interconnect 328. The second optical retimer 216 decodes optical signals from the first optical retimer 216 transported over the optical interconnect 328, the optical signals to represent a number of bits from the one or more messages from the first electrical interconnect 314 mapped to the one or more optical channels of the optical interconnect 328, converts the optical signals to electrical signals for the second electrical interconnect 314, and maps the decoded bits from the optical interconnect 328 to one or more lanes of the second electrical interconnect 314 for transport to the second SoC 304.

The optical retimer 216 is used in optical communication systems to improve the quality and integrity of data signals as they are transmitted through optical fibers. It is primarily utilized in high-speed data transmission applications, such as data centers or long-distance communication networks. The main function of the optical retimer 216 is to reshape, retime, and enhance optical signals to compensate for any degradation or distortion that they may have experienced during transmission. Optical signals traveling through the fiber-optic cables may encounter various impairments like signal dispersion, attenuation, or noise, which can degrade signal quality and limit the achievable data rates. The optical retimer 216 receives the incoming optical signal, processes it, and then retransmits a clean and improved version of the signal. It performs functions such as signal equalization, amplification, clock recovery, and re-timing to regenerate the optical signal to its original quality. By enhancing and reshaping the signal, the optical retimer 216 enables longer transmission distances, higher data rates, and improved signal integrity, ultimately improving overall communication performance in optical networks.

The optical retimer 216 include logic circuitry 350. The logic circuitry 350 may control operations for the optical retimer 216. The logic circuitry 350 may determine whether the electrical interconnect 314, the optical interconnect 328, and/or the optical retimer 216 supports one or more defined modes necessary to support operation of the optical retimer 216 for a given protocol, such as PCIe, CXL, or alternate protocol. Examples of defined modes include without limitation a flow control unit (FLIT) mode, a separate reference independent spread (SRIS) spectrum clocking mode, an optical mode, an electrical mode, a management mode, a training mode, a testing mode, a configuration mode, a mode defined by the PCIe Standards, and other defined modes. If the logic circuitry 350 determines that the optical retimer 216 supports the one or more defined nodes, the logic circuitry 350 allows the optical retimer 216 to proceed with normal operations to support optical and/or electrical communications, such as link training or data transport. If the logic circuitry 350 determines that the optical retimer 216 does not support one or more defined nodes, the logic circuitry 350 terminates link training or data transport, and it indicates the error in one of its internal status registers. The logic circuitry 350 checks a capability data structure for the defined modes, where one or more bits stored in the capability data structure corresponds to a given defined mode.

The optical retimer 216 includes an electronic integrated circuit (EIC) (or electronic interface circuitry), such as EIC 318, for example. The EIC 318 is a specialized circuitry that is designed and integrated into the optical retimer 216. The optical retimer 216 regenerates and enhances electrical signals (e.g., analog or digital signals) that have suffered degradation or impairments during transmission. The EIC 318 within the optical retimer 216 performs various functions to restore and improve the quality of the incoming digital signal. It typically includes digital signal processing (DSP) capabilities, such as digital equalization, clock recovery, timing correction, and signal conditioning. The circuitry within the EIC 318 may comprise a combination of analog and digital components. These components work together to analyze, manipulate, and regenerate the incoming digital signal to compensate for signal degradation, noise, and timing issues. The EIC 318 also incorporates interfaces for receiving and transmitting digital signals. This allows the optical retimer 216 to receive the degraded digital signal, perform the necessary signal processing operations, and then retransmit a regenerated and enhanced version of the signal.

The optical retimer 216 further includes a photonics integrated circuit (PIC) (or photonics interface circuitry), such as PIC 320, for example. The PIC 320 is a specialized circuitry that incorporates both electronic and photonic components on a single chip. Unlike traditional electronic integrated circuits that primarily rely on electronic signals, a photonics integrated circuit leverages photons (light) for signal processing and transmission. In the context of the optical retimer 216, the PIC 320 enables the use of optical components and techniques to regenerate and enhance optical signals. It integrates photonic devices such as lasers, modulators, detectors, waveguides, and other optical elements with electronic components for signal processing and control. The inclusion of photonic elements in the PIC 320 allows for the manipulation, regeneration, and amplification of optical signals directly within the optical retimer 216. This enables improved signal quality, higher data rates, and longer transmission distances compared to purely electronic-based retimers. The PIC 320 within the optical retimer 216 can perform various functions commonly found in electronic retimers, including signal equalization, clock recovery, signal reshaping, and timing correction.

The electrical interconnect 314 transports electrical signals between the SoC 302 and the hybrid retimer 306. In one embodiment, for example, the electrical interconnect 314 is implemented as a PCIe interconnect where each end connects to PCIe ports in the SoC 302 and the optical retimer 216. The PCIe interconnect comprises dual unidirectional differential links. The PCIe interconnect employs a lane-based structure, with each lane consisting of two low-voltage differential driven signal pairs, with one for transmitting data and one for receiving data. Each lane can support one direction of data flow at a time. PCIe devices can be designed with different lane configurations, such as x1, x4, x8, or x16 lanes, referring to the number of lanes they utilize. A data clock is embedded using an encoding scheme to achieve very high data rates. The PCIe interconnect also incorporates advanced features such as hot-plug support, dynamic link speed negotiation, and power management capabilities. These features enhance the ease of use, reliability, and energy efficiency of the interconnect.

The platform management device 310 is a specialized component or integrated circuit that is responsible for managing and monitoring the functioning of a platform or system. It typically operates as an integral part of the system management or system control infrastructure. The platform management device 310 enables system-level management and control functions, including monitoring, reporting, and controlling various aspects of the system's hardware and software. The platform management device 310 communicates with the SoC 302 via the management interface 330 and the optical retimer 216 via the sideband link 332. When the electrical interconnect 314 is implemented as a PCIe link, the sideband link 332 is implemented as PCIe sideband link.

The sideband link 332 refers to an auxiliary communication channel that runs parallel to the main data lanes of the electrical interconnect 314. When the electrical interconnect 314 is a PCIe link, the sideband link 332 enables communication between the devices connected over the PCIe interface and facilitates various control, management, and configuration functions. The sideband link 332 is used for transmitting sideband signals, also known as sideband messages or sideband packets, which carry metadata and control information related to the operation and management of the PCIe link and connected devices. These sideband signals are distinct from the primary data transmission occurring on the main data lanes. The sideband link 332 allows devices to exchange information such as power management requests, flow control, error reporting, link status updates, device discovery, and configuration messages. It enables devices to communicate with each other and with the PCIe host controller to coordinate link training, power management transitions, error handling, and other vital functions. The sideband link 332 typically operates at a lower data rate compared to the main data lanes and uses separate pins in the physical PCIe connector. The metadata and control information carried over the sideband link 332 help ensure efficient and reliable operation of the PCIe link and enable advanced features such as hot-plug detection, device enumeration, and link status monitoring. The sideband link 332 provides a dedicated communication channel for control and management purposes while preserving the main data lanes for high-speed data transfer.

The first optical retimer 216 and the second optical retimer 216 are coupled to each other via an optical interconnect 328. The optical interconnect 328 transmits signals using light. The optical interconnect 328 may be implemented using any suitable optical interconnect technology such as, for example, fiber optic cables, vertical cavity surface emitting lasers (VCSELs), single-mode fiber, multi-mode fiber, waveguides, free-space optical interconnects, optical printed circuit boards (PCBs), ONT, opto-electronic transceivers, parallel optics interconnects, coherent optical interconnects, silicon photonics, and/or any other optical interconnect technologies, such as any of those discussed herein and/or any combination thereof. The optical interconnect 328 may be compliant with one or more optical protocols commonly used for optical interconnects, such as InfiniBand, Ethernet, Optical Ethernet, 10 Gigabit Ethernet (10GbE) and 100 Gigabit Ethernet (100GbE) deployed over optical links, Fiber Channel, Serial Attached SCSI (SAS). The choice of protocol depends on the specific requirements of the system, such as bandwidth, latency, distance, and application needs.

In one embodiment, for example, the SoC 302 may implement a component, such as a controller hub, that may be implemented as a root hub, root complex, or root controller in a PCIe or CXL interconnection hierarchy, or other industry standards. The SoC 302 may include a root port (RP), which is a PCIe port on a root complex (RC) that maps a portion of a hierarchy through an associated virtual PCI-PCI bridge. An RC is a defined system element that includes at least one host bridge, RP, or RC integrated endpoint. Here, a hierarchy is a PCIe I/O interconnect topology, wherein a configuration space addresses (referred to as a tuple of bus/device/function numbers or simply "Bus/Function Numbers") are unique. These addresses are used for configuration request routing, completion routing, some message routing, and for other purposes. In some contexts, a hierarchy is also called a segment, and in flow control unit (FLIT) (or flow control information unit) mode a segment number is sometimes also included in the identifier (ID) of a function. In some examples, a function is an addressable entity within a device and/or an addressable entity in a configuration space associated with a single function number.

In an interconnect system, a FLIT refers to a flow control packet or unit of data that is used for communication and coordination between devices or components. FLITs are typically used in high-speed interconnect architectures such as network-on-chip (NoC) designs or interconnects found in parallel computing systems. FLITs are employed to break down larger packets or messages into smaller units for efficient transmission across the interconnect. Each FLIT contains a portion of the original message along with additional control information, such as the source and destination addresses and flow control mechanisms. The purpose of using FLITs is to manage data flow and ensure reliable and efficient communication within the interconnect. They help regulate the timing and sequencing of data transmission between multiple components in a system, avoiding issues like congestion, deadlock, or buffer overflow. FLIT-based interconnect architectures often employ flow control mechanisms to manage the forward progress of FLITs through the interconnect. These mechanisms can include credit-based flow control, where FLITs are only sent when there is available buffer space in the receiving component, or virtual channel-based flow control, where FLITs travel through independent virtual channels to mitigate contention and provide better performance. By utilizing FLITs and appropriate flow control mechanisms, interconnect systems can achieve efficient and reliable communication while accommodating varying data sizes and ensuring proper coordination between the connected devices.

The SoC 302 and the SoC 304 may operate as endpoints and/or switches. An endpoint is a defined system element, such as a source element or a destination element. Additionally or alternatively, an endpoint is a function that has a type "00h" configuration space header. A switch is a defined system element that connects two or more ports to allow packets, messages, and/or FLITs to be routed from one port to another port.

In one embodiment, the endpoints are PCIe or CXL endpoints. A PCIe endpoint refers to a type of function that can be the requester or completer of a PCIe transaction either on its own behalf or on behalf of a distinct non-PCI Express device (other than a PCI device or host CPU), e.g., a PCIe attached graphics controller or a PCIe-USB host controller. PCIe endpoints are classified as either legacy, PCI Express, or Root Complex Integrated Endpoints (RCiEPs). In some examples, the second SoC 304 is an RCiEP.

The SoC 302 and the SoC 304 can perform E2E communications with each other through the optical retimers 216 and associated I/O interconnects. For example, the SoC 302 communicates electrical signals over the electrical interconnect 314 to the first optical retimer 216. The EIC 318 of the first optical retimer 216 receives the electrical signals, enhances the electrical signals as needed, and passes the electrical signals to the PIC 320 of the first optical retimer 216. The PIC 320 receives the electrical signals, converts the electrical signals to optical signals, and enhances the optical signals as needed. The PIC 320 transmits the optical signals from the PIC 320 to the PIC 324 of the second optical retimer 216 via the optical interconnect 328. The PIC 324 receives the optical signals, converts the optical signals to electrical signals, and passes the electrical signals to the EIC 322 of the second optical retimer 216. The EIC 322 receives the electrical signals, enhances the electrical signals as needed, and transmits the electrical signals from the second optical retimer 216 to the SoC 304 via the electrical interconnect 314.

In various implementations, the optical retimer 216 is a PHY protocol aware, software transparent, extension device (or repeater) that forms two separate types of link segments, such as electrical link segments and optical link segments. Each optical retimer 216 captures the data bits, performs electrical to optical conversion (and vice-versa) between its two ends, orchestrates link training between the two ports, and communicates sideband information as well as local management control with its peer optical retimer 216.

Additionally or alternatively, the optical retimer 216 is designed to compensate for timing skew that can occur in high-speed interconnects across both types of link segments. Timing skew refers to the difference in arrival times of signals within an interconnect or communication channel. It occurs when signals that originate from the same source reach the destination at different times due to variations in propagation delay. Different factors can cause timing skew, such as variations in the length of the interconnect, differences in the transport characteristics of the transmission lines, and variations in the manufacturing process or materials used. Timing skew can have detrimental effects on the overall system performance, particularly in high-speed communication or synchronous systems. When signals arrive at different times, it can introduce timing errors, synchronization issues, or result in data corruption. As such, a receiving device may not correctly interpret the data. This can lead to incorrect processing or interpretation of the received information. Managing timing skew is crucial in high-speed interconnects to maintain proper signal timing, minimize data errors, and ensure reliable communication between devices.

The optical retimer 216 attempts to mitigate timing skew between electrical signals carried by the electrical interconnect 314 and the optical signals carried by the optical interconnect 328. The optical retimer 216 samples an incoming signal and then re-emits it with the correct timing. This ensures that the signals arrive at their destination at the same time, even if they have traveled different distances through different types of interconnects.

In various embodiments, the optical retimer 216 is implemented as a chip that interfaces with interconnect ports, such as PCIe or CXL ports, using corresponding interconnect electrical connections implemented by the electrical interconnect 314. Two optical retimers 216 communicate with each other using the optical interconnect 328, effectively providing an E2E connection between the PCIe or CXL ports. The optical retimers 216 operate in a way that make it appear that there is an electrical connection between them by manipulating bits at the PHY layer level.

When the optical side can be bandwidth matched with an interconnect port (e.g., a PCIe/CXL port) and it has better bit error rate (BER) characteristics than the underlying interconnect electrical specification, the optical retimer 216 passes each FLIT, including its forward error correction (FEC) and cyclic redundancy check (CRC) bits, unchanged. When the optical side cannot be bandwidth matched with an interconnect port (e.g., a PCIe/CXL port), each optical retimer 216 flow-controls the local port transmit side with PHY layer credits and it changes the forward. In both cases, the skip (SKP) Ordered Sets are modified to convey sideband messages as well as any inter-retimer messages (if any). SKP Ordered Sets are used to compensate for differences in frequencies between bit rates at two ends of a link, as defined in section § 4.2.8. 1, § 4.2.8.2, and § 4.2.8.3 of the PCIe Standards.

In some implementations, external retimers connect at least two communicating entities, where each communicating entity/party advertise the support for interoperability at all levels including hardware and software. This may be similar to a PCIe device that advertises it is PCIe for it to interoperate with other devices. Furthermore, any of the embodiments discussed herein is/are agnostic to the optical interconnect technology (e.g., VCSEL, optical system-in-package (OSiP), wavelength division multiplexing (WDM), micro-LED, microelectromechanical system (MEMS) technology, and/or any other optical technologies and/or optical networking technologies, such as any of those discussed herein).

In FIG. 3, individual optical retimers 216 capture bits, perform the electrical to/from optical conversion between its two ends, orchestrates link training between the two ports, and communicates the sideband as well as local management control with its peer retimer. In some embodiments, both ports support FLIT mode and operate in a separate reference independent spread (SRIS) spectrum clocking mode. This particular configuration supports two optical modes for the optical retimers 216.

In a first optical mode 1, assume the optical interconnect 328 is bandwidth-matched with the electrical interconnect 314, and it has better BER characteristics. In this case, the bandwidth of the optical interconnect 328 is a multiple of the bandwidth of the electrical interconnect 314 at both ports. For example, assume there are 4 optical fibers per direction between the two optical retimers 216, each capable of supporting up to 8 channels, and running at 32 GT/s for a total of 4 × 8 × 32 = 1024 Gb/s/direction. Further assume the electrical interconnect 314 is a x16 link running at 64 GT/s, which is also 1024 Gb/s/direction. In this case, each PCIe lane of the electrical interconnect 314 will be mapped to two optical channels each running at 32GT/s. Further assume the underlying optical interconnect 328 has a better (e.g., lower) first burst error rate (FBER) than 10⁻⁶ and the retry probability of a FLIT after FEC correction is less than 3×10⁻⁵. Since the optical link characteristics of the optical interconnect 328 is better than the PCIe electrical characteristics of the electrical interconnect 314, the FLITs can be passed as-is and its underlying FEC and CRC are reused. No flow-control is required by the port and the optical retimer 216.

In a second optical mode 2, assume the optical link is either bandwidth-mismatched with the electrical interconnect 314 or has worse BER characteristics than the electrical interconnect 314. In this case, the optical interconnect 328 needs to implement local PHY-level flow control between transmission from the port to reception at the optical retimer 216. The optical retimer 216 needs to implement its own FEC and CRC operations when the BER is worse on the optical interconnect 328. Additionally or alternatively, the optical retimer 216 recomputes the FEC and CRC for the additional flow control as will be described later.

A capability structure as well as the initial link training capability bit indicates support for one or both optical modes described above in each port. If the optical retimer 216 does not see the particular optical mode it needs along with FLIT mode support, it terminates the link training and indicates the error in one of its internal status registers. For CXL implementations, a similar negotiation takes place with the exception of the use of modified TS 1' es in the alternate protocol mode.

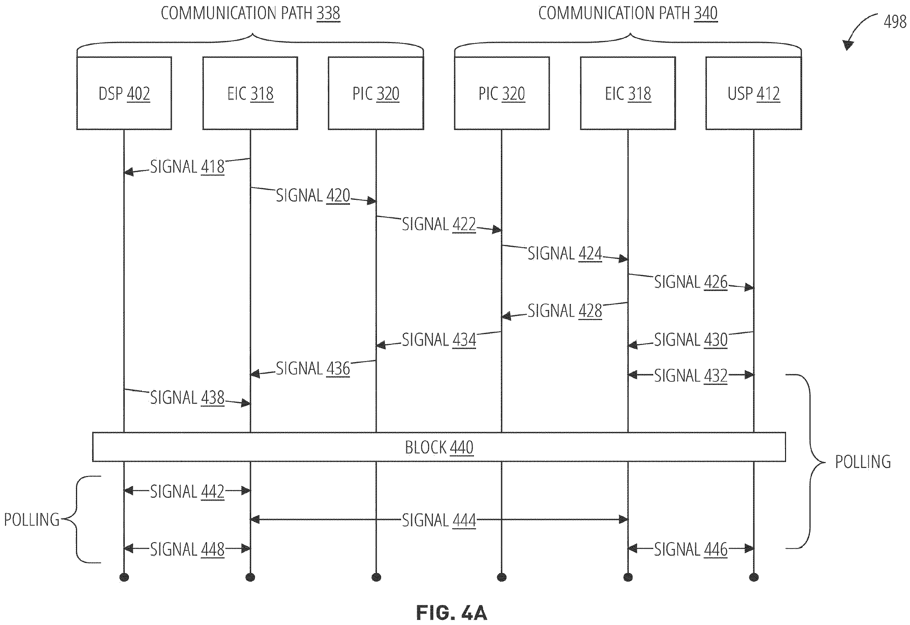

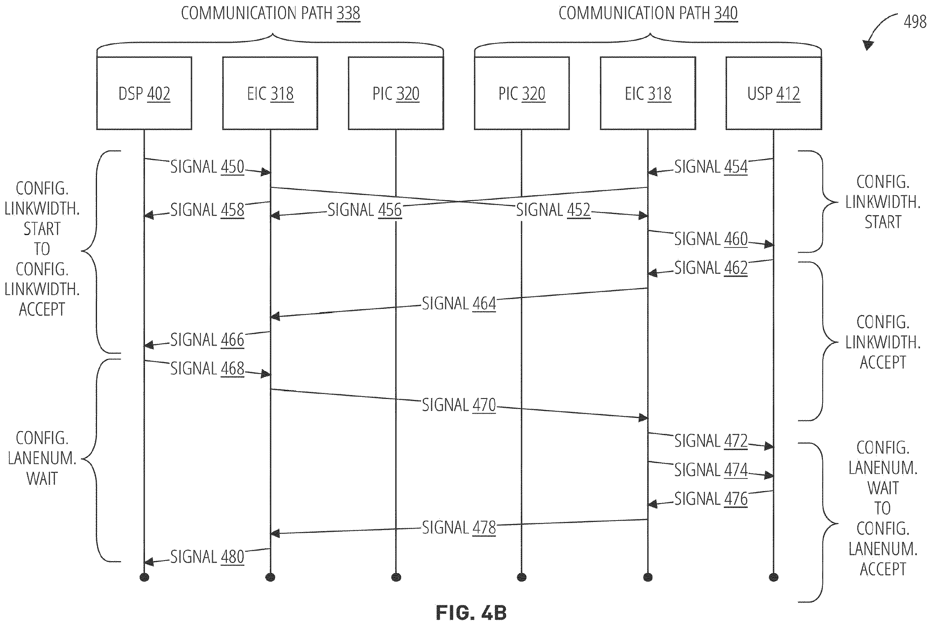

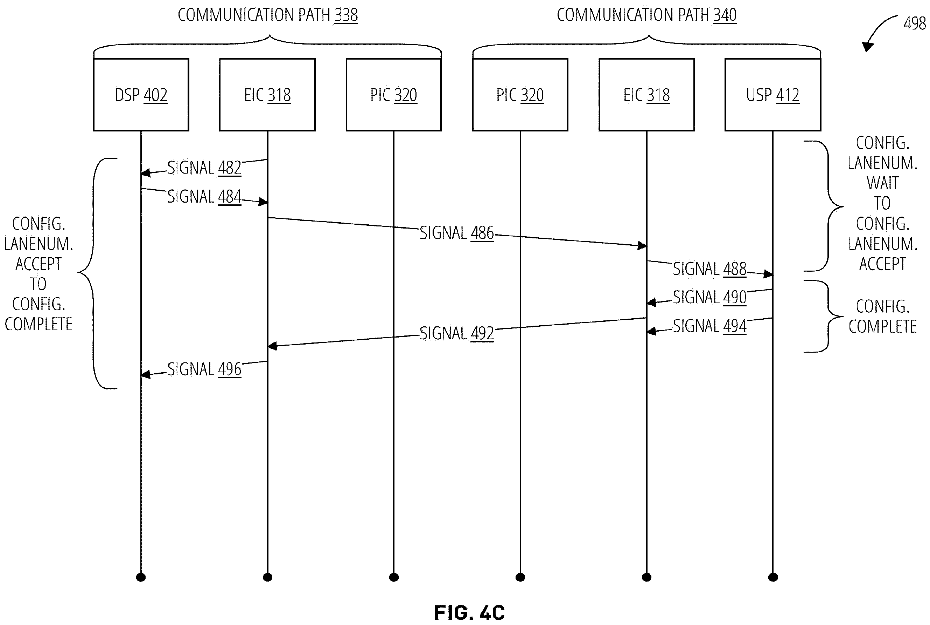

The optical retimer 216 orchestrates link training starting from an initial data rate (e.g. 2.5 GT/s) to the highest data rate. The optical retimer 216 forces its local port in detect if the other side is not yet ready to train. This is indicated in a special Ordered Set (OS), denoted as P1, that only the optical retimers 216 use between them. In some implementations, special Ordered Sets such as P1 OS, training sequence (TS1) OS, training sequence (TS2) OS, and/or the other OSs are defined in future revisions of the PCIe Standards defined by the PCI-SIG. For example, the P1 can be implemented as a TS1 OS with one of the reserved bits set to 1b to indicate it is a P1 OS. It can have some fields in the P1 OS to carry information between the two optical retimers 216. In one embodiment, it can be assumed that the optical interconnect 328 runs at a same frequency (e.g., 32G) even when the ports are running at different frequencies. The initial part of the link training up to configuration state is shown in FIGS. 4A, 4B and 4C.

The optical retimer 216 determines how many optical channels it needs to use and then it starts to move to polling after the initial TS 1' es indicate that the port supports its particular optical mode (e.g., optical mode 1 or optical mode 2). Each lane is mapped to an optical channel of the optical interconnect 328.

Embodiments support options of splitting a lane to multiple channels. For example, a 64G Pulse Amplitude Mode-4 (PAM-4) electrical interconnect 314 may be mapped to two Non-Return-To-Zero (NRZ) based 32G optical channels. The EIC 318 converts the PAM-4 signaling to two 32G signals when it connects with its PIC 320 in FIG. 3. If the optical part is not capable of switching frequencies, as shown in FIG. 4A, the optical retimer 216 gathers the TS1 information at 2.5G and sends them across at 32G repeatedly.

In various embodiments, the system 344 implements one or more training procedures. In PCIe, link training is the process by which two devices establish a reliable and optimized communication link. During link training, for example, the transmitting device (initiator) and the receiving device (target) negotiate and configure various parameters to achieve efficient data transfer. The devices detect the presence of a link by electrically probing the PCIe lanes and checking for proper signaling. The devices negotiate and establish the appropriate width (number of lanes) and speed (data rate) of the link based on their capabilities. This negotiation is done through exchanging electrical signals known as "Electrical Idle" and "Polling" between the devices. The receiver device performs receiver equalization to compensate for signal distortions caused by the transmission medium. This process involves adjusting internal receiver settings to optimize signal integrity and data recovery. The devices align their clock and data signals to ensure synchronized communication. This operation involves adjusting the "Recovery Equalization and Alignment" settings to achieve proper bit alignment. Once the receiver has successfully adjusted its settings for equalization, timing, and alignment, it sends a "Link Up" or "Link Active" signal to the transmitter, confirming that the link training process is complete and the communication link is established and ready for data transfer. The link training process ensures a stable, reliable, and optimal connection between PCIe devices, adjusting for various transmission conditions and characteristics to achieve efficient data transfer rates.

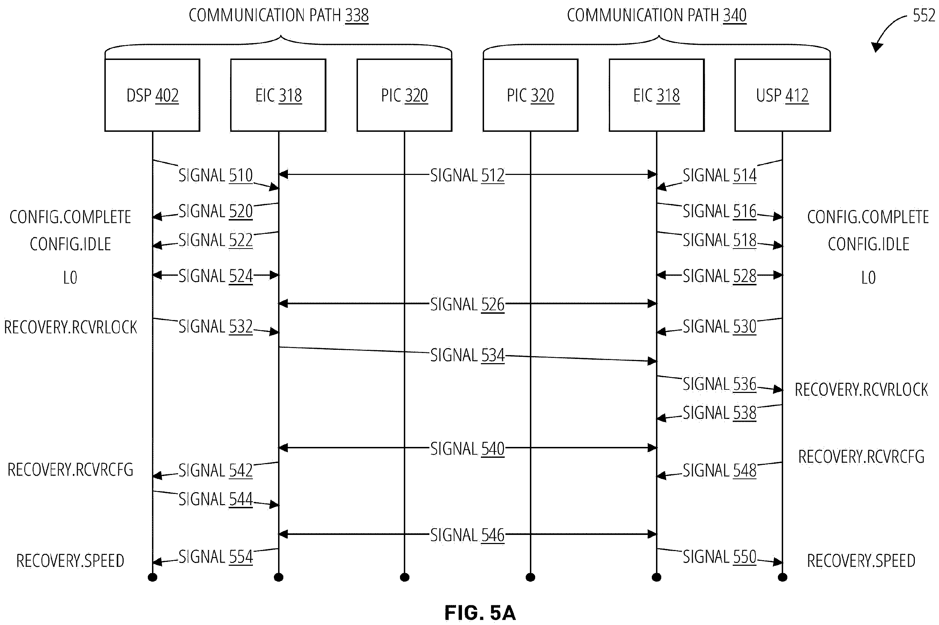

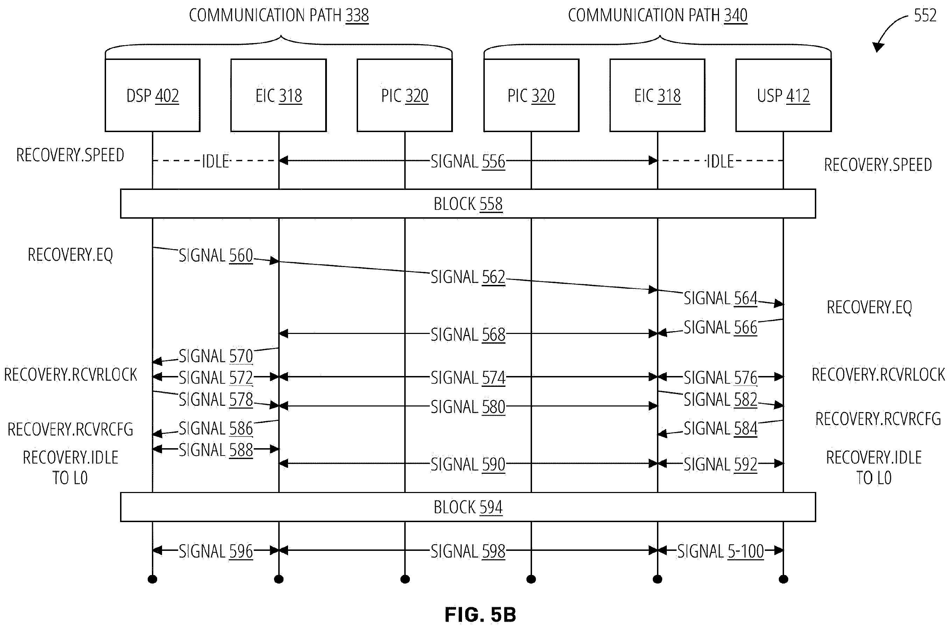

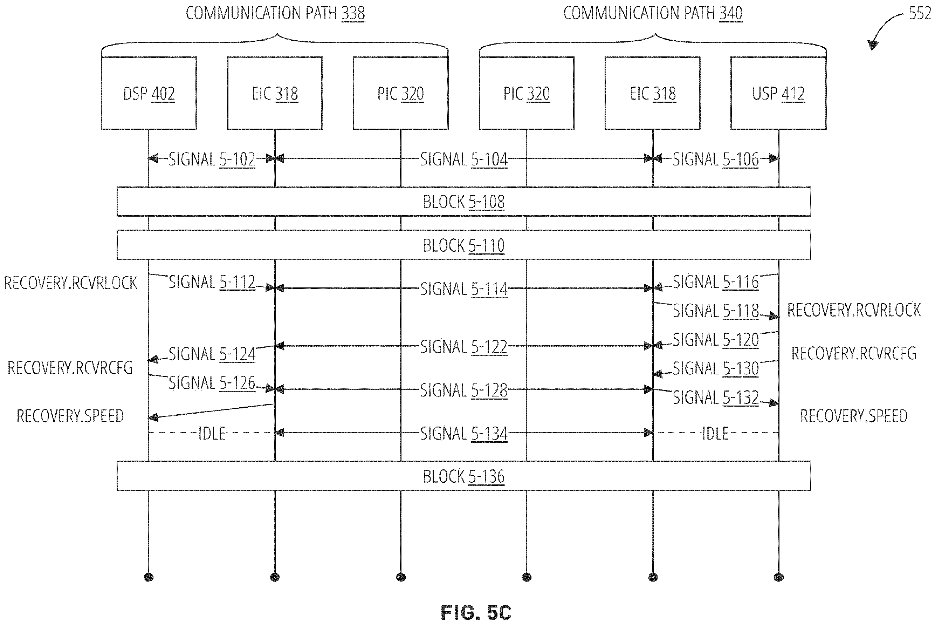

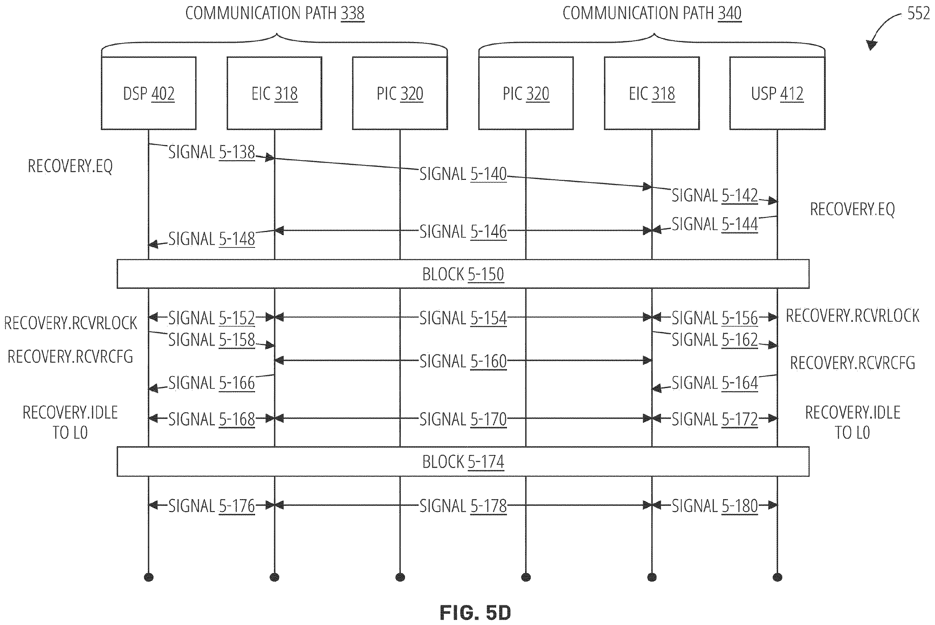

Various embodiments modify certain training procedures to train the PCIe links and the optical channels of the optical interconnect 328 to establish a reliable and optimized communication link across both the electrical interconnect 314 and the optical interconnect 328. Examples for these training procedures are described with reference to FIG. 4A, FIG. 4B, FIG. 4C, FIG. 5A, FIG. 5B, FIG. 5C, and FIG. 5D.

FIG. 4A, FIG. 4B, and FIG. 4C illustrates an example of a signal flow 498 for a link training procedure, which takes place until configuration for PCIe/CXL. The link training procedure demonstrates the progression to the highest data rate with the channel mapping with the normal traffic exchange in L0 state. In this example, the electrical link is at its initial data rate (e.g., 2.5G) whereas optical link is at its target data rate (e.g., 32G).

FIG. 4A depicts a downstream port 402, a first EIC 318, a first PIC 320, a second PIC 320, a second EIC 318, and an upstream port 412. Assume the downstream port 402, the first EIC 318 and the first PIC 320 are part of the communication path 338 between the SoC 302 and the first optical retimer 216. Assume the second PIC 320, the second EIC 318 and the upstream port 412 are part of the communication path 340 between the SoC 304 and the second optical retimer 216. The signal flow 498 depicts various signals and/or messages flowing between these elements to implement a link training procedure for the system 344.

In this example, the EIC 318 performs receiver detection after a Power-on Exit Reset (PERST#) turns off its receiver from being detected until optical handshake. P1 in this example is a 32G pattern (e.g., P1 can be TS1 in some examples) sent periodically to inform the other side that the sending side is ready to start the link training (exit from Detect) on the PCIe side. TS1 on optical side is similar, but with some modifications on the PCIe side. TS2 is held off in Polling until the optical side is stable with a TS2 exchange. The TS1 and TS2 at 32G can use a reserved field to indicate an electrical speed on the EIC 318 from the direction of the upstream port 412 to the downstream port 402. In some examples, all optical channels that will be assigned to a lane carry the traffic for that lane but the EIC 318 only sends information from one of them to the port.

As depicted in FIG. 4A, in a receiver detection phase, the first EIC 318 sends a receiver detect signal 418 to the downstream port 402. The first EIC 318 also sends a signal 420 to the first PIC 320. The first PIC 320 sends a P1 signal 422 to the second PIC 320. The second PIC 320 sends a signal 424 to the second EIC 318. The second EIC 318 sends a receiver detect signal 426 to the upstream port 412. The upstream port 412 sends a receiver detect signal 430 to the second EIC 318. The second EIC 318 and the upstream port 412 exit from the receiver detection phase, and enter TS1 to start link training. Meanwhile, the second EIC 318 sends a signal 428 to the second PIC 320. The second PIC 320 sends a P1 signal 434 to the first PIC 320. The first PIC 320 sends a signal 436 to the first EIC 318. The downstream port 402 sends a receiver detect signal 438. The first EIC 318 and the downstream port 402 exit from the receiver detection phase, and enter TS1 to start link training. At block 440, training begins to map one lane of the PCIe link operating at 2.5G to one lane of the optical channel operating at 32G.

In PCIe, a TS1 (Training Sequence 1) ordered set is a specific type of control symbol used during the link initialization process. The link initialization process is a step in establishing communication between the PCIe devices, ensuring reliable data transmission, and negotiating operating parameters of the link. During the link initialization process, the PCIe devices exchange specific ordered sets to initialize and configure the link. The TS1 ordered set is the first ordered set transmitted by the transmitter to the receiver. It carries training information and helps establish basic link parameters such as link speed, link width, and timing synchronization. The TS1 ordered set consists of a predefined sequence of symbols that have been defined in the PCIe specification. It contains specific bit patterns and control symbols that allow the receiver to recover the clock, align the received data, and perform equalization to compensate for channel impairments. The purpose of the TS1 ordered set is to ensure proper initialization and synchronization of the link before actual data transmission begins. It serves as a handshake mechanism between the transmitter and the receiver, allowing them to accurately establish the link characteristics and adapt to the channel conditions. Once the TS1 ordered set is exchanged and the link initialization process is successful, the PCIe devices move on to the next ordered sets in the link training sequence, such as Training Sequence 2 (TS2) OS, Training Sequence 3 (TS3) OS, and so forth, to further refine the link configuration and optimize the communication parameters.

Referring again to FIG. 4A, during a polling phase, the downstream port 402 and the first EIC 318 exchange TS1 and TS2 as signals 442 and 448, respectively. The first EIC 318 and the second EIC 318 exchange TS1 and then TS2 when the link is stable as signal 444. At 32G (e.g., link / lane PAD), first EIC 318 and the second EIC 318 exchange speed and widths per partitioned links. The second EIC 318 and the upstream port 412 exchange TS1 and TS2 as signal 432 and signal 446, respectively.

FIG. 4B illustrates more signals for the signal flow 498. More particularly, the signal flow 498 illustrates a set of configuration signals and/or messages to map lanes of the electrical interconnect 314 to optical channels of the optical interconnect 328. The signals and/or messages may include, for example, *Config.Linkwidth.start, Config.Linkwidth.Accept, Config.Lanenum. Wait, Config.LaneNum.Accept, Config.Lanenum.Complete,* and *Config.Complete,* as indicated in FIG. 4B.

As depicted in FIG. 4B, the first EIC 318 sends a signal 450 with a TS1 link number to the first PIC 320. The first PIC 320 sends a signal 452 as a TS1 at 32G with the link number to the second EIC 318. The second EIC 318 sends a signal 460 as TS1 with the link number to the upstream port 412. Meanwhile, the upstream port 412 sends a signal 454 as a TS1 with PAD to the second EIC 318. The second EIC 318 sends a signal 456 as TS1 at 32G with the PAD, PAD to the first EIC 318. The first EIC 318 sends a signal 458 with the TS1 PAD to the downstream port 402.

The upstream port 412 sends a signal 462 as a TS1 with a link number to the second EIC 318. The second EIC 318 sends a signal 464 as TS1 at 32G with the link number to the first EIC 318. The first EIC 318 sends a signal 466 as TS1 with the link number to the downstream port 402. The downstream port 402 sends a signal 468 as TS1 with the lane number to the first EIC 318. The first EIC 318 sends a signal 470 as TS1 at 32G with the lane number to the second EIC 318. The second EIC 318 sends a signal 472 and a signal 474 as TS1 with the lane number to the upstream port 412. The upstream port 412 sends a signal 476 as TS1 with the lane number to the second EIC 318. The second EIC 318 sends a signal 478 as TS1 at 32G with the lane number to the first EIC 318. The first EIC 318 sends a signal 480 as TS1 with the lane number to the downstream port 402.

FIG. 4C illustrates more signals for the signal flow 498. More particularly, the signal flow 498 illustrates a set of configuration signals and/or messages to map lanes of the electrical interconnect 314 to optical channels of the optical interconnect 328. The signals and/or messages may include, for example, *Config.Linkwidth.start, Config.Linkwidth.Accept, Config.Lanenum. Wait, Config.LaneNum.Accept, Config.Lanenum.Complete,* and *Config.Complete,* as indicated in FIG. 4C.

As depicted in FIG. 4C, the first EIC 318 sends a signal 482 as TS1 with the lane number to the downstream port 402. The downstream port 402 sends a signal 484 as TS2 to the first EIC 318. The first EIC 318 sends a signal 486 as TS2 at 32G with the link number and the lane number to the second EIC 318. The second EIC 318 sends a signal 488 as the TS2 with the link number and the lane number to the upstream port 412. The upstream port 412 sends a signal 490 as a TS2 with link number and lane number to the second EIC 318. The second EIC 318 sends a signal 492 as TS2 at 32G with the link number and the lane number to the first EIC 318. The first EIC 318 sends a signal 496 as TS2 with the link number and the lane number to the downstream port 402. The upstream port 412 sends a signal 494 as a configuration complete signal to the second EIC 318.

FIG. 5A, FIG. 5B, FIG. 5C, and FIG. 5D illustrate an example of a signal flow 552 for a link training procedure. The link training procedure demonstrates the progression to a highest data rate and operating with the normal traffic. In this example, the electrical link and the optical link are both at a target data rate (e.g., 32G).

As depicted in FIG. 5A, once configuration is complete, the first EIC 318 sends a signal 510 as a configuration complete signal (*Config.Complete*) with 32G and TS2 with a link number and lane number to the downstream port 402. The first EIC 318 sends signal 520 and signal 522 as configuration idle (*Config.Idle*) to the downstream port 402. Similarly, the second EIC 318 sends a signal 514 as a configuration complete signal (*Config.Complete*) with 32G and TS2 with a link number and lane number to the upstream port 412. The second EIC 318 sends signal 516 and signal 518 as configuration idle (*Config.Idle*) to the downstream port 402. The first EIC 318 and the second EIC 318 exchange signal 512 as TS2 at 32G with the link number and the lane number. At this stage, training has progressed to the highest data rate with the channel mapping with the normal traffic exchange in an L0 state. The downstream port 402 and the first EIC 318 exchange signals 524 as IDL FLITs, the first EIC 318 and the second EIC 318 exchange signal 526 as IDL FLITs at 32G, and the second EIC 318 and the upstream port 412 exchange signal 528 and signal 530 as IDL FLITs.

At this point, the signal flow 552 starts a procedure for bypass equalization to 32G. To accomplish this, the bypass equalization procedure utilizes a set of signals and/or messages, such as *Recovery.RcvrLock, Recovery.RcvrCfg, Recovery.Speed, Recovery.EQ,* and *Recovery.Idle,* as indicated in FIG. 5A.

The downstream port 402 sends a signal 532 as a TS1 to the first EIC 318. The first EIC 318 sends a signal 534 as TS1 at 32G to the second EIC 318. The second EIC 318 sends a signal 536 as a TS1 to the upstream port 412. The upstream port 412 sends a signal 538 as a TS1 to the second EIC 318. The second EIC 318 sends a signal 540 as a TS1 at 32G to the first EIC 318. The first EIC 318 sends a signal 542 as TS1 to the downstream port 402. The downstream port 402 sends a signal 544 as TS2 to the first EIC 318. Meanwhile, the upstream port 412 sends a signal 548 as TS2 to the second EIC 318. The first EIC 318 and the second EIC 318 exchange a signal 546 as TS2 at 32G. The first EIC 318 sends a signal 554 as TS2 to the downstream port 402. The second EIC 318 sends a signal 550 as TS2 to the upstream port 412.

FIG. 5B illustrates more signals for the signal flow 552. More particularly, the signal flow 552 illustrates a set of signals and/or messages for the bypass equalization procedure that utilizes a set of signals and/or messages, such as *Recovery.RcvrLock, Recovery.RcvrCfg, Recovery.Speed, Recovery.EQ,* and *Recovery.Idle,* as indicated in FIG. 5B.

As depicted in FIG. 5B, the first EIC 318 and the second EIC 318 exchange a signal 556 as a P1 OS. The electrical interconnect 314 between the downstream port 402 and the first EIC 318 is electrically idle. The electrical interconnect 314 between the second EIC 318 and the upstream port 412 is also electrically idle. The electrical interconnect 314 on both sides has changed its speed from 2.5G to 32G. At block 558, both the electrical interconnect 314 and the optical interconnect 328 are operating at 32G at this point.

The signal flow 552 continues with the downstream port 402 sending a signal 510 as a TS1 to the first EIC 318. The first EIC 318 sends a signal 562 as TS1 for equalization to the second EIC 318. The second EIC 318 sends a signal 564 as TS1 to the upstream port 412. The upstream port 412 sends a signal 566 as TS1 to the second EIC 318. The second EIC 318 sends a signal 568 as TS1 for equalization to the first EIC 318. The first EIC 318 sends a signal 570 as TS1 to the downstream port 402. The TS1 sent and received E2E with the optical retimers 216 overrides with its equalization request. The downstream port 402 and the first EIC 318 exchange a signal 572 as TS1, the first EIC 318 and the second EIC 318 exchange a signal 574 as TS1 with receiver lock, and the second EIC 318 and the upstream port 412 exchange a signal 576 as TS1.

The downstream port 402 sends a signal 578 as a TS2 to the first EIC 318. The first EIC 318 and the second EIC 318 exchange a signal 580 as TS2. The first EIC 318 sends a signal 586 as TS2 to the downstream port 402. The second EIC 318 sends a signal 582 as TS2 to the upstream port 412. At this point, the downstream port 402 and the first EIC 318 exchange a signal 588 as IDL FLITs, the first EIC 318 and the second EIC 318 exchange a signal 590 as IDL FLITs. And the second EIC 318 and the upstream port 412 exchange a signal 592 as IDL FLITs.

At block 594, training has progressed to the highest data rate with the channel mapping with the normal traffic exchange in an L0 state at 32G for both sides. The downstream port 402 and the first EIC 318 exchange a signal 596, the first EIC 318 and the second EIC 318 exchange a signal 598, and the second EIC 318 and the upstream port 412 exchange a signal 5-100. The signal 596, the signal 598, and the signal 5-100 carry No Operation (NOP) and payload FLITs with periodic SKP OS at 32G.

A NOP in PCIe is a special type of signaling packet used for flow control and link training purposes. In PCIe, NOP packets are sent by the transmitter to the receiver to ensure that the receiver has sufficient time to process incoming packets and maintain synchronization. During normal data transmission, the receiver periodically sends a flow control credit (or credit-based flow control) to the transmitter to indicate how many additional packets it can receive. However, if the receiver needs additional processing time or cannot receive any more packets temporarily, it can issue a NOP packet. The NOP packet signals to the transmitter that it should pause sending data packets until it receives a flow control credit signal again. NOP packets are also employed during link training, which is the process of establishing a stable, high-speed connection between the PCIe devices. In this context, NOP packets are utilized to help initialize and configure the PCIe link and ensure its proper functioning. By utilizing NOP packets strategically, PCIe devices can effectively manage data flow, prevent data loss or corruption, and maintain reliable communication across the PCIe link.

FIG. 5C illustrates more signals for the signal flow 552. More particularly, the signal flow 552 illustrates a set of signals and/or messages for the bypass equalization procedure that utilizes a set of signals and/or messages, such as *Recovery.RcvrLock, Recovery.RcvrCfg, Recovery.Speed, Recovery.EQ,* and *Recovery.Idle,* as indicated in FIG. 5C.

The downstream port 402 and the first EIC 318 exchange a signal 5-102, the first EIC 318 and the second EIC 318 exchange a signal 5-104, and the second EIC 318 and the upstream port 412 exchange a signal 5-106. The signal 5-102, the signal 5-104, and the signal 5-106 carry NOP and payload FLITs with periodic SKP OS at 32G. This continues at block 5-108. At block 5-110, a procedure starts for a speed change and equalization to 64G.

The signal flow 552 continues with the downstream port 402 sending a signal 5-112 as a TS1 to the first EIC 318. The first EIC 318 sends a signal 5-114 as TS1 at 32G to the second EIC 318. The second EIC 318 sends a signal 5-118 as TS1 to the upstream port 412. The upstream port 412 sends a signal 5-116 as IDL FLITs to the second EIC 318. The second EIC 318 sends a signal 5-118 as TS1 to the upstream port 412. When the upstream port 412 receives the signal 5-118, the upstream port 412 sends a signal 5-120 as TS1 to the second EIC 318. The second EIC 318 sends a signal 5-122 as TS1 at 32G to the first EIC 318. The first EIC 318 sends a signal 5-124 as TS1 to the downstream port 402. The downstream port 402 sends a signal 5-126 as TS2 to the first EIC 318. The first EIC 318 and the second EIC 318 exchange a signal 5-128 as TS1 at 32G. The upstream port 412 also sends a signal 5-130 as TS2 to the second EIC 318. The second EIC 318 sends a signal 5-132 as TS2 to the upstream port 412. The first EIC 318 and the second EIC 318 exchange a signal 5-134 as P1 OS. At this point, the electrical interconnect 314 for both sides is electrically idle.

At block 5-136, the optical retimer 216 starts to map one electrical lane at 64G to 2 optical channels at 32G. Byte level interleaving occurs between the two channels.

FIG. 5D illustrates more signals for the signal flow 552. More particularly, the signal flow 552 illustrates a set of signals and/or messages for the bypass equalization procedure that utilizes a set of signals and/or messages, such as *Recovery.RcvrLock, Recovery.RcvrCfg, Recovery.Speed, Recovery.EQ,* and *Recovery.Idle,* as indicated in FIG. 5D.

The signal flow 552 continues with the downstream port 402 sending a signal 5-138 as a TS0 to the first EIC 318. The first EIC 318 sends a signal 5-140 as TS0 for equalization to the second EIC 318. The second EIC 318 sends a signal 5-142 as TS0 to the upstream port 412. The upstream port 412 sends a signal 5-144 as TS0 to the second EIC 318. The second EIC 318 sends a signal 5-146 as TS0 for equalization to the first EIC 318. The first EIC 318 sends a signal 5-148 as TS0 to the downstream port 402. At block 5-150, the TS1 sent and received E2E with the optical retimers 216 overrides with its equalization request. The downstream port 402 and the first EIC 318 exchange a signal 5-152 as TS1, the first EIC 318 and the second EIC 318 exchange a signal 5-154 as TS1 with equalization and receiver lock, and the second EIC 318 and the upstream port 412 exchange a signal 5-156 as TS1.

The downstream port 402 sends a signal 5-158 as a TS2 to the first EIC 318. The first EIC 318 and the second EIC 318 exchange a signal 5-160 as TS2. The first EIC 318 sends a signal 5-166 as TS2 to the downstream port 402. The second EIC 318 sends a signal 5-162 as TS2 to the upstream port 412. The upstream port 412 sends a signal 5-164 as TS2 to the second EIC 318. At this point, the downstream port 402 and the first EIC 318 exchange a signal 5-168 as IDL FLITs, the first EIC 318 and the second EIC 318 exchange a signal 5-170 as IDL FLITs, and the second EIC 318 and the upstream port 412 exchange a signal 5-172 as IDL FLITs.

At block 5-174, training has progressed to the highest data rate with the channel mapping with the normal traffic exchange in an L0 state at 64G for the electrical interconnect 314 and 32G for the optical interconnect 328. The downstream port 402 and the first EIC 318 exchange a signal 5-176, the first EIC 318 and the second EIC 318 exchange a signal 5-178, and the second EIC 318 and the upstream port 412 exchange a signal 5-180. The signal 5-176, the signal 5-178, and the signal 5-180 carry NOP and payload FLITs with periodic SKP OS.

For mapping of sideband signals from the sideband link 332 and/or the sideband link 336, instead of using a separate optical channel for each sideband, the optical retimers 216 use the SKP OSs. As can be seen in Table 1 below, embodiments can operate the link even without any sidebands which can be dealt with locally. However, if a sideband does need to be used, the optical retimer 216 will use a margin command field in an SKP OS (e.g., both with 128b/130b and 1b/1b) as follows to convey sideband when needed:

Sideband is sent as "Margin Payload [7:0]". Margin Payload [7:0] = {RSVD - 6 bits, CLK REQ#, WAKE#}. The upper bits can be used for inter-retimer communication.

Set the Margin Type: 001b - Command, 010b - Ack with the values reflected back. A sideband signal is sent in consecutive SKP OSs till the peer retimer sends back an Ack reflecting the exact sideband that was sent. A receiver checks for the CRC and at least two SKP OSs indicating the same sideband before reflecting the received sideband command locally.

The Fields: "Usage Model" = 1b and Receiver Number = 000b will be used for configuration access inside the optical retimer 216. The proper Receiver Number and Usage Model = 0b can be used for config access as sideband. A set of retimer registers can be defined as a mailbox to enable sideband access across the link. If the link is down, one optical channel can still be active that is only stuffed with P1s with periodic SKP OS.

If the link needs to operate in 8b/10b modem, two SKP OSs can be sent back to back and use the last two SKPs in the second SKP OS to communicate the sideband information as above.

Table 1 illustrates sideband signals in the Card Electromechanical (CEM). The CEM refers to the mechanical and electrical specifications defined by the PCI-SIG for expansion cards that can be inserted into a PCIe slot. The CEM specification outlines the physical dimensions, connector types, and pin assignments required for a PCIe card to be compatible with motherboard slots. It ensures interoperability between different PCIe devices by defining the form factor and interface characteristics. In some embodiments, only a subset of sideband signals need to be sent across the optical interconnect 328.

**TABLE 1**

| **Signal Name (CEM)** | **Signal Description** | **How is it handled in Optical?** |
|---|---|---|
| RefClk-/Refclk+ | Reference clock | No need to send across. locally used. SRIS mode only |
| PERST# | Main power is with spec and stable | Locally used. Optical negotiation to indicate if the other side is ready to go (may be send signals across) - if not don't get past Detect |
| WAKE# | Optional Reactive main power rails and clocks | Can send across as optical signals to indicate in SKP OS |
| SMB CLK/SMBDAT/JTAG | Optional | Local stuff - don't send across optical |
| PRSNT1#, PRSNT2# | AIC presence detect pin | No need to send across - optical signal goes away / comes back indicating ready to go |
| CLKREQ# | Optional | Can send as optical signal in SKP OS |
| PWRBRK#, MFG | Optional | Not sent across |

For State Transition from the L0 state, if the Link Training and Status State Machine (LTSSM) transitions to recovery, the optical retimer 216 simply forwards the TS OSs and deals with SKPs the same way as it does during normal operation. If a speed change is involved, it follows the same mechanism as the Link Training. If the Link enters detect due to some reason (e.g., secondary bus reset, surprise hot plug, and/or the like), it reflects the status in its local port. If the Link enters a low-power state (e.g., an electrical idle order set (EIOS) is sent/ received), it goes back to sending periodic P1. When the local port wakes up, it sends the EIOS/TS'es to the remote optical retimer 216 which in turn will wake up that port. Even level of protection (LOP) can be supported the same way. However, for simplicity, LOP can be turned off as well as any automatic active state power management (ASPM) L1 state transitions.

With respect to FLIT mapping, for the first scenario discussed previously where the optical interconnect 328 is bandwidth-matched and it has better BER characteristics than the PCIe electrical interconnect 314, then FLITs are mapped directly to the available optical channels using byte interleaving. For example, if two optical channels need to be mapped to each electrical physical lane, then all odd bytes of that lane go in the odd optical channel and the even bytes in the even optical channel. For instance, if Lane 7 is mapped to optical channels 14 and 15, then Bytes 7, 13, 39, .. of the FLIT are mapped to optical channel #14 and Bytes 15, 31, 47, .. are mapped to optical channel #15.

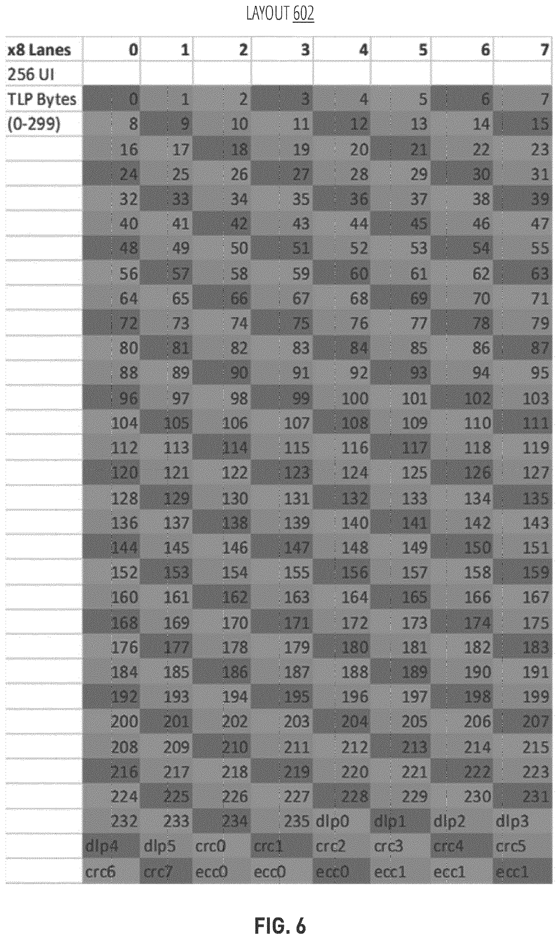

FIG. 6 illustrates a layout 602. The layout 602 provides an example of a 256-byte FLIT mapped on a x8 PCIe link. For the first optical mode 1 discussed previously, where the optical interconnect 328 is bandwidth-mismatched to the electrical interconnect 314, a similar type of byte level interleaving as optical mode 1 is performed, except when a multiple of 3 optical channels is to be mapped. If there are n number of optical channels, byte *i* is mapped to optical channel (i mod n) when *n* is not a multiple of 3. The layout 602 illustrates a case where there are 8 channels. When there are 8 channels, the optical retimer 216 maps bytes 0, 8, 16,..., crc6 to channel 0; bytes 1, 9, 17,..., crc7 to channel 1; bytes 2, 10, 18,..., ecc0 to channel 2, and so forth.

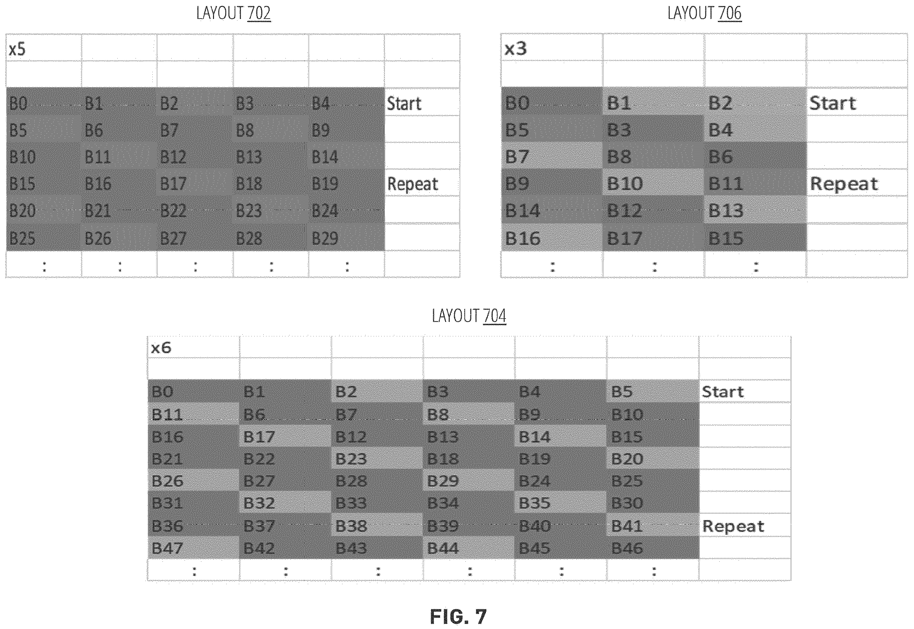

FIG. 7 illustrates a layout 702, a layout 704 and a layout 706 where each is an example mapping of bytes in a FLIT when a number of optical channels is 5, 6 or 3, respectively. If there are *n* number of optical channels, byte i is mapped to optical channel (i mod n) when *n* is not a multiple of 3.

The layout 702 illustrates a case where there are 5 channels. When there are 5 channels, the optical retimer 216 maps bytes B0, B5, B10,..., B25 to channel 0; bytes B1, B6, B11,..., B26 to channel 1, and so forth. That way, the burst error correction of up to 3 consecutive bytes with the 3 FEC groups is preserved.

If *n* is a multiple of 3, the bytes are shifted around to preserve the burst error detection in a channel, as shown in layout 704 and layout 706. The layout 704 illustrates a case where there are 6 channels. When there are 6 channels, the optical retimer 216 maps bytes B0, B11, B16,..., B47 to channel 0; bytes B1, B6, B17,..., B42 to channel 1, and so forth. The layout 706 illustrates a case where there are 3 channels. When there are 3 channels, the optical retimer 216 maps bytes B0, B5, B7,..., B16 to channel 0; bytes B1, B3, B8,..., B17 to channel 1, and so forth. Additionally or alternatively, the optical retimer 216 can form its own FEC groups and send across the optical link based on the number of channels it has.

For the case where the characteristics of the optical interconnect 328 is worse than the electrical interconnect 314, the optical retimer 216 deploys its proprietary FEC to ensure that the FLIT replay rate is better than 3×10⁻⁵ after FEC correction. Most likely the CRC will hold for any type of link, though a particular design for the optical retimer 216 may consider that depending on the error characteristics for a particular optical interconnect 328.

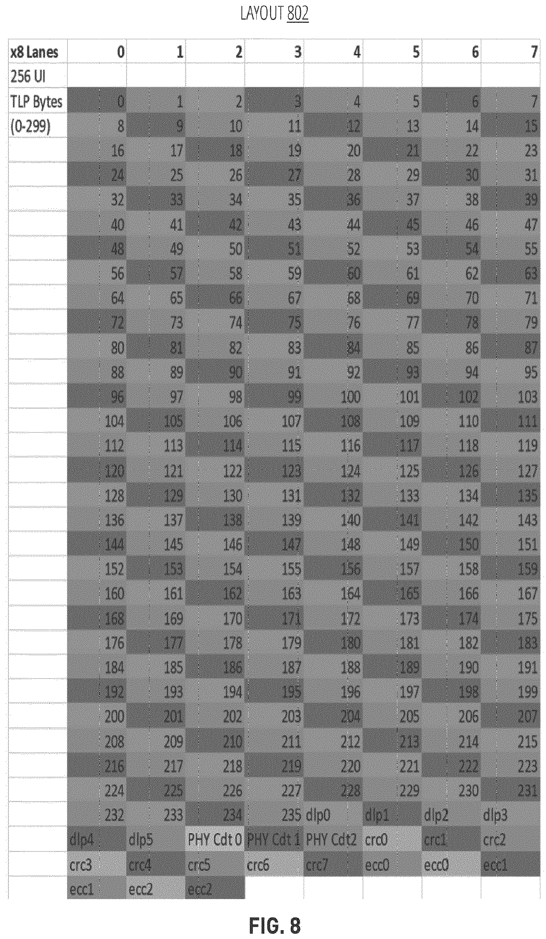

In optical mode 2, the optical retimer 216 throttles the local port with PHY layer credits. In some examples, 1 credit per non-IDLE FLIT is used for the port to local retimer traffic. This credit follows the increment policy so that the credit loss can be tolerated, similar to PCIe data link layer packets (DLLPs). IDLE FLITs are sent, such as all bits are 0 and no NOP2 DLLP as allowed in PCIe Standards, when there are no credits in the port to local optical retimer 216 direction or there is no traffic in the optical retimer 216 to local port direction. In the optical retimer 216 to local port direction, the optical retimer 216 recalculates the FEC/CRC with the PHY credit (4B) using FEC/CRC. Each local port needs to deal with an extra data width (DW) payload. An example layout is described with reference to FIG. 8.

FIG. 8 illustrates a layout 802. The layout 802 provides an example of a 256-byte FLIT mapped on a x8 PCIe link. In the optical retimer 216 to local port direction, the optical retimer 216 recalculates the FEC/CRC with the PHY credit (4B) using FEC/CRC. Each local port needs to deal with an extra data width (DW) payload. The layout 802 provides an example where there is a 236 byte (B) Transaction Layer Packet (TLP), a 6B Data Link Layer Packet (DLP), 3B PHY Credit, an 8B CRC, and a 6B FEC. The layout 802 illustrates a case where there are 8 channels. When there are 8 channels, the optical retimer 216 maps bytes 0, 8, 16,..., ecc1 to channel 0; bytes 1, 9, 17,..., ecc2 to channel 1; bytes 2, 10, 18,..., ecc2 to channel 2, and so forth. An additional or alternative approach may have an extra byte and make the FLIT Size 260B (or even 264B). In the optical retimer 216 to EIC 318 direction, the optical retimer 216 regenerates the FEC/CRC as needed, based on the BER characteristics of the optical connection.

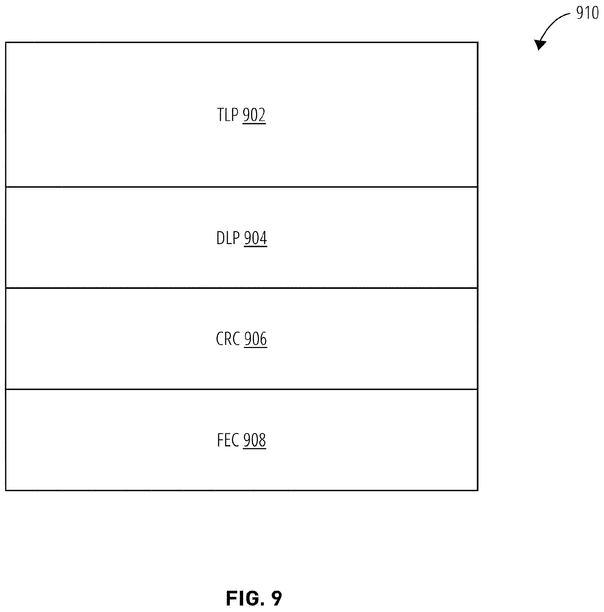

FIG. 9 illustrates a FLIT 910. FLIT 910 is an example of a modified FLIT for optical mode 2. As depicted in FIG. 9, the FLIT 910 includes a TLP 902, a DLP 904, a CRC 906 and an FEC 908. In one embodiment, the TLP 902 may have a size of 236B, the DLP 904 a size of 6B, the CRC 906 a size of *x*B, and the FEC 908 a size of *y*B, where *x* and *y* represent the proprietary FEC and CRC bytes. If a PCIe FLIT is used, then *x* = 8 and *y* = 6, giving the CRC 906 a size of 8B and the FEC 908 a size of 6B. For optical mode 1, the optical retimer 216 uses proprietary values for *x* and *y*, as needed for a given implementation. Embodiments are not limited in this context.

Operations for the disclosed embodiments may be further described with reference to the following figures. Some of the figures may include a logic flow. Although such figures presented herein may include a particular logic flow, it can be appreciated that the logic flow merely provides an example of how the general functionality as described herein can be implemented. Further, a given logic flow does not necessarily have to be executed in the order presented unless otherwise indicated. Moreover, not all acts illustrated in a logic flow may be required in some embodiments. In addition, the given logic flow may be implemented by a hardware element, a software element executed by a processor, or any combination thereof. The embodiments are not limited in this context.

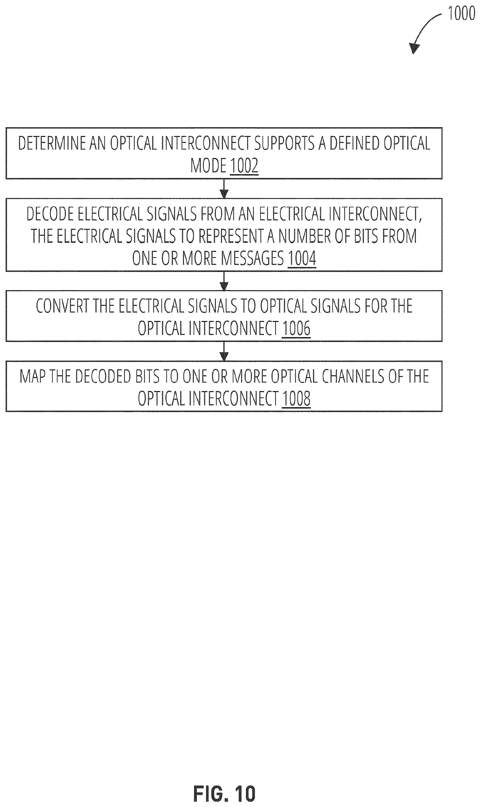

FIG. 10 illustrates a logic flow 1000. The logic flow 1000 is an example of operations for the system 204 or the system 344. In one embodiment, the logic flow 1000 is an example of operations for the optical retimer 216. Embodiments are not limited to this example.

In block 1002, logic flow 1000 determines an optical interconnect supports a defined optical mode. In block 1004, logic flow 1000 decodes electrical signals from an electrical interconnect, the electrical signals to represent a number of bits from one or more messages. In block 1006, logic flow 1000 converts the electrical signals to optical signals for the optical interconnect. In block 1008, logic flow 1000 maps the decoded bits to one or more optical channels of the optical interconnect.

By way of example, with reference to the system 344, logic circuitry 350 of the optical retimer 216 determines whether an electrical interconnect 314, an optical interconnect 328 or the optical retimer 216 supports one or more defined modes deemed necessary for communications given an underlying protocol, such as PCIe, CXL, or alternate protocol. Examples of defined modes may include FLIT mode, SRIS mode, optical mode 1, optical mode 2, and so forth. When the logic circuitry 350 determines a defined node is supported, the EIC 318 of the optical retimer 216 decodes electrical signals from the electrical interconnect 314, where the electrical signals represent a number of bits from one or more messages. Examples of messages include FLIT messages, sideband messages, inter-retimer messages, and so forth. The PIC 320 of the optical retimer 216 converts the electrical signals to optical signals for transport over the optical interconnect 328. After orchestrating training with a peer optical retimer 216 over the optical interconnect 328, the optical retimer 216 maps the decoded bits to one or more optical channels of the optical interconnect 328.

In one embodiment, for example, the optical interconnect 328 includes fiber optic cables, vertical cavity surface emitting lasers (VCSELs), single-mode fiber, multi-mode fiber, waveguides, free-space optical interconnects, optical printed circuit boards (PCBs), parallel optics interconnects, coherent optical interconnects, or silicon photonics.

In one embodiment, for example, the messages may comprise flow control unit (FLIT) messages, and the decoded bits comprise data bits, forward error correction (FEC) bits, and cyclical redundancy check (CRC) bits.

In one embodiment, for example, the logic circuitry 350 may orchestrate or perform link training through the optical interconnect 328 using a P1 ordered set. In one embodiment, the P1 ordered set comprises a training sequence 1 (TS1) ordered set with a reserved bit set to 1b to indicate it is the P1 ordered set. The logic circuitry 350 may orchestrate link training through the optical interconnect 328. For example, one or more of the optical retimers 216 orchestrate the link training starting from 2.5 GT/s to the highest data rate. The optical retimer 216 forces its local port in detect if the other side is not ready to train yet. This is indicated in a special Ordered Set P1 OS. The P1 OS is reserved for use by the optical retimers 216. A P1 OS will be defined in the PCIe Standards. For example, the P1 OS can be a TS1 OS with one of the reserved bits set to 1b to indicate it is a P1 OS. The P1 OS can have some fields to carry information between the two optical retimers 216, such as inter-retimer messages. In one embodiment, the logic circuitry 350 assumes the optical interconnect 328 runs at a same frequency, such as 32G or 64G, even when the ports are running at different frequencies.

In one embodiment, the messages comprise sideband messages or inter-retimer messages. When the optical retimer 216 receives sideband messages from the sideband link 332 or the sideband link 336, or inter-retimer messages between an optical retimer 216 and a peer optical retimer 216, the logic circuitry 350 modifies a margin command field of a skip (SKP) ordered set (OS) to represent decoded bits from the sideband messages or the inter-retimer messages. The logic circuitry 350 maps the SKP OS to one or more optical channels of the optical interconnect 328, as shown in the example provided in Table 1.

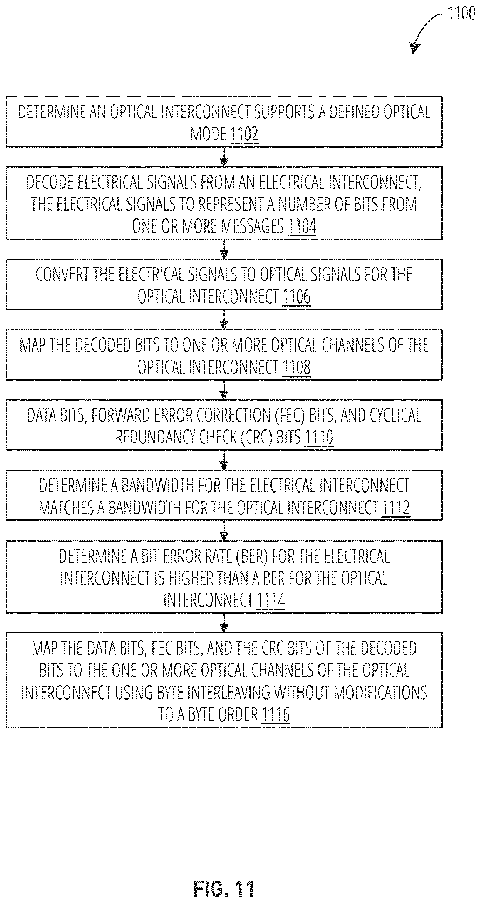

FIG. 11 illustrates a logic flow 1100. The logic flow 1100 is an example of operations for the system 204 or the system 344. In one embodiment, the logic flow 1100 is an example of operations for the optical retimer 216. Embodiments are not limited to this example.

In block 1102, logic flow 1100 determines an optical interconnect supports a defined optical mode. In block 1104, logic flow 1100 decodes electrical signals from an electrical interconnect, the electrical signals to represent a number of bits from one or more messages. In block 1106, logic flow 1100 converts the electrical signals to optical signals for the optical interconnect. In block 1108, logic flow 1100 maps the decoded bits to one or more optical channels of the optical interconnect. In block 1110, logic flow 1100 data bits, forward error correction (FEC) bits, and cyclical redundancy check (CRC) bits. In block 1112, logic flow 1100 determines a bandwidth for the electrical interconnect matches a bandwidth for the optical interconnect. In block 1114, logic flow 1100 determines a bit error rate (BER) for the electrical interconnect is higher than a BER for the optical interconnect. In block 1116, logic flow 1100 maps the data bits, FEC bits, and the CRC bits of the decoded bits to the one or more optical channels of the optical interconnect using byte interleaving without modifications to a byte order.

By way of example, with reference to system 344, logic circuitry 350 of the optical retimer 216 determines whether an electrical interconnect 314, an optical interconnect 328 or the optical retimer 216 supports one or more defined modes deemed necessary for communications given an underlying protocol, such as PCIe, CXL, or alternate protocol. Examples of defined modes may include FLIT mode, SRIS mode, optical mode 1, optical mode 2, and so forth. When the logic circuitry 350 determines a defined node is supported, the EIC 318 of the optical retimer 216 decodes electrical signals from the electrical interconnect 314, where the electrical signals represent a number of bits from one or more messages. Examples of messages include FLIT messages, sideband messages, inter-retimer messages, and so forth. The PIC 320 of the optical retimer 216 converts the electrical signals to optical signals for transport over the optical interconnect 328. After orchestrating training with a peer optical retimer 216 over the optical interconnect 328, the optical retimer 216 maps the decoded bits to one or more optical channels of the optical interconnect 328.

In one embodiment, the decoded bits may include data bits, forward error correction (FEC) bits, and cyclical redundancy check (CRC) bits. In optical mode 1, the logic circuitry 350 of the optical retimer 216 determines a bandwidth for the electrical interconnect 314 matches a bandwidth for the optical interconnect 328. The logic circuitry 350 also determines a bit error rate (BER) for the electrical interconnect 314 is higher than a BER for the optical interconnect 328, which means it has a lower effective data rate. The logic circuitry 350 maps the data bits, FEC bits, and the CRC bits of the decoded bits to the one or more optical channels of the optical interconnect 328 using byte interleaving without modifications to a byte order. For example, as shown in layout 602, if two optical channels need to be mapped to each electrical physical lane, then all odd bytes of that lane go in the odd optical channel and the even bytes in the even optical channel. For instance, if lane 7 is mapped to optical channels 14 and 15, then bytes 7, 13, 39, .. of the FLIT 910 are mapped to optical channel #14 and bytes 15, 31, 47, .. are mapped to optical channel #15.

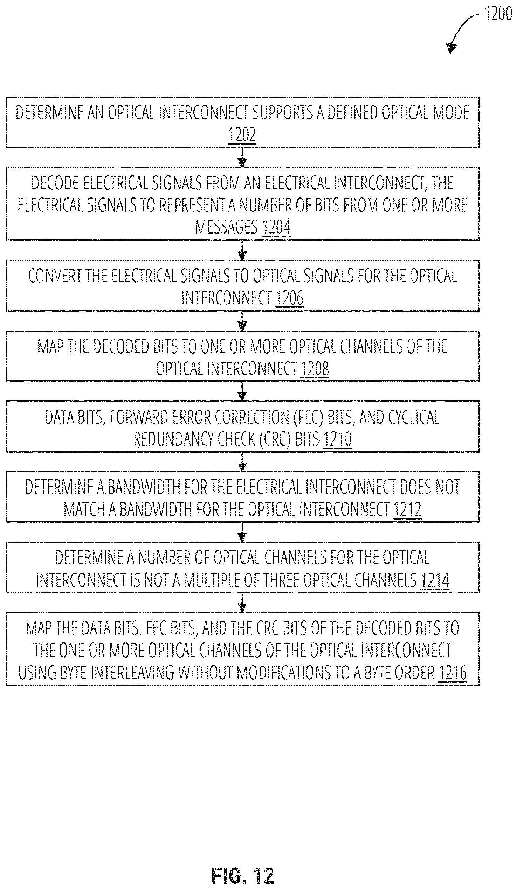

FIG. 12 illustrates a logic flow 1200. The logic flow 1200 is an example of operations for the system 204 or the system 344. In one embodiment, the logic flow 1200 is an example of operations for the optical retimer 216. Embodiments are not limited to this example.

In block 1202, logic flow 1200 determines an optical interconnect supports a defined optical mode. In block 1204, logic flow 1200 decodes electrical signals from an electrical interconnect, the electrical signals to represent a number of bits from one or more messages. In block 1206, logic flow 1200 converts the electrical signals to optical signals for the optical interconnect. In block 1208, logic flow 1200 maps the decoded bits to one or more optical channels of the optical interconnect. In block 1210, logic flow 1200 data bits, forward error correction (FEC) bits, and cyclical redundancy check (CRC) bits. In block 1212, logic flow 1200 determines a bandwidth for the electrical interconnect does not match a bandwidth for the optical interconnect. In block 1214, logic flow 1200 determines a number of optical channels for the optical interconnect is not a multiple of three optical channels. In block 1216, logic flow 1200 maps the data bits, FEC bits, and the CRC bits of the decoded bits to the one or more optical channels of the optical interconnect using byte interleaving without modifications to a byte order.

By way of example, with reference to system 344, logic circuitry 350 of the optical retimer 216 determines whether an electrical interconnect 314, an optical interconnect 328 or the optical retimer 216 supports one or more defined modes deemed necessary for communications given an underlying protocol, such as PCIe, CXL, or alternate protocol. Examples of defined modes may include FLIT mode, SRIS mode, optical mode 1, optical mode 2, and so forth. When the logic circuitry 350 determines a defined node is supported, the EIC 318 of the optical retimer 216 decodes electrical signals from the electrical interconnect 314, where the electrical signals represent a number of bits from one or more messages. Examples of messages include FLIT messages, sideband messages, inter-retimer messages, and so forth. The PIC 320 of the optical retimer 216 converts the electrical signals to optical signals for transport over the optical interconnect 328. After orchestrating training with a peer optical retimer 216 over the optical interconnect 328, the optical retimer 216 maps the decoded bits to one or more optical channels of the optical interconnect 328.

In one embodiment, the decoded bits may include data bits, forward error correction (FEC) bits, and cyclical redundancy check (CRC) bits. In optical mode 2, the logic circuitry 350 determines a bandwidth for the electrical interconnect 314 does not match a bandwidth for the optical interconnect 328. The logic circuitry 350 determines a number of optical channels for the optical interconnect is not a multiple of three optical channels. The logic circuitry 350 maps the data bits, FEC bits, and the CRC bits of the decoded bits to the one or more optical channels of the optical interconnect 328 using byte interleaving without modifications to a byte order, as depicted in layout 602 and layout 702.

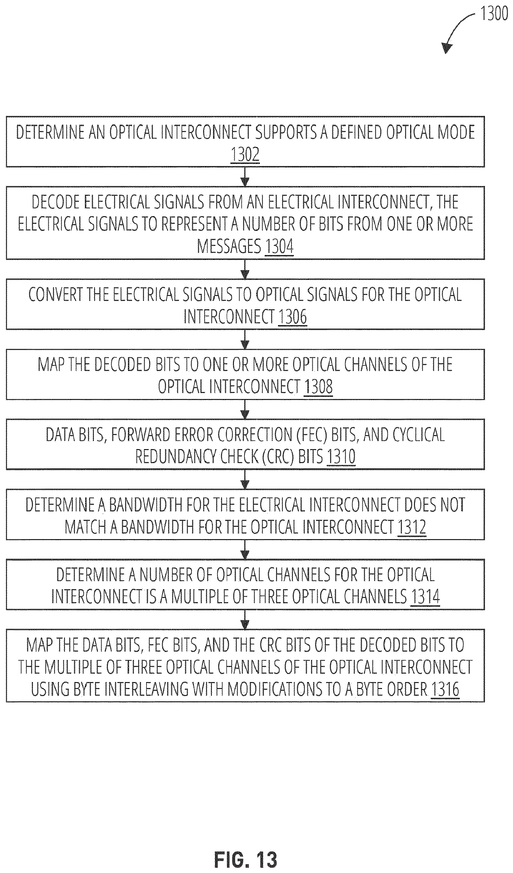

FIG. 13 illustrates a logic flow 1300. The logic flow 1300 is an example of operations for the system 204 or the system 344. In one embodiment, the logic flow 1300 is an example of operations for the optical retimer 216. Embodiments are not limited to this example.

In block 1302, logic flow 1300 determines an optical interconnect supports a defined optical mode. In block 1304, logic flow 1300 decodes electrical signals from an electrical interconnect, the electrical signals to represent a number of bits from one or more messages. In block 1306, logic flow 1300 converts the electrical signals to optical signals for the optical interconnect. In block 1308, logic flow 1300 maps the decoded bits to one or more optical channels of the optical interconnect. In block 1310, logic flow 1300 data bits, forward error correction (FEC) bits, and cyclical redundancy check (CRC) bits. In block 1312, logic flow 1300 determines a bandwidth for the electrical interconnect does not match a bandwidth for the optical interconnect. In block 1314, logic flow 1300 determines a number of optical channels for the optical interconnect is a multiple of three optical channels. In block 1316, logic flow 1300 maps the data bits, FEC bits, and the CRC bits of the decoded bits to the multiple of three optical channels of the optical interconnect using byte interleaving with modifications to a byte order.

By way of example, with reference to system 344, logic circuitry 350 of the optical retimer 216 determines whether an electrical interconnect 314, an optical interconnect 328 or the optical retimer 216 supports one or more defined modes deemed necessary for communications given an underlying protocol, such as PCIe, CXL, or alternate protocol. Examples of defined modes may include FLIT mode, SRIS mode, optical mode 1, optical mode 2, and so forth. When the logic circuitry 350 determines a defined node is supported, the EIC 318 of the optical retimer 216 decodes electrical signals from the electrical interconnect 314, where the electrical signals represent a number of bits from one or more messages. Examples of messages include FLIT messages, sideband messages, inter-retimer messages, and so forth. The PIC 320 of the optical retimer 216 converts the electrical signals to optical signals for transport over the optical interconnect 328. After orchestrating training with a peer optical retimer 216 over the optical interconnect 328, the optical retimer 216 maps the decoded bits to one or more optical channels of the optical interconnect 328.

In one embodiment, the decoded bits may include data bits, forward error correction (FEC) bits, and cyclical redundancy check (CRC) bits. In optical mode 2, the logic circuitry 350 determines a bandwidth for the electrical interconnect 314 does not match a bandwidth for the optical interconnect 328. The logic circuitry 350 determines a number of optical channels for the optical interconnect is a multiple of three optical channels. The logic circuitry 350 maps the data bits, FEC bits, and the CRC bits of the decoded bits to the one or more optical channels of the optical interconnect 328 using byte interleaving with modifications to a byte order, as depicted in layout 704 (x6) and layout 706 (x3).

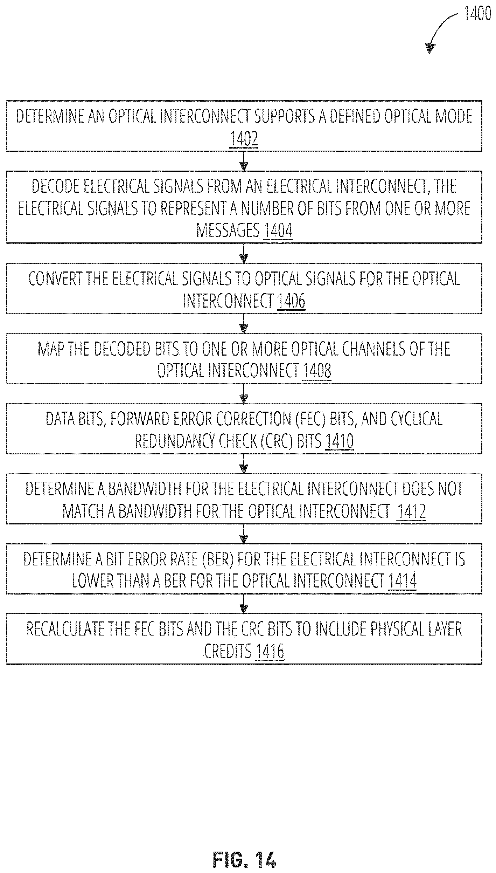

FIG. 14 illustrates a logic flow 1400. The logic flow 1400 is an example of operations for the system 204 or the system 344. In one embodiment, the logic flow 1400 is an example of operations for the optical retimer 216. Embodiments are not limited to this example.

In block 1402, logic flow 1400 determines an optical interconnect supports a defined optical mode. In block 1404, logic flow 1400 decodes electrical signals from an electrical interconnect, the electrical signals to represent a number of bits from one or more messages. In block 1406, logic flow 1400 converts the electrical signals to optical signals for the optical interconnect. In block 1408, logic flow 1400 maps the decoded bits to one or more optical channels of the optical interconnect. In block 1410, logic flow 1400 data bits, forward error correction (FEC) bits, and cyclical redundancy check (CRC) bits. In block 1412, logic flow 1400 determines a bandwidth for the electrical interconnect does not match a bandwidth for the optical interconnect. In block 1414, logic flow 1400 determines a bit error rate (BER) for the electrical interconnect is lower than a BER for the optical interconnect. In block 1416, logic flow 1400 recalculates the FEC bits and the CRC bits to include physical layer credits.

By way of example, with reference to system 344, logic circuitry 350 of the optical retimer 216 determines whether an electrical interconnect 314, an optical interconnect 328 or the optical retimer 216 supports one or more defined modes deemed necessary for communications given an underlying protocol, such as PCIe, CXL, or alternate protocol. Examples of defined modes may include FLIT mode, SRIS mode, optical mode 1, optical mode 2, and so forth. When the logic circuitry 350 determines a defined node is supported, the EIC 318 of the optical retimer 216 decodes electrical signals from the electrical interconnect 314, where the electrical signals represent a number of bits from one or more messages. Examples of messages include FLIT messages, sideband messages, inter-retimer messages, and so forth. The PIC 320 of the optical retimer 216 converts the electrical signals to optical signals for transport over the optical interconnect 328. After orchestrating training with a peer optical retimer 216 over the optical interconnect 328, the optical retimer 216 maps the decoded bits to one or more optical channels of the optical interconnect 328.

In one embodiment, the decoded bits include data bits, forward error correction (FEC) bits, and cyclical redundancy check (CRC) bits. In optical mode 2, the logic circuitry 350 determines a bandwidth for the electrical interconnect 314 does not match a bandwidth for the optical interconnect 328. Further, the logic circuitry 350 determines a bit error rate (BER) for the electrical interconnect 314 is lower than a BER for the optical interconnect 328. In this case, the logic circuitry 350 recalculates the FEC bits and the CRC bits to include physical layer credits.

For the case where the electrical characteristic of the optical interconnect 328 is worse than the electrical interconnect 314, the optical retimer 216 has to deploy a proprietary FEC to ensure that the FLIT replay rate is better than 3×10⁻⁵ after FEC correction. Most likely the CRC will hold for any type of link, though a design for the optical retimer 216 may consider that depending on the error characteristics of a given optical interconnect 328.

In optical mode 2, the optical retimer 216 needs to throttle the local Port with PHY layer credits. Typically 1 credit per non-IDLE Flit is required for the port to local retimer traffic. This credit follows the increment policy so that the credit loss can be tolerated (as done in PCIe DLLPs). IDLE Flits are sent, such as all bits are 0 and no NOP2 DLLP as allowed in the PCIe Standards, when there is no credits in the port to local retimer direction or there is no traffic in the retimer to local port direction. In the retimer to local port direction, the optical retimer 216 recalculates the FEC and CRC with the PHY credit (e.g., 4B) when using PCIe FEC/CRC. Each local port processes the extra data width payload, e.g., 236B TLP + 6B DLP + 3B PHY Credit + 8B CRC + 6B FEC, as shown in FIG. 8 and FIG. 9. An alternate approach may have an extra byte and make the FLIT Size 260B or even 264B. In the retimer to EIC direction, the optical retimer 216 regenerates the FEC and CRC as needed, based on the BER characteristics of the optical interconnect 328.

The embodiments described herein, such as the system 204 and the system 344, are suitable for implementation in HPC, data centers, cloud storage systems, and so forth. In one embodiment for example, the system 204 and the system 344 are particularly suitable for implementation in a data center. A data center may include, for example, a compute server, a storage server, and a machine learning (ML) server. The compute server may include one or more CPUs and a network interface controller (NIC). The storage server may include a CPU, a NIC, and one or more solid state drives (SSDs). The ML server may include a CPU, a NIC, and one or more GPUs. Workload execution is/are provided on or by CPUs and GPUs of the servers. A data center may include a security control point (SCP), which delivers security and trust within individual CPUs. The data center may further include a compute server, storage server, ML server, an inference server, flexible server, and multi-acceleration server. The compute server may include one or more CPUs and an infrastructure processing unit (IPU)s. The storage server may include an ASIC, an IPU, and one or more SSDs. The ML server includes one or more GPUs and an IPU. The inference server includes an IPU and one or more inference accelerators. The flexible server includes an IPU and a one or more FPGAs. The multi-acceleration server includes an IPU, one or more FPGAs, and one or more inference accelerators. The data center may rebalance the SCPs as cloud service providers (CSPs) absorb infrastructure workloads f03. The data center may rebalance the SCPs to IPUs from CPUs to handle workload execution by CSPs. Additionally, infrastructure security and SCPs move into the IPUs, and the SCPs provide end-to-end security. Various elements of the IPU can be used to provide SCPs such as, for example, secure resource management (SRM) circuitry and/or security and root of trust (SRT) circuitry.

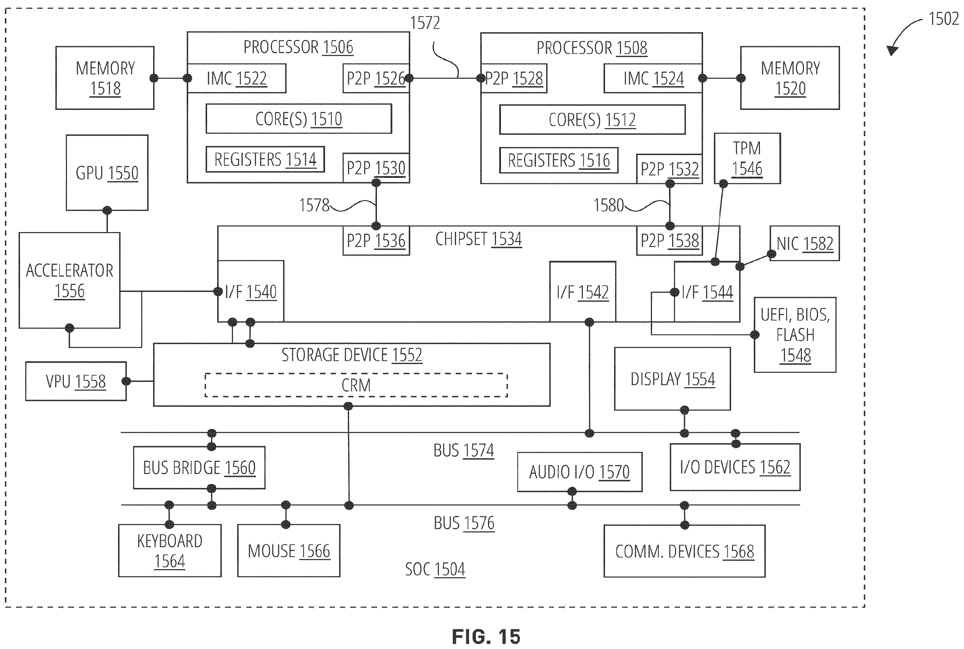

FIG. 15 illustrates an embodiment of a computing architecture 1500. Computing architecture 1500 is a computer system with multiple processor cores such as a distributed computing system, supercomputer, high-performance computing system, computing cluster, mainframe computer, mini-computer, client-server system, personal computer (PC), workstation, server, portable computer, laptop computer, tablet computer, handheld device such as a personal digital assistant (PDA), or other device for processing, displaying, or transmitting information. Similar embodiments may comprise, e.g., entertainment devices such as a portable music player or a portable video player, a smart phone or other cellular phone, a telephone, a digital video camera, a digital still camera, an external storage device, or the like. Further embodiments implement larger scale server configurations. In other embodiments, the computing architecture 1500 has a single processor with one core or more than one processor. Note that the term "processor" refers to a processor with a single core or a processor package with multiple processor cores. In at least one embodiment, the computing architecture 1500 is representative of the components of the system 2100. More generally, the computing architecture 1500 is configured to implement all logic, systems, logic flows, methods, apparatuses, and functionality described herein with reference to previous figures.

As used in this application, the terms "system" and "component" and "module" are intended to refer to a computer-related entity, either hardware, a combination of hardware and software, software, or software in execution, examples of which are provided by the exemplary computing architecture 1500. For example, a component is, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server are a component. One or more components reside within a process and/or thread of execution, and a component is localized on one computer and/or distributed between two or more computers. Further, components are communicatively coupled to each other by various types of communications media to coordinate operations. The coordination involves the uni-directional or bi-directional exchange of information. For instance, the components communicate information in the form of signals communicated over the communications media. The information is implemented as signals allocated to various signal lines. In such allocations, each message is a signal. Further embodiments, however, alternatively employ data messages. Such data messages may be sent across various connections. Exemplary connections include parallel interfaces, serial interfaces, and bus interfaces.

As shown in FIG. 15, computing architecture 1500 comprises a system-on-chip (SoC) 1502 for mounting platform components. System-on-chip (SoC) 1502 is a point-to-point (P2P) interconnect platform that includes a first processor 1504 and a second processor 1506 coupled via a point-to-point interconnect 1570 such as an Ultra Path Interconnect (UPI). In other embodiments, the computing architecture 1500 is another bus architecture, such as a multi-drop bus. Furthermore, each of processor 1504 and processor 1506 are processor packages with multiple processor cores including core(s) 1508 and core(s) 1510, respectively. While the computing architecture 1500 is an example of a two-socket (2S) platform, other embodiments include more than two sockets or one socket. For example, some embodiments include a four-socket (4S) platform or an eight-socket (8S) platform. Each socket is a mount for a processor and may have a socket identifier. Note that the term platform refers to a motherboard with certain components mounted such as the processor 1504 and chipset 1532. Some platforms include additional components and some platforms include sockets to mount the processors and/or the chipset. Furthermore, some platforms do not have sockets (e.g. SoC, or the like). Although depicted as a SoC 1502, one or more of the components of the SoC 1502 are included in a single die package, a multi-chip module (MCM), a multi-die package, a chiplet, a bridge, and/or an interposer. Therefore, embodiments are not limited to a SoC.

The processor 1504 and processor 1506 are any commercially available processors, including without limitation an Intel^{®} Celeron^{®}, Core^{®}, Core (2) Duo^{®}, Itanium^{®}, Pentium^{®}, Xeon^{®}, and XScale^{®} processors; AMD^{®} Athlon^{®}, Duron^{®} and Opteron^{®} processors; ARM^{®} application, embedded and secure processors; IBM^{®} and Motorola^{®} DragonBall^{®} and PowerPC^{®} processors; IBM and Sony^{®} Cell processors; and similar processors. Dual microprocessors, multi-core processors, and other multi-processor architectures are also employed as the processor 1504 and/or processor 1506. Additionally, the processor 1504 need not be identical to processor 1506.

Processor 1504 includes an integrated memory controller (IMC) 1520 and point-to-point (P2P) interface 1524 and P2P interface 1528. Similarly, the processor 1506 includes an IMC 1522 as well as P2P interface 1526 and P2P interface 1530. IMC 1520 and IMC 1522 couple the processor 1504 and processor 1506, respectively, to respective memories (e.g., memory 1516 and memory 1518). Memory 1516 and memory 1518 are portions of the main memory (e.g., a dynamic random-access memory (DRAM)) for the platform such as double data rate type 4 (DDR4) or type 5 (DDR5) synchronous DRAM (SDRAM). In the present embodiment, the memory 1516 and the memory 1518 locally attach to the respective processors (i.e., processor 1504 and processor 1506). In other embodiments, the main memory couple with the processors via a bus and shared memory hub. Processor 1504 includes registers 1512 and processor 1506 includes registers 1514.

Computing architecture 1500 includes chipset 1532 coupled to processor 1504 and processor 1506. Furthermore, chipset 1532 are coupled to storage device 1550, for example, via an interface (I/F) 1538. The I/F 1538 may be, for example, a Peripheral Component Interconnect-enhanced (PCIe) interface, a Compute Express Link ^{®} (CXL) interface, or a Universal Chiplet Interconnect Express (UCIe) interface. Storage device 1550 stores instructions executable by circuitry of computing architecture 1500 (e.g., processor 1504, processor 1506, GPU 1548, accelerator 1554, vision processing unit 1556, or the like). For example, storage device 1550 can store instructions for the client device 2102, the client device 2106, the inferencing device 2104, the training device 2214, or the like.

Processor 1504 couples to the chipset 1532 via P2P interface 1528 and P2P 1534 while processor 1506 couples to the chipset 1532 via P2P interface 1530 and P2P 1536. Direct media interface (DMI) 1576 and DMI 1578 couple the P2P interface 1528 and the P2P 1534 and the P2P interface 1530 and P2P 1536, respectively. DMI 1576 and DMI 1578 is a high-speed interconnect that facilitates, e.g., eight Giga Transfers per second (GT/s) such as DMI 3.0. In other embodiments, the processor 1504 and processor 1506 interconnect via a bus.

The chipset 1532 comprises a controller hub such as a platform controller hub (PCH). The chipset 1532 includes a system clock to perform clocking functions and include interfaces for an I/O bus such as a universal serial bus (USB), peripheral component interconnects (PCIs), CXL interconnects, UCIe interconnects, interface serial peripheral interconnects (SPIs), integrated interconnects (I2Cs), and the like, to facilitate connection of peripheral devices on the platform. In other embodiments, the chipset 1532 comprises more than one controller hub such as a chipset with a memory controller hub, a graphics controller hub, and an input/output (I/O) controller hub.

In the depicted example, chipset 1532 couples with a trusted platform module (TPM) 1544 and UEFI, BIOS, FLASH circuitry 1546 via I/F 1542. The TPM 1544 is a dedicated microcontroller designed to secure hardware by integrating cryptographic keys into devices. The UEFI, BIOS, FLASH circuitry 1546 may provide pre-boot code. The I/F 1542 may also be coupled to a network interface circuit (NIC) 1580 for connections off-chip.

Furthermore, chipset 1532 includes the I/F 1538 to couple chipset 1532 with a high-performance graphics engine, such as, graphics processing circuitry or a graphics processing unit (GPU) 1548. In other embodiments, the computing architecture 1500 includes a flexible display interface (FDI) (not shown) between the processor 1504 and/or the processor 1506 and the chipset 1532. The FDI interconnects a graphics processor core in one or more of processor 1504 and/or processor 1506 with the chipset 1532.

The computing architecture 1500 is operable to communicate with wired and wireless devices or entities via the network interface (NIC) 180 using the IEEE 802 family of standards, such as wireless devices operatively disposed in wireless communication (e.g., IEEE 802.11 over-the-air modulation techniques). This includes at least Wi-Fi (or Wireless Fidelity), WiMax, and Bluetooth^{™} wireless technologies, 3G, 4G, LTE wireless technologies, among others. Thus, the communication is a predefined structure as with a conventional network or simply an ad hoc communication between at least two devices. Wi-Fi networks use radio technologies called IEEE 802.11x (a, b, g, n, ac, ax, etc.) to provide secure, reliable, fast wireless connectivity. A Wi-Fi network is used to connect computers to each other, to the Internet, and to wired networks (which use IEEE 802.3-related media and functions).

Additionally, accelerator 1554 and/or vision processing unit 1556 are coupled to chipset 1532 via I/F 1538. The accelerator 1554 is representative of any type of accelerator device (e.g., a data streaming accelerator, cryptographic accelerator, cryptographic co-processor, an offload engine, etc.). One example of an accelerator 1554 is the Intel^{®} Data Streaming Accelerator (DSA). The accelerator 1554 is a device including circuitry to accelerate copy operations, data encryption, hash value computation, data comparison operations (including comparison of data in memory 1516 and/or memory 1518), and/or data compression. Examples for the accelerator 1554 include a USB device, PCI device, PCIe device, CXL device, UCIe device, and/or an SPI device. The accelerator 1554 also includes circuitry arranged to execute machine learning (ML) related operations (e.g., training, inference, etc.) for ML models. Generally, the accelerator 1554 is specially designed to perform computationally intensive operations, such as hash value computations, comparison operations, cryptographic operations, and/or compression operations, in a manner that is more efficient than when performed by the processor 1504 or processor 1506. Because the load of the computing architecture 1500 includes hash value computations, comparison operations, cryptographic operations, and/or compression operations, the accelerator 1554 greatly increases performance of the computing architecture 1500 for these operations.

The accelerator 1554 includes one or more dedicated work queues and one or more shared work queues (each not pictured). Generally, a shared work queue is configured to store descriptors submitted by multiple software entities. The software is any type of executable code, such as a process, a thread, an application, a virtual machine, a container, a microservice, etc., that share the accelerator 1554. For example, the accelerator 1554 is shared according to the Single Root I/O virtualization (SR-IOV) architecture and/or the Scalable I/O virtualization (S-IOV) architecture. Embodiments are not limited in these contexts. In some embodiments, software uses an instruction to atomically submit the descriptor to the accelerator 1554 via a non-posted write (e.g., a deferred memory write (DMWr)). One example of an instruction that atomically submits a work descriptor to the shared work queue of the accelerator 1554 is the ENQCMD command or instruction (which may be referred to as "ENQCMD" herein) supported by the Intel^{®} Instruction Set Architecture (ISA). However, any instruction having a descriptor that includes indications of the operation to be performed, a source virtual address for the descriptor, a destination virtual address for a device-specific register of the shared work queue, virtual addresses of parameters, a virtual address of a completion record, and an identifier of an address space of the submitting process is representative of an instruction that atomically submits a work descriptor to the shared work queue of the accelerator 1554. The dedicated work queue may accept job submissions via commands such as the movdir64b instruction.

Various I/O devices 1560 and display 1552 couple to the bus 1572, along with a bus bridge 1558 which couples the bus 1572 to a second bus 1574 and an I/F 1540 that connects the bus 1572 with the chipset 1532. In one embodiment, the second bus 1574 is a low pin count (LPC) bus. Various input/output (I/O) devices couple to the second bus 1574 including, for example, a keyboard 1562, a mouse 1564 and communication devices 1566.

Furthermore, an audio I/O 1568 couples to second bus 1574. Many of the I/O devices 1560 and communication devices 1566 reside on the system-on-chip (SoC) 1502 while the keyboard 1562 and the mouse 1564 are add-on peripherals. In other embodiments, some or all the I/O devices 1560 and communication devices 1566 are add-on peripherals and do not reside on the system-on-chip (SoC) 1502.

### TERMINOLOGY

For the purposes of the present document, the following terms and definitions are applicable to the examples and embodiments discussed herein. As used herein, the singular forms "a," "an" and "the" are intended to include plural forms as well, unless the context clearly indicates otherwise. It will be further understood that the terms "comprises" and/or "comprising," when used in this specification, specific the presence of stated features, integers, steps, operations, elements, and/or components, but do not preclude the presence or addition of one or more other features, integers, steps, operation, elements, components, and/or groups thereof. The phrase "A and/or B" means (A), (B), or (A and B). For the purposes of the present disclosure, the phrase "A, B, and/or C" means (A), (B), (C), (A and B), (A and C), (B and C), or (A, B and C). The phrase "X(s)" means one or more X or a set of X. The description may use the phrases "in an embodiment," "In some embodiments," "in one implementation," "In some implementations," "in some examples", and the like, each of which may refer to one or more of the same or different embodiments, implementations, and/or examples. Furthermore, the terms "comprising," "including," "having," and the like, as used with respect to the present disclosure, are synonymous.

The terms "master" and "slave" at least in some examples refers to a model of asymmetric communication or control where one device, process, element, or entity (the "master") controls one or more other device, process, element, or entity (the "slaves"). The terms "master" and "slave" are used in this disclosure only for their technical meaning. The term "master" or "grandmaster" may be substituted with any of the following terms "main", "source", "primary", "initiator", "requestor", "transmitter", "host", "maestro", "controller", "provider", "producer", "client", "source", "minterconnect", "parent", "chief', "manager", "reference" (e.g., as in "reference clock" or the like), and/or the like. Additionally, the term "slave" may be substituted with any of the following terms "receiver", "secondary", "subordinate", "replica", target", "responder", "device", "performer", "agent", "standby", "consumer", "peripheral", "follower", "server", "child", "helper", "worker", "node", and/or the like.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or ink, and/or the like.

The term "establish" or "establishment" at least in some examples refers to (partial or in full) acts, tasks, operations, and the like, related to bringing or the readying the bringing of something into existence either actively or passively (e.g., exposing a device identity or entity identity). Additionally or alternatively, the term "establish" or "establishment" at least in some examples refers to (partial or in full) acts, tasks, operations, and the like, related to initiating, starting, or warming communication or initiating, starting, or warming a relationship between two entities or elements (e.g., establish a session, establish a session, and the like). Additionally or alternatively, the term "establish" or "establishment" at least in some examples refers to initiating something to a state of working readiness. The term "established" at least in some examples refers to a state of being operational or ready for use (e.g., full establishment). Furthermore, any definition for the term "establish" or "establishment" defined in any specification or standard can be used for purposes of the present disclosure and such definitions are not disavowed by any of the aforementioned definitions.

The term "obtain" at least in some examples refers to (partial or in full) acts, tasks, operations, and the like, of intercepting, movement, copying, retrieval, or acquisition (e.g., from a memory, an interface, or a buffer), on the original packet stream or on a copy (e.g., a new instance) of the packet stream. Other aspects of obtaining or receiving may involving instantiating, enabling, or controlling the ability to obtain or receive a stream of packets (or the following parameters and templates or template values).

The term "receipt" at least in some examples refers to any action (or set of actions) involved with receiving or obtaining an object, data, data unit, and the like, and/or the fact of the object, data, data unit, and the like being received. The term "receipt" at least in some examples refers to an object, data, data unit, and the like, being pushed to a device, system, element, and the like (e.g., often referred to as a push model), pulled by a device, system, element, and the like (e.g., often referred to as a pull model), and/or the like.

The term "element" at least in some examples refers to a unit that is indivisible at a given level of abstraction and has a clearly defined boundary, wherein an element may be any type of entity including, for example, one or more devices, systems, controllers, network elements, modules, engines, components, and so forth, or combinations thereof. Additionally or alternatively, the term "system element" at least in some examples refers to a defined device or collection of devices that operate according to distinct sets of rules (as examples, PCIe defines the following system elements: Root Complex (RC), Endpoint (EP), Switch, and Bridge). The term "entity" at least in some examples refers to a distinct element of a component, architecture, platform, device, and/or system. Additionally or alternatively, the term "entity" at least in some examples refers to information transferred as a payload.

The term "measurement" at least in some examples refers to the observation and/or quantification of attributes of an object, event, or phenomenon. Additionally or alternatively, the term "measurement" at least in some examples refers to a set of operations having the object of determining a measured value or measurement result, and/or the actual instance or execution of operations leading to a measured value. Additionally or alternatively, the term "measurement" at least in some examples refers to data recorded during testing.

The term "metric" at least in some examples refers to a quantity produced in an assessment of a measured value. Additionally or alternatively, the term "metric" at least in some examples refers to data derived from a set of measurements. Additionally or alternatively, the term "metric" at least in some examples refers to set of events combined or otherwise grouped into one or more values. Additionally or alternatively, the term "metric" at least in some examples refers to a combination of measures or set of collected data points. Additionally or alternatively, the term "metric" at least in some examples refers to a standard definition of a quantity, produced in an assessment of performance and/or reliability of the network, which has an intended utility and is carefully specified to convey the exact meaning of a measured value.

The term "signal" at least in some examples refers to an observable change in a quality and/or quantity. Additionally or alternatively, the term "signal" at least in some examples refers to a function that conveys information about of an object, event, or phenomenon. Additionally or alternatively, the term "signal" at least in some examples refers to any time varying voltage, current, or electromagnetic wave that may or may not carry information. The term "digital signal" at least in some examples refers to a signal that is constructed from a discrete set of waveforms of a physical quantity so as to represent a sequence of discrete values.

The terms "ego" (as in, e.g., "ego device") and "subject" (as in, e.g., "data subject") at least in some examples refers to an entity, element, device, system, and the like, that is under consideration or being considered. The terms "neighbor" and "proximate" (as in, e.g., "proximate device") at least in some examples refers to an entity, element, device, system, and the like, other than an ego device or subject device.

The term "identifier" at least in some examples refers to a value, or a set of values, that uniquely identify an identity in a certain scope. Additionally or alternatively, the term "identifier" at least in some examples refers to a sequence of characters that identifies or otherwise indicates the identity of a unique object, element, or entity, or a unique class of objects, elements, or entities. Additionally or alternatively, the term "identifier" at least in some examples refers to a sequence of characters used to identify or refer to an application, program, session, object, element, entity, variable, set of data, and/or the like. The "sequence of characters" mentioned previously at least in some examples refers to one or more names, labels, words, numbers, letters, symbols, and/or any combination thereof. Additionally or alternatively, the term "identifier" at least in some examples refers to a name, address, label, distinguishing index, and/or attribute. Additionally or alternatively, the term "identifier" at least in some examples refers to an instance of identification. The term "persistent identifier" at least in some examples refers to an identifier that is reused by a device or by another device associated with the same person or group of persons for an indefinite period. The term "identification" at least in some examples refers to a process of recognizing an identity as distinct from other identities in a particular scope or context, which may involve processing identifiers to reference an identity in an identity database. The term "application identifier", "application ID", or "app ID" at least in some examples refers to an identifier that can be mapped to a specific application, application instance, or application instance. In the context of 3GPP 5G/NR, an "application identifier" at least in some examples refers to an identifier that can be mapped to a specific application traffic detection rule.

The term "circuitry" at least in some examples refers to a circuit or system of multiple circuits configured to perform a particular function in an electronic device. The circuit or system of circuits may be part of, or include one or more hardware components, such as a logic circuit, a processor (shared, dedicated, or group) and/or memory (shared, dedicated, or group), an application-specific integrated circuit (ASIC), field-programmable gate array (FPGA), programmable logic controller (PLC), single-board computer (SBC), system on chip (SoC), system in package (SiP), multi-chip package (MCP), digital signal processor (DSP), and the like, that are configured to provide the described functionality. In addition, the term "circuitry" may also refer to a combination of one or more hardware elements with the program code used to carry out the functionality of that program code. Some types of circuitry may execute one or more software or firmware programs to provide at least some of the described functionality. Such a combination of hardware elements and program code may be referred to as a particular type of circuitry.

The term "processor circuitry" at least in some examples refers to, is part of, or includes circuitry capable of sequentially and automatically carrying out a sequence of arithmetic or logical operations, or recording, storing, and/or transferring digital data. The term "processor circuitry" at least in some examples refers to one or more application processors, one or more baseband processors, a physical CPU, a single-core processor, a dual-core processor, a triple-core processor, a quad-core processor, and/or any other device capable of executing or otherwise operating computer-executable instructions, such as program code, software modules, and/or functional processes. The terms "application circuitry" and/or "baseband circuitry" may be considered synonymous to, and may be referred to as, "processor circuitry."

The term "memory" and/or "memory circuitry" at least in some examples refers to one or more hardware devices for storing data, including random access memory (RAM), static RAM (SRAM), dynamic RAM (DRAM), synchronous DRAM (SDRAM), magnetoresistive RAM (MRAM), conductive bridge Random Access Memory (CB-RAM), spin transfer torque (STT)-MRAM, phase change RAM (PRAM), core memory, read-only memory (ROM), programmable ROM (PROM), erasable PROM (EPROM), electrically EPROM (EEPROM), flash memory, non-volatile RAM (NVRAM), magnetic disk storage mediums, optical storage mediums, flash memory devices or other machine readable mediums for storing data. The term "computer-readable medium" may include, but is not limited to, memory, portable or interconnected storage devices, optical storage devices, and various other mediums capable of storing, containing or carrying instructions or data.

The terms "machine-readable medium" and "computer-readable medium" refers to tangible medium that is capable of storing, encoding or carrying instructions for execution by a machine and that cause the machine to perform any one or more of the methodologies of the present disclosure or that is capable of storing, encoding or carrying data structures utilized by or associated with such instructions. A "machine-readable medium" thus may include but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks. The instructions embodied by a machine-readable medium may further be transmitted or received over a communications network using a transmission medium via a network interface device utilizing any one of a number of transfer protocols (e.g., HTTP). A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived may include source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) may include: compiling (e.g., from source code, object code, and/or the like), interpreting, loading, organizing (e.g., dynamically or statically linking), encoding, decoding, encrypting, unencrypting, packaging, unpackaging, or otherwise manipulating the information into the instructions. In an example, the derivation of the instructions may include assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, and/or the like) on one or several remote servers. The source code packages may be encrypted when in transit over a network and decrypted, uncompressed, assembled (e.g., linked) if necessary, and compiled or interpreted (e.g., into a library, stand-alone executable, and/or the like) at a local machine, and executed by the local machine. The terms "machine-readable medium" and "computer-readable medium" may be interchangeable for purposes of the present disclosure. The term "non-transitory computer-readable medium at least in some examples refers to any type of memory, computer readable storage device, and/or storage disk and may exclude propagating signals and transmission media.

The term "interface circuitry" at least in some examples refers to, is part of, or includes circuitry that enables the exchange of information between two or more components or devices. The term "interface circuitry" at least in some examples refers to one or more hardware interfaces, for example, buses, I/O interfaces, peripheral component interfaces, network interface cards, and/or the like.

The term "SmartNIC" at least in some examples refers to a network interface controller (NIC), network adapter, or a programmable network adapter card with programmable hardware accelerators and network connectivity (e.g., Ethernet or the like) that can offload various tasks or workloads from other compute nodes or compute platforms such as servers, application processors, and/or the like and accelerate those tasks or workloads. A SmartNIC has similar networking and offload capabilities as an IPU, but remains under the control of the host as a peripheral device.

The term "fabric" at least in some examples refers to an interconnect technology that carries on-chip communications between the different functional components of a processor. Additionally or alternatively, the term "fabric" at least in some examples refers to an interconnect technology that carries communications between the different functional components of a computing device, a system, and/or network.

The term "infrastructure processing unit" or "IPU" at least in some examples refers to an advanced networking device with hardened accelerators and network connectivity (e.g., Ethernet or the like) that accelerates and manages infrastructure functions using tightly coupled, dedicated, programmable cores. In some implementations, an IPU offers full infrastructure offload and provides an extra layer of security by serving as a control point of a host for running infrastructure applications. An IPU is capable of offloading the entire infrastructure stack from the host and can control how the host attaches to this infrastructure. This gives service providers an extra layer of security and control, enforced in hardware by the IPU.

The term "device" at least in some examples refers to a physical entity embedded inside, or attached to, another physical entity in its vicinity, with capabilities to convey digital information from or to that physical entity.

The term "controller" at least in some examples refers to an element or entity that has the capability to affect a physical entity, such as by changing its state or causing the physical entity to move.

The term "scheduler" at least in some examples refers to an entity or element that assigns resources (e.g., processor time, network links, memory space, and/or the like) to perform tasks. The term "network scheduler" at least in some examples refers to a node, element, or entity that manages network packets in transmit and/or receive queues of one or more protocol stacks of network access circuitry (e.g., a network interface controller (NIC), baseband processor, and the like). The term "network scheduler" at least in some examples can be used interchangeably with the terms "packet scheduler", "queueing discipline" or "qdisc", and/or "queueing algorithm".

The term "terminal" at least in some examples refers to point at which a conductor from a component, device, or network comes to an end. Additionally or alternatively, the term "terminal" at least in some examples refers to an electrical connector acting as an interface to a conductor and creating a point where external circuits can be connected. In some examples, terminals may include electrical leads, electrical connectors, electrical connectors, solder cups or buckets, and/or the like.

The term "compute node" or "compute device" at least in some examples refers to an identifiable entity implementing an aspect of computing operations, whether part of a larger system, distributed collection of systems, or a standalone apparatus. In some examples, a compute node may be referred to as a "computing device", "computing system", or the like, whether in operation as a client, server, or intermediate entity. Specific implementations of a compute node may be incorporated into a server, base station, gateway, road side unit, on-premise unit, user equipment, end consuming device, appliance, or the like. For purposes of the present disclosure, the term "node" at least in some examples refers to and/or is interchangeable with the terms "device", "component", "subsystem", and/or the like.

The term "computer system" at least in some examples refers to any type interconnected electronic devices, computer devices, or components thereof. Additionally, the terms "computer system" and/or "system" at least in some examples refer to various components of a computer that are communicatively coupled with one another. Furthermore, the term "computer system" and/or "system" at least in some examples refer to multiple computer devices and/or multiple computing systems that are communicatively coupled with one another and configured to share computing and/or networking resources.

The term "server" at least in some examples refers to a computing device or system, including processing hardware and/or process space(s), an associated storage medium such as a memory device or database, and, in some instances, suitable application(s) as is known in the art. The terms "server system" and "server" may be used interchangeably herein, and these terms at least in some examples refers to one or more computing system(s) that provide access to a pool of physical and/or virtual resources. The various servers discussed herein include computer devices with rack computing architecture component(s), tower computing architecture component(s), blade computing architecture component(s), and/or the like. The servers may represent a cluster of servers, a server farm, a cloud computing service, or other grouping or pool of servers, which may be located in one or more datacenters. The servers may also be connected to, or otherwise associated with, one or more data storage devices (not shown). Moreover, the servers may include an operating system (OS) that provides executable program instructions for the general administration and operation of the individual server computer devices, and may include a computer-readable medium storing instructions that, when executed by a processor of the servers, may allow the servers to perform their intended functions. Suitable implementations for the OS and general functionality of servers are known or commercially available, and are readily implemented by persons having ordinary skill in the art.

The term "platform" at least in some examples refers to an environment in which instructions, program code, software elements, and the like can be executed or otherwise operate, and examples of such an environment include an architecture (e.g., a motherboard, a computing system, and/or the like), one or more hardware elements (e.g., embedded systems, and the like), a cluster of compute nodes, a set of distributed compute nodes or network, an operating system, a virtual machine (VM), a virtualization container, a software framework, a client application (e.g., web browser or the like) and associated application programming interfaces, a cloud computing service (e.g., platform as a service (PaaS)), or other underlying software executed with instructions, program code, software elements, and the like.

The term "architecture" at least in some examples refers to a computer architecture or a network architecture. The term "computer architecture" at least in some examples refers to a physical and logical design or arrangement of software and/or hardware elements in a computing system or platform including technology standards for interacts therebetween. The term "network architecture" at least in some examples refers to a physical and logical design or arrangement of software and/or hardware elements in a network including communication protocols, interfaces, and media transmission.

The term "appliance," "computer appliance," and the like, at least in some examples refers to a computer device or computer system with program code (e.g., software or firmware) that is specifically designed to provide a specific computing resource. The term "virtual appliance" at least in some examples refers to a virtual machine image to be implemented by a hypervisor-equipped device that virtualizes or emulates a computer appliance or otherwise is dedicated to providing a specific computing resource. The term "security appliance", "firewall", and the like at least in some examples refers to a computer appliance designed to protect computer networks from unwanted traffic and/or malicious attacks. The term "policy appliance" at least in some examples refers to technical control and logging mechanisms to enforce or reconcile policy rules (information use rules) and to ensure accountability in information systems.

The term "gateway" at least in some examples refers to a network appliance that allows data to flow from one network to another network, or a computing system or application configured to perform such tasks. Examples of gateways include IP gateways, Internet-to-Orbit (I2O) gateways, IoT gateways, cloud storage gateways, and/or the like.

The term "user equipment" or "UE" at least in some examples refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, station, mobile station, mobile user, subscriber, user, remote station, access agent, user agent, receiver, radio equipment, reconfigurable radio equipment, reconfigurable mobile device, and the like. Furthermore, the term "user equipment" or "UE" may include any type of wireless/wired device or any computing device including a wireless communications interface. Examples of UEs, client devices, and the like, include desktop computers, workstations, laptop computers, mobile data terminals, smartphones, tablet computers, wearable devices, machine-to-machine (M2M) devices, machine-type communication (MTC) devices, Internet of Things (IoT) devices, embedded systems, sensors, autonomous vehicles, drones, robots, in-vehicle infotainment systems, instrument clusters, onboard diagnostic devices, dashtop mobile equipment, electronic engine management systems, electronic/engine control units/modules, microcontrollers, control module, server devices, network appliances, head-up display (HUD) devices, helmut-mounted display devices, augmented reality (AR) devices, virtual reality (VR) devices, interconnected reality (MR) devices, and/or other like systems or devices.

The term "station" or "STA" at least in some examples refers to a logical entity that is a singly addressable instance of a medium access control (MAC) and physical layer (PHY) interface to the wireless medium (WM). The term "wireless medium" or WM" at least in some examples refers to the medium used to implement the transfer of protocol data units (PDUs) between peer physical layer (PHY) entities of a wireless local area network (LAN).

The term "network element" at least in some examples refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, network access node (NAN), base station, access point (AP), RAN device, RAN node, gateway, server, network appliance, network function (NF), virtualized NF (VNF), and/or the like.

The term "network controller" at least in some examples refers to a functional block that centralizes some or all of the control and management functionality of a network domain and may provide an abstract view of the network domain to other functional blocks via an interface.

The term "network access node" or "NAN" at least in some examples refers to a network element in a radio access network (RAN) responsible for the transmission and reception of radio signals in one or more cells or coverage areas to or from a UE or station. A "network access node" or "NAN" can have an integrated antenna or may be connected to an antenna array by feeder cables. Additionally or alternatively, a "network access node" or "NAN" may include specialized digital signal processing, network function hardware, and/or computer hardware to operate as a compute node. In some examples, a "network access node" or "NAN" may be split into multiple functional blocks operating in software for flexibility, cost, and performance. In some examples, a "network access node" or "NAN" may be a base station (e.g., an evolved Node B (eNB) or a next generation Node B (gNB)), an access point and/or wireless network access point, router, switch, hub, radio unit or remote radio head, Transmission Reception Point (TRP), a gateway device (e.g., Residential Gateway, Wireline 5G Access Network, Wireline 5G Cable Access Network, Wireline BBF Access Network, and the like), network appliance, and/or some other network access hardware.

The term "access point" or "AP" at least in some examples refers to an entity that contains one station (STA) and provides access to the distribution services, via the wireless medium (WM) for associated STAs. An AP comprises a STA and a distribution system access function (DSAF).

The term "cell" at least in some examples refers to a radio network object that can be uniquely identified by a UE from an identifier (e.g., cell ID) that is broadcasted over a geographical area from a network access node (NAN). Additionally or alternatively, the term "cell" at least in some examples refers to a geographic area covered by a NAN.

The term "serving cell" at least in some examples refers to a primary cell (PCell) for a UE in a connected mode or state (e.g., RRC_CONNECTED) and not configured with carrier aggregation (CA) and/or dual connectivity (DC). Additionally or alternatively, the term "serving cell" at least in some examples refers to a set of cells comprising zero or more special cells and one or more secondary cells for a UE in a connected mode or state (e.g., RRC_CONNECTED) and configured with CA.

The term "primary cell" or "PCell" at least in some examples refers to a Master Cell Group (MCG) cell, operating on a primary frequency, in which a UE either performs an initial connection establishment procedure or initiates a connection re-establishment procedure. The term "Secondary Cell" or "SCell" at least in some examples refers to a cell providing additional radio resources on top of a special cell (SpCell) for a UE configured with CA. The term "special cell" or "SpCell" at least in some examples refers to a PCell for non-DC operation or refers to a PCell of an MCG or a PSCell of an SCG for DC operation.

The term "Master Cell Group" or "MCG" at least in some examples refers to a group of serving cells associated with a "Master Node" comprising a SpCell (PCell) and optionally one or more SCells. The term "Secondary Cell Group" or "SCG" at least in some examples refers to a subset of serving cells comprising a Primary SCell (PSCell) and zero or more SCells for a UE configured with DC. The term "Primary SCG Cell" refers to the SCG cell in which a UE performs random access when performing a reconfiguration with sync procedure for DC operation.

The term "Master Node" or "MN" at least in some examples refers to a NAN that provides control plane connection to a core network. The term "Secondary Node" or "SN" at least in some examples refers to a NAN providing resources to the UE in addition to the resources provided by an MN and/or a NAN with no control plane connection to a core network

The term "E-UTEAN NodeB", "eNodeB", or "eNB" at least in some examples refers to a RAN node providing E-UTRA user plane (PDCP/RLC/MAC/PHY) and control plane (RRC) protocol terminations towards a UE, and connected via an S1 interface to the Evolved Packet Core (EPC). Two or more eNBs are interconnected with each other (and/or with one or more en-gNBs) by means of an X2 interface.

The term "next generation eNB" or "ng-eNB" at least in some examples refers to a RAN node providing E-UTRA user plane and control plane protocol terminations towards a UE, and connected via the NG interface to the 5GC. Two or more ng-eNBs are interconnected with each other (and/or with one or more gNBs) by means of an Xn interface.

The term "Next Generation NodeB", "gNodeB", or "gNB" at least in some examples refers to a RAN node providing NR user plane and control plane protocol terminations towards a UE, and connected via the NG interface to the 5GC. Two or more gNBs are interconnected with each other (and/or with one or more ng-eNBs) by means of an Xn interface.

The term "E-UTRA-NR gNB" or "en-gNB" at least in some examples refers to a RAN node providing NR user plane and control plane protocol terminations towards a UE, and acting as a Secondary Node in E-UTRA-NR Dual Connectivity (EN-DC) scenarios (see e.g., 3GPP TS 37.340 v17.0.0 (2022-04-15) ("[TS37340]")). Two or more en-gNBs are interconnected with each other (and/or with one or more eNBs) by means of an X2 interface.

The term "Next Generation RAN node" or "NG-RAN node" at least in some examples refers to either a gNB or an ng-eNB.

The term "IAB-node" at least in some examples refers to a RAN node that supports new radio (NR) access links to user equipment (UEs) and NR backhaul links to parent nodes and child nodes. The term "IAB-donor" at least in some examples refers to a RAN node (e.g., a gNB) that provides network access to UEs via a network of backhaul and access links.

The term "Transmission Reception Point" or "TRP" at least in some examples refers to an antenna array with one or more antenna elements available to a network located at a specific geographical location for a specific area.

The term "Central Unit" or "CU" at least in some examples refers to a logical node hosting radio resource control (RRC), Service Data Adaptation Protocol (SDAP), and/or Packet Data Convergence Protocol (PDCP) protocols/layers of an NG-RAN node, or RRC and PDCP protocols of the en-gNB that controls the operation of one or more DUs; a CU terminates an F1 interface connected with a DU and may be connected with multiple DUs.

The term "Distributed Unit" or "DU" at least in some examples refers to a logical node hosting Backhaul Adaptation Protocol (BAP), F1 application protocol (F1AP), radio link control (RLC), medium access control (MAC), and physical (PHY) layers of the NG-RAN node or en-gNB, and its operation is partly controlled by a CU; one DU supports one or multiple cells, and one cell is supported by only one DU; and a DU terminates the F1 interface connected with a CU.

The term "Radio Unit" or "RU" at least in some examples refers to a logical node hosting PHY layer or Low-PHY layer and radiofrequency (RF) processing based on a lower layer functional split.

The term "split architecture" at least in some examples refers to an architecture in which an CU, DU, and/or RU are physically separated from one another. Additionally or alternatively, the term "split architecture" at least in some examples refers to a RAN architecture such as those discussed in 3GPP TS 38.401 v17.2.0 (2022-09-23) ("[TS38401]") and/or 3GPP TS 38.410 v 17.1.0 (2022-06-23) ("[TS38410]"), the contents of each of which are hereby incorporated by reference in their entireties. The term "integrated architecture at least in some examples refers to an architecture in which an RU and DU are implemented on one platform, and/or an architecture in which a DU and a CU are implemented on one platform.

The term "Residential Gateway" or "RG" at least in some examples refers to a device providing, for example, voice, data, broadcast video, video on demand, to other devices in customer premises. The term "Wireline 5G Access Network" or "W-5GAN" at least in some examples refers to a wireline AN that connects to a 5GC via N2 and N3 reference points. The W-5GAN can be either a W-5GBAN or W-5GCAN. The term "Wireline 5G Cable Access Network" or "W-5GCAN" at least in some examples refers to an Access Network defined in/by CableLabs. The term "Wireline BBF Access Network" or "W-5GBAN" at least in some examples refers to an Access Network defined in/by the Broadband Forum (BBF). The term "Wireline Access Gateway Function" or "W-AGF" at least in some examples refers to a Network function in W-5GAN that provides connectivity to a 3GPP 5G Core network (5GC) to 5G-RG and/or FN-RG. The term "5G-RG" at least in some examples refers to an RG capable of connecting to a 5GC playing the role of a user equipment with regard to the 5GC; it supports secure element and exchanges N1 signaling with 5GC. The 5G-RG can be either a 5G-BRG or 5G-CRG.

The term "edge computing" at least in some examples refers to an implementation or arrangement of distributed computing elements that move processing activities and resources (e.g., compute, storage, acceleration, and/or network resources) towards the "edge" of the network in an effort to reduce latency and increase throughput for endpoint users (client devices, user equipment, and the like). Additionally or alternatively, term "edge computing" at least in some examples refers to a set of services hosted relatively close to a client/UE's access point of attachment to a network to achieve relatively efficient service delivery through reduced end-to-end latency and/or load on the transport network. In some examples, edge computing implementations involve the offering of services and/or resources in a cloud-like systems, functions, applications, and subsystems, from one or multiple locations accessible via wireless networks.

The term "edge compute node" or "edge compute device" at least in some examples refers to an identifiable entity implementing an aspect of edge computing operations, whether part of a larger system, distributed collection of systems, or a standalone apparatus. In some examples, a compute node may be referred to as a "edge node", "edge device", "edge system", whether in operation as a client, server, or intermediate entity. Additionally or alternatively, the term "edge compute node" at least in some examples refers to a real-world, logical, or virtualized implementation of a compute-capable element in the form of a device, gateway, bridge, system or subsystem, component, whether operating in a server, client, endpoint, or peer mode, and whether located at an "edge" of a network or at a connected location further within the network. however, references to an "edge computing system" generally refer to a distributed architecture, organization, or collection of multiple nodes and devices, and which is organized to accomplish or offer some aspect of services or resources in an edge computing setting.

The term "edge computing platform" or "edge platform" at least in some examples refers to a collection of functionality that is used to instantiate, execute, or run edge applications on a specific edge compute node (e.g., virtualization infrastructure and/or the like), enable such edge applications to provide and/or consume edge services, and/or otherwise provide one or more edge services.

The term "edge application" or "edge app" at least in some examples refers to an application that can be instantiated on, or executed by, an edge compute node within an edge computing network, system, or framework, and can potentially provide and/or consume edge computing services.

The term "edge service" at least in some examples refers to a service provided via an edge compute node and/or edge platform, either by the edge platform itself and/or by an edge application.

The term "colocated" or "co-located" at least in some examples refers to two or more elements being in the same place or location, or relatively close to one another (e.g., within some predetermined distance from one another). Additionally or alternatively, the term "colocated" or "co-located" at least in some examples refers to the placement or deployment of two or more compute elements or compute nodes together in a secure dedicated storage facility, or within a same enclosure or housing.

The term "central office" or "CO" at least in some examples refers to an aggregation point for telecommunications infrastructure within an accessible or defined geographical area, often where telecommunication service providers have traditionally located switching equipment for one or multiple types of access networks. In some examples, a CO can be physically designed to house telecommunications infrastructure equipment or compute, data storage, and network resources. The CO need not, however, be a designated location by a telecommunications service provider. The CO may host any number of compute devices for edge applications and services, or even local implementations of cloud-like services.

The term "cloud computing" or "cloud" at least in some examples refers to a paradigm for enabling network access to a scalable and elastic pool of shareable computing resources with self-service provisioning and administration on-demand and without active management by users. Cloud computing provides cloud computing services (or cloud services), which are one or more capabilities offered via cloud computing that are invoked using a defined interface (e.g., an API or the like).

The term "cluster" at least in some examples refers to a set or grouping of entities as part of a cloud computing service and/or an edge computing system (or systems), in the form of physical entities (e.g., different computing systems, network elements, networks and/or network groups), logical entities (e.g., applications, functions, security constructs, virtual machines, virtualization containers, and the like), and the like. In some examples, a "cluster" is also referred to as a "group" or a "domain". The membership of cluster may be modified or affected based on conditions, parameters, criteria, configurations, functions, and/or other aspects including from dynamic or property-based membership, from network or system management scenarios, and/or the like.

The term "compute resource" or simply "resource" at least in some examples refers to an object with a type, associated data, a set of methods that operate on it, and, if applicable, relationships to other resources. Additionally or alternatively, the term "compute resource" or "resource" at least in some examples refers to any physical or virtual component, or usage of such components, of limited availability within a computer system or network. Examples of computing resources include usage/access to, for a period of time, servers, processor(s), storage equipment, memory devices, memory areas, networks, electrical power, input/output (peripheral) devices, mechanical devices, network connections (e.g., channels/links, ports, network sockets, and the like), operating systems, virtual machines (VMs), software/applications, computer files, and/or the like. A "hardware resource" at least in some examples refers to compute, storage, and/or network resources provided by physical hardware element(s). A "virtualized resource" at least in some examples refers to compute, storage, and/or network resources provided by virtualization infrastructure to an application, device, system, and the like. The term "network resource" or "communication resource" at least in some examples refers to resources that are accessible by computer devices/systems via a communications network. The term "system resources" at least in some examples refers to any kind of shared entities to provide services, and may include computing and/or network resources. System resources may be considered as a set of coherent functions, network data objects or services, accessible through a server where such system resources reside on a single host or multiple hosts and are clearly identifiable.

The term "workload" at least in some examples refers to an amount of work performed by a software or hardware element during a period of time or at a particular instant of time. Additionally or alternatively, the term "workload" at least in some examples refers to a software or hardware element that performs some computational work, such as, for example, receiving input(s), performing computation(s), and generating output(s). In some examples, a "workload" is represented as a benchmark, (e.g., a response time, throughput (e.g., how much work is accomplished over a period of time), and/or the like), a memory workload (e.g., an amount of memory space needed for program execution to store temporary or permanent data and to perform intermediate computations), processor workload (e.g., a number of instructions being executed by a processor during a given period of time or at a particular time instant), an I/O workload (e.g., a number of inputs and outputs or system accesses during a given period of time or at a particular time instant), database workloads (e.g., a number of database queries during a period of time), a network-related workload (e.g., a number of network attachments, a number of mobility updates, a number of radio link failures, a number of handovers, an amount of data to be transferred over an air interface, and the like), and/or the like. In various examples, various algorithms can be used to determine a workload and/or workload characteristics, which may be based on any of the aforementioned workload types.

The term "best-effort workload" at least in some examples refers to a software or hardware element that does not have strict deadlines but is provided the best achievable Quality of Service with the resources remaining after all real-time tasks have been completed. The term "deadline" at least in some examples refers to the time when some computation or data must complete or arrive.

The term "isochronous cyclic workload" at least in some examples refers to a code sequence that runs repeatedly (e.g., a "cyclic workload") and has a deadline that each cycle must meet (e.g., "isochronous").

The term "cloud service provider" or "CSP" at least in some examples refers to an organization that operates or otherwise provides cloud resources including, for example, centralized, regional, and/or edge data centers and/or the like. In some examples, the term "cloud computing" refers to computing resources and services offered by a CSP.

The term "data center" at least in some examples refers to a purpose-designed structure that is intended to house multiple high-performance compute and data storage nodes such that a large amount of compute, data storage and network resources are present at a single location. This often entails specialized rack and enclosure systems, suitable heating, cooling, ventilation, security, fire suppression, and power delivery systems. The term may also refer to a compute and data storage node in some contexts. A data center may vary in scale between a centralized or cloud data center (e.g., largest), regional data center, and edge data center (e.g., smallest).

The term "network function" or "NF" at least in some examples refers to a functional block within a network infrastructure that has one or more external interfaces and a defined functional behavior. The term "RAN function" or "RANF" at least in some examples refers to a functional block within a RAN architecture that has one or more external interfaces and a defined behavior related to the operation of a RAN or RAN node. Additionally or alternatively, the term "RAN function" or "RANF" at least in some examples refers to a set of functions and/or NFs that are part of a RAN. The term "Application Function" or "AF" at least in some examples refers to an element or entity that interacts with a 3GPP core network in order to provide services. Additionally or alternatively, the term "Application Function" or "AF" at least in some examples refers to an edge compute node or ECT framework from the perspective of a 5G core network. The term "edge compute function" or "ECF" at least in some examples refers to an element or entity that performs an aspect of an edge computing technology (ECT), an aspect of edge networking technology (ENT), or performs an aspect of one or more edge computing services running over the ECT or ENT. The term "management function" at least in some examples refers to a logical entity playing the roles of a service consumer and/or a service producer. The term "management service" at least in some examples refers to a set of offered management capabilities.

The term "network function virtualization" or "NFV" at least in some examples refers to the principle of separating network functions from the hardware they run on by using virtualization techniques and/or virtualization technologies. The term "virtualized network function" or "VNF" at least in some examples refers to an implementation of an NF that can be deployed on a Network Function Virtualization Infrastructure (NFVI). The term "Network Functions Virtualization Infrastructure Manager" or "NFVI" at least in some examples refers to a totality of all hardware and software components that build up the environment in which VNFs are deployed. The term "Virtualized Infrastructure Manager" or "VIM" at least in some examples refers to a functional block that is responsible for controlling and managing the NFVI compute, storage and network resources, usually within one operator's infrastructure domain.

The term "service consumer" at least in some examples refers to an entity that consumes one or more services. The term "service producer" at least in some examples refers to an entity that offers, serves, or otherwise provides one or more services. The term "service provider" at least in some examples refers to an organization or entity that provides one or more services to at least one service consumer. For purposes of the present disclosure, the terms "service provider" and "service producer" may be used interchangeably even though these terms may refer to difference concepts. Examples of service providers include cloud service provider (CSP), network service provider (NSP), application service provider (ASP) (e.g., Application software service provider in a service-oriented architecture (ASSP)), internet service provider (ISP), telecommunications service provider (TSP), online service provider (OSP), payment service provider (PSP), managed service provider (MSP), storage service providers (SSPs), SAML service provider, and/or the like. At least in some examples, SLAs may specify, for example, particular aspects of the service to be provided including quality, availability, responsibilities, metrics by which service is measured, as well as remedies or penalties should agreed-on service levels not be achieved. The term "SAML service provider" at least in some examples refers to a system and/or entity that receives and accepts authentication assertions in conjunction with a single sign-on (SSO) profile of the Security Assertion Markup Language (SAML) and/or some other security mechanism(s).

The term "virtualization container", "execution container", or "container" at least in some examples refers to a partition of a compute node that provides an isolated virtualized computation environment. The term "OS container" at least in some examples refers to a virtualization container utilizing a shared Operating System (OS) kernel of its host, where the host providing the shared OS kernel can be a physical compute node or another virtualization container. Additionally or alternatively, the term "container" at least in some examples refers to a standard unit of software (or a package) including code and its relevant dependencies, and/or an abstraction at the application layer that packages code and dependencies together. Additionally or alternatively, the term "container" or "container image" at least in some examples refers to a lightweight, standalone, executable software package that includes everything needed to run an application such as, for example, code, runtime environment, system tools, system libraries, and settings.

The term "virtual machine" or "VM" at least in some examples refers to a virtualized computation environment that behaves in a same or similar manner as a physical computer and/or a server. The term "hypervisor" at least in some examples refers to a software element that partitions the underlying physical resources of a compute node, creates VMs, manages resources for VMs, and isolates individual VMs from each other.

The term "Data Network" or "DN" at least in some examples refers to a network hosting data-centric services such as, for example, operator services, the internet, third-party services, or enterprise networks. Additionally or alternatively, a DN at least in some examples refers to service networks that belong to an operator or third party, which are offered as a service to a client or user equipment (UE). DNs are sometimes referred to as "Packet Data Networks" or "PDNs". The term "Local Area Data Network" or "LADN" at least in some examples refers to a DN that is accessible by the UE only in specific locations, that provides connectivity to a specific DNN, and whose availability is provided to the UE.

The term "Internet of Things" or "IoT" at least in some examples refers to a system of interrelated computing devices, mechanical and digital machines capable of transferring data with little or no human interaction, and may involve technologies such as real-time analytics, machine learning and/or AI, embedded systems, wireless sensor networks, control systems, automation (e.g., smarthome, smart building and/or smart city technologies), and the like. IoT devices are usually low-power devices without heavy compute or storage capabilities. The term "Edge IoT devices" at least in some examples refers to any kind of IoT devices deployed at a network's edge.

The term "protocol" at least in some examples refers to a predefined procedure or method of performing one or more operations. Additionally or alternatively, the term "protocol" at least in some examples refers to a common means for unrelated objects to communicate with each other (sometimes also called interfaces). The term "communication protocol" at least in some examples refers to a set of standardized rules or instructions implemented by a communication device and/or system to communicate with other devices and/or systems, including instructions for packetizing/depacketizing data, modulating/demodulating signals, implementation of protocols stacks, and/or the like. In some examples, a "protocol" and/or a "communication protocol" may be represented using a protocol stack, a finite state machine (FSM), and/or any other suitable data structure. The term "standard protocol" at least in some examples refers to a protocol whose specification is published and known to the public and is controlled by a standards body. The term "protocol stack" or "network stack" at least in some examples refers to an implementation of a protocol suite or protocol family. In various implementations, a protocol stack includes a set of protocol layers, where the lowest protocol deals with low-level interaction with hardware and/or communications interfaces and each higher layer adds additional capabilities.

The term "application layer" at least in some examples refers to an abstraction layer that specifies shared communications protocols and interfaces used by hosts in a communications network. Additionally or alternatively, the term "application layer" at least in some examples refers to an abstraction layer that interacts with software applications that implement a communicating component, and may include identifying communication partners, determining resource availability, and synchronizing communication. Examples of application layer protocols include HTTP, HTTPs, File Transfer Protocol (FTP), Dynamic Host Configuration Protocol (DHCP), Internet Message Access Protocol (IMAP), Lightweight Directory Access Protocol (LDAP), MQTT (MQ Telemetry Transport), Remote Authentication Dial-In User Service (RADIUS), Diameter protocol, Extensible Authentication Protocol (EAP), RDMA over Converged Ethernet version 2 (RoCEv2), Real-time Transport Protocol (RTP), RTP Control Protocol (RTCP), Real Time Streaming Protocol (RTSP), SBMV Protocol, Skinny Client Control Protocol (SCCP), Session Initiation Protocol (SIP), Session Description Protocol (SDP), Simple Mail Transfer Protocol (SMTP), Simple Network Management Protocol (SNMP), Simple Service Discovery Protocol (SSDP), Small Computer System Interface (SCSI), Internet SCSI (iSCSI), iSCSI Extensions for RDMA (iSER), Transport Layer Security (TLS), voice over IP (VoIP), Virtual Private Network (VPN), Extensible Messaging and Presence Protocol (XMPP), and/or the like.

The term "session layer" at least in some examples refers to an abstraction layer that controls dialogues and/or connections between entities or elements, and may include establishing, managing and terminating the connections between the entities or elements.

The term "transport layer" at least in some examples refers to a protocol layer that provides end-to-end (e2e) communication services such as, for example, connection-oriented communication, reliability, flow control, and multiplexing. Examples of transport layer protocols include datagram congestion control protocol (DCCP), fiber channel protocol (FBC), Generic Routing Encapsulation (GRE), GPRS Tunneling (GTP), Micro Transport Protocol (µTP), Multipath TCP (MPTCP), MultiPath QUIC (MPQUIC), Multipath UDP (MPUDP), Quick UDP Internet Connections (QUIC), Remote Direct Memory Access (RDMA), Resource Reservation Protocol (RSVP), Stream Control Transmission Protocol (SCTP), transmission control protocol (TCP), user datagram protocol (UDP), and/or the like.

The term "network layer" at least in some examples refers to a protocol layer that includes means for transferring network packets from a source to a destination via one or more networks. Additionally or alternatively, the term "network layer" at least in some examples refers to a protocol layer that is responsible for packet forwarding and/or routing through intermediary nodes. Additionally or alternatively, the term "network layer" or "internet layer" at least in some examples refers to a protocol layer that includes interworking methods, protocols, and specifications that are used to transport network packets across a network. As examples, the network layer protocols include internet protocol (IP), IP security (IPsec), Internet Control Message Protocol (ICMP), Internet Group Management Protocol (IGMP), Open Shortest Path First protocol (OSPF), Routing Information Protocol (RIP), RDMA over Converged Ethernet version 2 (RoCEv2), Subnetwork Access Protocol (SNAP), and/or some other internet or network protocol layer.

The term "link layer" or "data link layer" at least in some examples refers to a protocol layer that transfers data between nodes on a network segment across a physical layer. Examples of link layer protocols include logical link control (LLC), medium access control (MAC), Ethernet, RDMA over Converged Ethernet version 1 (RoCEv1), and/or the like.

The term "transaction layer" at least in some examples refers to a protocol layer that operates at the level of transactions such as, for example, read, write, and/or other transactions. In some examples, the transaction layer's primary responsibility is the assembly and disassembly of transaction layer packets (TLPs). TLPs are used to communicate transactions, such as read and write, as well as certain types of events. In some examples, the transaction layer is responsible for managing credit-based flow control for TLPs. In some examples, every request packet requiring a response packet is implemented as a Split Transaction. In some examples, each packet has a unique ID that enables response packets to be directed to the correct originator. The packet format supports different forms of addressing depending on the type of the transaction (e.g., memory, I/O, Configuration, and Message). Additionally or alternatively, some packets may also have attributes, such as No Snoop, Relaxed Ordering, and ID-Based Ordering (IDO). In some examples, the transaction layer supports four address spaces: it includes the three PCI address spaces (memory, I/O, and configuration) and adds Message Space. In some examples, a message space is used to support various sideband signals, such as interrupts, power-management requests, and so on, as in-band message transactions. In some examples, PCIe message transactions can be considered to be "virtual wires" since their effect is to eliminate the wide array of sideband signals currently used in a platform implementation.

The term "radio resource control", "RRC layer", or "RRC" at least in some examples refers to a protocol layer or sublayer that performs system information handling; paging; establishment, maintenance, and release of RRC connections; security functions; establishment, configuration, maintenance and release of Signaling Radio Bearers (SRBs) and Data Radio Bearers (DRBs); mobility functions/services; QoS management; and some sidelink specific services and functions over the Uu interface (see e.g., 3GPP TS 36.331 v17.3.0 (2023-01-13) ("[TS36331]") and/or 3GPP TS 38.331 v17.3.0 (2023-01-16) ("[TS38331]")).

The term "Service Data Adaptation Protocol", "SDAP layer", or "SDAP" at least in some examples refers to a protocol layer or sublayer that performs mapping between QoS flows and a data radio bearers (DRBs) and marking QoS flow IDs (QFI) in both DL and UL packets (see e.g., 3GPP TS 37.324 v17.0.0 (2022-04-13)).

The term "Packet Data Convergence Protocol", "PDCP layer", or "PDCP" at least in some examples refers to a protocol layer or sublayer that performs transfer user plane or control plane data; maintains PDCP sequence numbers (SNs); header compression and decompression using the Robust Header Compression (ROHC) and/or Ethernet Header Compression (EHC) protocols; ciphering and deciphering; integrity protection and integrity verification; provides timer based SDU discard; routing for split bearers; duplication and duplicate discarding; reordering and in-order delivery; and/or out-of-order delivery (see e.g., 3GPP TS 36.323 v17.3.0 (2023-01-13) and/or 3GPP TS 38.323 v17.3.0 (2023-01-13)).

The term "radio link control layer", "RLC layer", or "RLC" at least in some examples refers to a protocol layer or sublayer that performs transfer of upper layer PDUs; sequence numbering independent of the one in PDCP; error Correction through ARQ; segmentation and/or re-segmentation of RLC SDUs; reassembly of SDUs; duplicate detection; RLC SDU discarding; RLC re-establishment; and/or protocol error detection (see e.g., 3GPP TS 38.322 v17.2.0 (2023-01-13) and 3GPP TS 36.322 v17.0.0 (2022-04-15)).

The term "medium access control protocol", "MAC protocol", or "MAC" at least in some examples refers to a protocol that governs access to the transmission medium in a network, to enable the exchange of data between stations in a network. Additionally or alternatively, the term "medium access control layer", "MAC layer", or "MAC" at least in some examples refers to a protocol layer or sublayer that performs functions to provide frame-based, connectionless-mode (e.g., datagram style) data transfer between stations or devices. Additionally or alternatively, the term "medium access control layer", "MAC layer", or "MAC" at least in some examples refers to a protocol layer or sublayer that performs mapping between logical channels and transport channels; multiplexing/demultiplexing of MAC SDUs belonging to one or different logical channels into/from transport blocks (TB) delivered to/from the physical layer on transport channels; scheduling information reporting; error correction through HARQ (one HARQ entity per cell in case of CA); priority handling between UEs by means of dynamic scheduling; priority handling between logical channels of one UE by means of logical channel prioritization; priority handling between overlapping resources of one UE; and/or padding (see e.g., [IEEE802], 3GPP TS 38.321 v17.2.0 (2022-10-01) and 3GPP TS 36.321 v17.2.0 (2022-10-03)).

The term "physical layer", "PHY layer", or "PHY" at least in some examples refers to a protocol layer or sublayer that includes capabilities to transmit and receive modulated signals for communicating in a communications network (see e.g., [IEEE802], 3GPP TS 38.201 v17.3.0 (2023-01-13) and 3GPP TS 36.201 v17.3.0 (2023-01-13)).

The term "access technology" at least in some examples refers to the technology used for the underlying physical connection to a communication network. The term "radio access technology" or "RAT" at least in some examples refers to the technology used for the underlying physical connection to a radio based communication network. The term "radio technology" at least in some examples refers to technology for wireless transmission and/or reception of electromagnetic radiation for information transfer. The term "RAT type" at least in some examples may identify a transmission technology and/or communication protocol used in an access network. Examples of access technologies include wireless access technologies/RATs, wireline, wireline-cable, wireline broadband forum (wireline-BBF), Ethernet (see e.g., IEEE Standard for Ethernet, IEEE Std 802.3-2018 (31 Aug. 2018) ("[IEEE8023]")) and variants thereof, fiber optics networks (e.g., ITU-T G.651, ITU-T G.652, Optical Transport Network (OTN), Synchronous optical networking (SONET) and synchronous digital hierarchy (SDH), and the like), digital subscriber line (DSL) and variants thereof, Data Over Cable Service Interface Specification (DOCSIS) technologies, hybrid fiber-coaxial (HFC) technologies, and/or the like. Examples of RATs (or RAT types) and/or communications protocols include Advanced Mobile Phone System (AMPS) technologies (e.g., Digital AMPS (D-AMPS), Total Access Communication System (TACS) and variants thereof, such as Extended TACS (ETACS), and the like); Global System for Mobile Communications (GSM) technologies (e.g., Circuit Switched Data (CSD), High-Speed CSD (HSCSD), General Packet Radio Service (GPRS), and Enhanced Data Rates for GSM Evolution (EDGE)); Third Generation Partnership Project (3GPP) technologies (e.g., Universal Mobile Telecommunications System (UMTS) and variants thereof (e.g., UMTS Terrestrial Radio Access (UTRA), Wideband Code Division Multiple Access (W-CDMA), Freedom of Multimedia Access (FOMA), Time Division-Code Division Multiple Access (TD-CDMA), Time Division-Synchronous Code Division Multiple Access (TD-SCDMA), and the like), Generic Access Network (GAN) / Unlicensed Mobile Access (UMA), High Speed Packet Access (HSPA) and variants thereof (e.g., HSPA Plus (HSPA+)), Long Term Evolution (LTE) and variants thereof (e.g., LTE-Advanced (LTE-A), Evolved UTRA (E-UTRA), LTE Extra, LTE-A Pro, LTE LAA, MuLTEfire, and the like), Fifth Generation (5G) or New Radio (NR), narrowband IoT (NB-IOT), 3GPP Proximity Services (ProSe), and/or the like); ETSI RATs (e.g., High Performance Radio Metropolitan Area Network (HiperMAN), Intelligent Transport Systems (ITS) (e.g., ITS-G5, ITS-G5B, ITS-G5C, and the like), and the like); Institute of Electrical and Electronics Engineers (IEEE) technologies and/or WiFi (e.g., IEEE Standard for Local and Metropolitan Area Networks: Overview and Architecture, IEEE Std 802-2014, pp.1-74 (30 Jun. 2014) ("[IEEE802]"), IEEE Standard for Ethernet, IEEE Std 802.3-2018 (31 Aug. 2018) ("[IEEE802.3]"), IEEE Standard for Information Technology--Telecommunications and Information Exchange between Systems - Local and Metropolitan Area Networks--Specific Requirements - Part 11: Wireless LAN Medium Access Control (MAC) and Physical Layer (PHY) Specifications, IEEE Std 802.11-2020, pp.1-4379 (26 Feb. 2021) ("[IEEE80211]"), IEEE Standard for a Precision Clock Synchronization Protocol for Networked Measurement and Control Systems, IEEE Std 1588-2019 (16 Jun. 2020) ("[IEEE1588]"), IEEE Standard for Local and Metropolitan Area Networks- Timing and Synchronization for Time-Sensitive Applications, IEEE Std 802.1AS™-2020 (19 Jun. 2020) ("[IEEE802.1AS]"), IEEE 802.15 technologies (e.g., IEEE Standard for Low-Rate Wireless Networks, IEEE Std 802.15.4-2020, pp.1-800 (23 July 2020) ("[IEEE802154]") and variants thereof (e.g., ZigBee, WirelessHART, MiWi, ISA100.11a, Thread, IPv6 over Low power WPAN (6LoWPAN), and the like), IEEE Standard for Local and metropolitan area networks - Part 15.6: Wireless Body Area Networks, IEEE Std 802.15.6-2012, pp. 1-271 (29 Feb. 2012), and the like), WLAN V2X RATs (e.g., IEEE Standard for Information technology-- Local and metropolitan area networks-- Specific requirements-- Part 11: Wireless LAN Medium Access Control (MAC) and Physical Layer (PHY) Specifications Amendment 6: Wireless Access in Vehicular Environments, IEEE Std 802.11p-2010, pp.1-51 (15 July 2010) ("[IEEE8021 1p]") (which is now part of [IEEE80211]), IEEE Guide for Wireless Access in Vehicular Environments (WAVE) Architecture, IEEE STANDARDS ASSOCIATION, IEEE 1609.0-2019 (10 Apr. 2019) ("[IEEE16090]"), IEEE 802.11bd, Dedicated Short Range Communications (DSRC), and/or the like), Worldwide Interoperability for Microwave Access (WiMAX) (e.g., ), Mobile Broadband Wireless Access (MBWA)/iBurst (e.g., IEEE 802.20 and variants thereof), Wireless Gigabit Alliance (WiGig) standards (e.g., IEEE 802. Had, IEEE 802.1 lay, and the like), and so forth); Integrated Digital Enhanced Network (iDEN) and variants thereof (e.g., Wideband Integrated Digital Enhanced Network (WiDEN)); millimeter wave (mmWave) technologies/standards (e.g., wireless systems operating at 10-300 GHz and above 3GPP 5G); short-range and/or wireless personal area network (WPAN) technologies/standards (e.g., IEEE 802.15 technologies (e.g., as mentioned previously); Bluetooth and variants thereof (e.g., Bluetooth 5.3, Bluetooth Low Energy (BLE), and the like), WiFi-direct, Miracast, ANT/ANT+, Z-Wave, Universal Plug and Play (UPnP), low power Wide Area Networks (LPWANs), Long Range Wide Area Network (LoRA or LoRaWAN^{™}), and the like); optical and/or visible light communication (VLC) technologies/standards (e.g., IEEE Standard for Local and metropolitan area networks--Part 15.7: Short-Range Optical Wireless Communications, IEEE Std 802.15.7-2018, pp.1-407 (23 Apr. 2019), and the like); Sigfox; Mobitex; 3GPP2 technologies (e.g., cdmaOne (2G), Code Division Multiple Access 2000 (CDMA 2000), and Evolution-Data Optimized or Evolution-Data Only (EV-DO); Push-to-talk (PTT), Mobile Telephone System (MTS) and variants thereof (e.g., Improved MTS (IMTS), Advanced MTS (AMTS), and the like); Personal Digital Cellular (PDC); Personal Handy-phone System (PHS), Cellular Digital Packet Data (CDPD); Cellular Digital Packet Data (CDPD); DataTAC; Digital Enhanced Cordless Telecommunications (DECT) and variants thereof (e.g., DECT Ultra Low Energy (DECT ULE), DECT-2020, DECT-5G, and the like); Ultra High Frequency (UHF) communication; Very High Frequency (VHF) communication; and/or any other suitable RAT or protocol. In addition to the aforementioned RATs/standards, any number of satellite uplink technologies may be used for purposes of the present disclosure including, for example, radios compliant with standards issued by the International Telecommunication Union (ITU), or the ETSI, among others. The examples provided herein are thus understood as being applicable to various other communication technologies, both existing and not yet formulated.

The term "channel" at least in some examples refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" at least in some examples refers to a connection between two devices through a RAT for the purpose of transmitting and receiving information.

The term "flow" at least in some examples refers to a sequence of data and/or data units (e.g., datagrams, packets, or the like) from a source entity/element to a destination entity/element. Additionally or alternatively, the terms "flow" or "traffic flow" at least in some examples refer to an artificial and/or logical equivalent to a call, connection, or link. Additionally or alternatively, the terms "flow" or "traffic flow" at least in some examples refer to a sequence of packets sent from a particular source to a particular unicast, anycast, or multicast destination that the source desires to label as a flow; from an upper-layer viewpoint, a flow may include of all packets in a specific transport connection or a media stream, however, a flow is not necessarily 1:1 mapped to a transport connection. Additionally or alternatively, the terms "flow" or "traffic flow" at least in some examples refer to a set of data and/or data units (e.g., datagrams, packets, or the like) passing an observation point in a network during a certain time interval. Additionally or alternatively, the term "flow" at least in some examples refers to a user plane data link that is attached to an association. Examples are circuit switched phone call, voice over IP call, reception of an SMS, sending of a contact card, PDP context for internet access, demultiplexing a TV channel from a channel multiplex, calculation of position coordinates from geopositioning satellite signals, and the like. For purposes of the present disclosure, the terms "traffic flow", "data flow", "dataflow", "packet flow", "network flow", and/or "flow" may be used interchangeably even though these terms at least in some examples refers to different concepts. The term "dataflow" or "data flow" at least in some examples refers to the movement of data through a system including software elements, hardware elements, or a combination of both software and hardware elements. Additionally or alternatively, the term "dataflow" or "data flow" at least in some examples refers to a path taken by a set of data from an origination or source to destination that includes all nodes through which the set of data travels.

The term "flow control" at least in some examples refers to a process, method, or technique of managing the rate of data communication/transmission between two nodes to prevent one or more nodes from being overwhelmed or overloaded. Additionally or alternatively, the term "flow control" at least in some examples refers to a process, method, or technique for communicating receive buffer status from a receiver to a transmitter to prevent receive buffer overflow and allow Transmitter compliance with ordering rules.

The term "stream" or "data stream" at least in some examples refers to a sequence of data elements made available over time. Additionally or alternatively, the term "stream", "data stream", or "streaming" refers to a unidirectional flow of data. Additionally or alternatively, the term "stream", "data stream", or "streaming" refers to a manner of processing in which an object is not represented by a complete data structure of nodes occupying memory proportional to a size of that object, but are processed "on the fly" as a sequence of events. At least in some examples, functions that operate on a stream, which may produce another stream, are referred to as "filters," and can be connected in pipelines, analogously to function composition; filters may operate on one item of a stream at a time, or may base an item of output on multiple input items, such as a moving average or the like.

The term "service" at least in some examples refers to the provision of a discrete function within a system and/or environment. Additionally or alternatively, the term "service" at least in some examples refers to a functionality or a set of functionalities that can be reused.

The term "session" at least in some examples refers to a temporary and interactive information interchange between two or more communicating devices, two or more application instances, between a computer and user, and/or between any two or more entities or elements. Additionally or alternatively, the term "session" at least in some examples refers to a connectivity service or other service that provides or enables the exchange of data between two entities or elements. The term "network session" at least in some examples refers to a session between two or more communicating devices over a network. The term "web session" at least in some examples refers to session between two or more communicating devices over the Internet or some other network. The term "session identifier," "session ID," or "session token" at least in some examples refers to a piece of data that is used in network communications to identify a session and/or a series of message exchanges.

The term "queue" at least in some examples refers to a collection of entities (e.g., data, objects, events, and the like) are stored and held to be processed later. that are maintained in a sequence and can be modified by the addition of entities at one end of the sequence and the removal of entities from the other end of the sequence; the end of the sequence at which elements are added may be referred to as the "back", "tail", or "rear" of the queue, and the end at which elements are removed may be referred to as the "head" or "front" of the queue. Additionally, a queue may perform the function of a buffer, and the terms "queue" and "buffer" may be used interchangeably throughout the present disclosure. The term "enqueue" at least in some examples refers to one or more operations of adding an element to the rear of a queue. The term "dequeue" at least in some examples refers to one or more operations of removing an element from the front of a queue.

The term "channel coding" at least in some examples refers to processes and/or techniques to add redundancy to messages or packets in order to make those messages or packets more robust against noise, channel interference, limited channel bandwidth, and/or other errors. For purposes of the present disclosure, the term "channel coding" can be used interchangeably with the terms "forward error correction" or "FEC"; "error correction coding", "error correction code", or "ECC"; and/or "network coding" or "NC". The term "network coding" at least in some examples refers to processes and/or techniques in which transmitted data is encoded and decoded to improve network performance. The term "code rate" at least in some examples refers to the proportion of a data stream or flow that is useful or non-redundant (e.g., for a code rate of k/n, for every k bits of useful information, the (en)coder generates a total of n bits of data, of which n - k are redundant). The term "systematic code" at least in some examples refers to any error correction code in which the input data is embedded in the encoded output. The term "non-systematic code" at least in some examples refers to any error correction code in which the input data is not embedded in the encoded output. The term "interleaving" at least in some examples refers to a process to rearrange code symbols so as to spread bursts of errors over multiple codewords that can be corrected by ECCs. The term "code word" or "codeword" at least in some examples refers to an element of a code or protocol, which is assembled in accordance with specific rules of the code or protocol.

The term "forward error correction" or "FEC" at least in some examples refers to an error correction technique where a transmitter adds additional bits to data that is/are not actually part of an original message, and when a receiver receives the signal/message, the receiver generates its own set of additional bits; if the two sets of additional bits match, then the receiver can be confident that the original message was received with little or no errors. In some examples, the additional bits are generated using a mathematical algorithm that is designed to be very difficult to guess or predict.

The term "network path" or "path" at least in some examples refers to a data communications feature of a communication system describing the sequence and identity of system components visited by one or more packets, where the components of the path may be either logical or physical. The term "network forwarding path" at least in some examples refers to an ordered list of connection points forming a chain of NFs and/or nodes, along with policies associated to the list.

The term "traffic shaping" at least in some examples refers to a bandwidth management technique that manages data transmission to comply with a desired traffic profile or class of service. Traffic shaping ensures sufficient network bandwidth for time-sensitive, critical applications using policy rules, data classification, queuing, QoS, and other techniques. The term "throttling" at least in some examples refers to the regulation of flows into or out of a network, or into or out of a specific device or element.

The term "network address" at least in some examples refers to an identifier for a node or host in a computer network, and may be a unique identifier across a network and/or may be unique to a locally administered portion of the network. Examples of identifiers and/or network addresses can include am application identifier, Bluetooth hardware device address (BD_ADDR), a cellular network address (e.g., Access Point Name (APN), AMF identifier (ID), AF-Service-Identifier, Edge Application Server (EAS) ID, Data Network Access Identifier (DNAI), Data Network Name (DNN), EPS Bearer Identity (EBI), Equipment Identity Register (EIR) and/or 5G-EIR, Extended Unique Identifier (EUI), Group ID for Network Selection (GIN), Generic Public Subscription Identifier (GPSI), Globally Unique AMF Identifier (GUAMI), Globally Unique Temporary Identifier (GUTI) and/or 5G-GUTI, Radio Network Temporary Identifier (RNTI) and variants thereof (see e.g., clause 8.1 of 3GPP TS 38.300 v17.3.0 (2023-01-13) ("[TS38300]")), International Mobile Equipment Identity (IMEI), IMEI Type Allocation Code (IMEA/TAC), International Mobile Subscriber Identity (IMSI), IMSI software version (IMSISV), permanent equipment identifier (PEI), Local Area Data Network (LADN) DNN, Mobile Subscriber Identification Number (MSIN), Mobile Subscriber/Station ISDN Number (MSISDN), Network identifier (NID), Network Slice Instance (NSI) ID, Permanent Equipment Identifier (PEI), Public Land Mobile Network (PLMN) ID, QoS Flow ID (QFI) and/or 5G QoS Identifier (5QI), RAN ID, Routing Indicator, SMS Function (SMSF) ID, Stand-alone Non-Public Network (SNPN) ID, Subscription Concealed Identifier (SUCI), Subscription Permanent Identifier (SUPI), Temporary Mobile Subscriber Identity (TMSI) and variants thereof, UE Access Category and Identity, and/or other cellular network related identifiers), Closed Access Group Identifier (CAG-ID), drivers license number, Global Trade Item Number (GTIN) (e.g., Australian Product Number (APN), EPC, European Article Number (EAN), Universal Product Code (UPC), and the like), email address, Enterprise Application Server (EAS) ID, an endpoint address, an Electronic Product Code (EPC) as defined by the EPCglobal Tag Data Standard, Fully Qualified Domain Name (FQDN), flow ID and/or flow hash, hash value, index, internet protocol (IP) address in an IP network (e.g., IP version 4 (IPv4), IP version 6 (IPv6), and the like), an internet packet exchange (IPX) address, LAN ID, a MAC address, personal area network (PAN) ID, port number (e.g., TCP port number, UDP port number, and the like), price lookup code (PLC), product key, QUIC connection ID, RFID tag, sequence number, service set identifier (SSID) and variants thereof, screen name, serial number, stock keeping unit (SKU), socket address, social security number (SSN), telephone number (e.g., in a public switched telephone network (PTSN)), unique identifier (UID) (e.g., including globally UID, universally unique identifier (UUID) (e.g., as specified in ISO/IEC 11578:1996), and the like), a Universal Resource Locator (URL) and/or Universal Resource Identifier (URI), user name (e.g., ID for logging into a service provider platform, such as a social network and/or some other service), vehicle identification number (VIN), Virtual LAN (VLAN) ID, X.21 address, an X.25 address, Zigbee^{®} ID, Zigbee^{®} Device Network ID, and/or any other suitable network address and components thereof. The term "endpoint address" at least in some examples refers to an address used to determine the host/authority part of a target URI, where the target URI is used to access an NF service (e.g., to invoke service operations) of an NF service producer or for notifications to an NF service consumer. The term "universally unique identifier" or "UUID" at least in some examples refers to a number used to identify information in computer systems. In some examples, a UUID includes 128-bit numbers and/or are represented as 32 hexadecimal digits displayed in five groups separated by hyphens in the following format: "xxxxxxxxxxxx-Mxxx-Nxxx-xxxxxxxxxxxx" where the four-bit M and the 1 to 3 bit N fields code the format of the UUID itself. Additionally or alternatively, the term "universally unique identifier" or "UUID" at least in some examples refers to a "globally unique identifier" and/or a "GUID".

The term "port" at least in some examples refers to a communication endpoint, a virtual data connection between two or more entities, and/or a virtual point where network connections start and end. Additionally or alternatively, a "port" at least in some examples is associated with a specific process or service. Additionally or alternatively, the term "port" at least in some examples refers to a physical or logical interface between a component and a PCIe link. Additionally or alternatively, the term "port" at least in some examples refers to a group of transmitters and receivers located or disposed on the same chip that define a link.

The term "exterior gateway protocol" or "EGP" at least in some examples refers to a type of routing protocol used to exchange routing information between autonomous systems. In some examples, EGPs rely on IGPs to resolve routes within an autonomous system. Examples of EGPs include Exterior Gateway Protocol (EGP) and Border Gateway Protocol (BGP).

The term "forwarding table", "Forwarding Information Base", or "FIB" at least in some examples refers to a table or other data structure that indicates where a network node (or network interface circuitry) should forward a packet. Additionally or alternatively, the term "forwarding table", "Forwarding Information Base", or "FIB" at least in some examples refers to a dynamic table or other data structure that maps network addresses (e.g., MAC addresses and/or the like) to ports.

The term "forwarding treatment" at least in some examples refers to the precedence, preferences, and/or prioritization a packet belonging to a particular dataflow receives in relation to other traffic of other dataflows. Additionally or alternatively, the term "forwarding treatment" at least in some examples refers to one or more parameters, characteristics, and/or configurations to be applied to packets belonging to a dataflow when processing the packets for forwarding. Examples of such characteristics may include resource type (e.g., non-guaranteed bit rate (GBR), GBR, delay-critical GBR, and the like); priority level; class or classification; packet delay budget; packet error rate; averaging window; maximum data burst volume; minimum data burst volume; scheduling policy/weights; queue management policy; rate shaping policy; link layer protocol and/or RLC configuration; admission thresholds; and the like. In some implementations, the term "forwarding treatment" may be referred to as "Per-Hop Behavior" or "PHB".

The term "hash table" at least in some examples refers to a data structure that maps keys to values, wherein a hash function is used to compute an index (also called a hash code) into an array of buckets or slots from which a desired value can be found, and during lookup, the key is hashed and the resulting hash indicates where the corresponding value is stored. In some examples, any suitable hashing scheme can be used to construct or build a hash table such as, for example, a perfect hashing scheme, coalesced hashing, Cuckoo hashing, hopscotch hashing, robin hood hashing, jHash, and/or the like.

The term "interior gateway protocol" or "IGP" at least in some examples refers to a type of routing protocol used to exchange routing table information between gateways, routers, and/or other network nodes within an autonomous system, wherein the routing information can be used to route network layer packets (e.g., IP and/or the like). Examples of IGPs include distance-vector routing protocols (e.g., Routing Information Protocol (RIP), RIP version 2 (RIPv2), RIP next generation (RIPng), Interior Gateway Routing Protocol (IGRP), and the like), advanced distance-vector routing protocols (e.g., Enhanced Interior Gateway Routing Protocol (EIGRP)), and link-state routing protocols (e.g., Open Shortest Path First (OSPF), Intermediate System to Intermediate System (IS-IS), and the like).

The term "lookup table" or "LUT" at least in some examples refers to a data structure that replaces runtime computation with a relatively simpler indexing operation. Additionally or alternatively, the term "lookup table" or "LUT" at least in some examples refers to a data structure (e.g., array or the like) that maps input values to output values. In some examples, an LUT is arranged as a set of key-value pairs, where the keys are the data items being searched (e.g., looked up) and the values are either the actual data or pointers to where the data are located. In other examples, an LUT is arranged as a set of data items only where the location in the table and the key are synonymous. In some examples, suitable function can be approximated or estimated to calculate the location of data items in an LUT. Hash tables are somewhat different than LUTs in that, to retrieve a value v with a key k, a hash table would store the value v in the slot h(k) where h is a hash function (e.g., key k is used to compute the slot), whereas in LUTs the value v may be stored in slot k. The term "lookup operation" or "LUT operation" at least in some examples refers to an operation, process, procedure, method, function, algorithm, and/or other means of retrieving an output values from an LUT for a set of input values.

The term "network path" or "path" at least in some examples refers to a data communications feature of a communication system describing the sequence and identity of system components visited by one or more packets, where the components of the path may be either logical or physical. The term "network forwarding path" at least in some examples refers to an ordered list of connection points forming a chain of NFs and/or nodes, along with policies associated to the list.

The term "packet routing" or "routing" at least in some examples refers to a mechanism, technique, algorithm, method, and/or process of selecting a path for traffic in a network and/or between or across multiple networks. Additionally or alternatively, the term "packet routing" or "routing" at least in some examples refers to packet forwarding mechanisms, techniques, algorithms, methods, and/or decision making processes that direct(s) network/data packets from a source node toward a destination node through a set of intermediate nodes. Additionally or alternatively, the term "packet routing" or "routing" at least in some examples refers to a mechanism, technique, algorithm, method, and/or process of selecting a network path for traffic in a network and/or across multiple networks.

The term "path selection" at least in some examples refers to a mechanism, technique, algorithm, method, and/or process to select a network path over which one or more packets are to be routed. Additionally or alternatively, the term "path selection" at least in some examples refers to a mechanism, technique, or process for applying a routing metric to a set of routes or network paths to select and/or predict a most optimal route or network path among the set of routes/network paths. In some examples, the term "routing algorithm" refers to an algorithm that is used to perform path selection.

The term "reliability forwarding treatment" or "reliability treatment" refers to the manner in which packets belonging to a dataflow are handled to provide a certain level of reliability to that dataflow including, for example, a probability of success of packet delivery, QoS or Quality of Experience (QoE) over a period of time (or unit of time), admission control capabilities, a particular coding scheme, and/or coding rate for arrival data bursts.

The term "routing metric" or "router metric" at least in some examples refers to a configuration value used by a router or other network node to make routing and/or forwarding decisions. In some examples, a "routing metric" or "router metric" can be a field in a routing table. Additionally or alternatively, a "routing metric" or "router metric" is computed by a routing algorithm, and can include various types of data/information and/or metrics such as, for example, bandwidth, delay, hop count, path cost, load, MTU size, reliability, communication costs, and/or any other measurements or metrics such as any of those discussed herein.

The term "routing protocol" at least in some examples refers to a mechanism, technique, algorithm, method, and/or process that specifies how routers and/or other network nodes communicate with each other to distribute information. Additionally or alternatively, the term "routing protocol" at least in some examples refers to mechanism, technique, method, and/or process to select routes between nodes in a computer network.

The term "routing table", "Routing Information Base", or "RIB" at least in some examples refers to a table or other data structure in a router or other network node that lists the routes to one or more network nodes (e.g., destination nodes), and may include metrics (e.g., distances and/or the like) associated with respective routes. In some examples, a routing table contains information about the topology of the network immediately around a network node.

The term "time to live" (or "TTL") or "hop limit" at least in some examples refers to a mechanism which limits the lifespan or lifetime of data in a computer or network. TTL may be implemented as a counter or timestamp attached to or embedded in the data. Once the prescribed event count or timespan has elapsed, data is discarded or revalidated.

The term "application" or "app" at least in some examples refers to a computer program designed to carry out a specific task other than one relating to the operation of the computer itself. Additionally or alternatively, term "application" or "app" at least in some examples refers to a complete and deployable package, environment to achieve a certain function in an operational environment.

The term "process" at least in some examples refers to an instance of a computer program that is being executed by one or more threads. In some implementations, a process may be made up of multiple threads of execution that execute instructions concurrently.

The term "thread of execution" or "thread" at least in some examples refers to the smallest sequence of programmed instructions that can be managed independently by a scheduler. The term "lightweight thread" or "light-weight thread" at least in some examples refers to a computer program process and/or a thread that can share address space and resources with one or more other threads, reducing context switching time during execution. In some implementations, term "lightweight thread" or "light-weight thread" can be referred to or used interchangeably with the terms "picothread", "strand", "tasklet", "fiber", "task", or "work item" even though these terms may refer to difference concepts. The term "fiber" at least in some examples refers to a lightweight thread that shares address space with other fibers, and uses cooperative multitasking (whereas threads typically use preemptive multitasking).

The term "exception" at least in some examples refers to an event that can cause a currently executing program to be suspended. Additionally or alternatively, the term "exception" at least in some examples refers to an exception is an event that typically occurs when an instruction causes an error. Additionally or alternatively, the term "exception" at least in some examples refers to an event or a set of circumstances for which executing code will terminate normal operation. The term "exception" at least in some examples can also be referred to as an "interrupt."

The term "interrupt" at least in some examples refers to a signal or request to interrupt currently executing code (when permitted) so that events can be processed in a timely manner. If the interrupt is accepted, the processor will suspend its current activities, save its state, and execute an interrupt handler (or an interrupt service routine (ISR)) to deal with the event. The term "masking an interrupt" or "masked interrupt" at least in some examples refers to disabling an interrupt, and the term "unmasking an interrupt" or "unmasked interrupt" at least in some examples refers to enabling an interrupt. In some implementations, a processor may have an internal interrupt mask register to enable or disable specified interrupts.

The term "algorithm" at least in some examples refers to an unambiguous specification of how to solve a problem or a class of problems by performing calculations, input/output operations, data processing, automated reasoning tasks, and/or the like.

The term "application programming interface" or "API" at least in some examples refers to a set of subroutine definitions, communication protocols, and tools for building software. Additionally or alternatively, the term "application programming interface" or "API" at least in some examples refers to a set of clearly defined methods of communication among various components. In some examples, an API may be defined or otherwise used for a web-based system, operating system, database system, computer hardware, software library, and/or the like.

The term "software component" at least in some examples refers to a software package, web service, web resource, module, application, algorithm, and/or another collection of elements, or combination(s) therefore, that encapsulates a set of related functions (or data).

The term "filter" at least in some examples refers to computer
program, subroutine, or other software element capable of processing a stream, data flow, or other collection of data, and producing another stream. In some implementations, multiple filters can be strung together or otherwise connected to form a pipeline.

The terms "instantiate," "instantiation," and the like at least in some examples refers to the creation of an instance. An "instance" also at least in some examples refers to a concrete occurrence of an object, which may occur, for example, during execution of program code.

The term "memory address" at least in some examples refers to a reference to a specific memory location, which can be represented as a sequence of digits and/or characters. The term "physical address" at least in some examples refers to a memory location, which may be a particular memory cell or block in main memory and/or primary storage device(s), or a particular register in a memory-mapped I/O device. In some examples, a "physical address" may be represented in the form of a binary number, and in some cases a "physical address" can be referred to as a "binary address" or a "real address". The term "logical address" or "virtual address" at least in some examples refers to an address at which an item (e.g., a memory cell, storage element, network host, and/or the like) appears to reside from the perspective of an access agent or requestor. For purposes of the present disclosure, the term "memory address" refers to a physical address, a logical address, and/or a virtual address unless the context dictates otherwise. The term "address space" at least in some examples refers to a range of discrete addresses, where each address in the address space corresponds to a network host, peripheral device, disk sector, a memory cell, and/or other logical or physical entity. The term "virtual address space" or "VAS" at least in some examples refers to the set of ranges of virtual addresses that are made available to an application, process, service, operating system, device, system, or other entity. The term "virtual memory" or "virtual storage" at least in some examples refers to a memory management technique that provides an abstraction of memory/storage resources that are actually available on a given machine, which creates the illusion to users of a very large (main) memory. Additionally or alternatively, the "virtual memory" or "virtual storage" at least in some examples refers to an address mapping between applications and hardware memory.

The term "pointer" at least in some examples refers to an object that stores a memory address. This can be that of another value located in computer memory, or in some cases, that of memory-mapped computer hardware. In some examples, a pointer references a location in memory, and obtaining the value stored at that location is known as dereferencing the pointer.

The term "cycle time" at least in some examples refers to the amount of time allotted to complete the cyclic workload. The term "cycles per instruction" or "CPI" at least in some examples refers to the number of clock cycles required to execute an average instruction. In some examples, the "cycles per instruction" or "CPI" is the reciprocal or the multiplicative inverse of the throughput or instructions per cycle (IPC). The term "instructions per cycle" or "IPC" at least in some examples refers to the average number of instructions executed during a clock cycle, such as the clock cycle of a processor or controller. In some examples, the "instructions per cycle" or "IPC" is the reciprocal or the multiplicative inverse of the cycles per instruction (CPI). The term "clock" at least in some examples refers to a physical device that is capable of providing a measurement of the passage of time. The term "duty cycle" at least in some examples refers to the fraction of one period in which a signal or system is active. The term "cycles per transaction" or "CPT" at least in some examples refers to the number of clock cycles required to execute an average transaction. In some examples, the "cycles per transaction" or "CPT" is the reciprocal or the multiplicative inverse of the throughput or transactions per cycle (TPC). The term "transactions per cycle" or "TPC" at least in some examples refers to the average number of transactions executed during a clock cycle or duty cycle. In some examples, the "transactions per cycle" or "TPC" is the reciprocal or the multiplicative inverse of the cycles per transaction (CPT). The term "transaction" at least in some examples refers to a unit of logic or work performed on or within a memory (sub)system, a database management system, and/or some other system or model. In some examples, an individual "transaction" can involve one or more operations. The term "transactional memory" at least in some examples refers to a model for controlling concurrent memory accesses to a memory (including shared memory). The term "worst-case execution time" or "WCET" at least in some examples refers to the maximum measured latency of the compute portion of an application, measured across many multiple iterations of a task. In some examples, WCET can be related to the deterministic reliability of a task by expressing the number of WCET events relative to the number of desired execution time events, or the "number of nines" (e.g., a deterministic reliability of three nines equates to meeting the desired execution deadline 999 out of 1000 times or 99.9% of the time).

The term "data access stride" or "stride" at least in some examples refers to the number of locations in memory between beginnings of successive storage elements, which are measured in a suitable data units such as bytes or the like. In some examples, the term "data access stride" or "stride" may also be referred to as a "unit stride", an "increment", "pitch", or "step size". Additionally or alternatively, the term "stride" at least in some examples refers to the number of pixels by which the window moves after each operation in a convolutional or a pooling operation of a CNN. The term "memory access pattern" or "access pattern" at least in some examples refers to a pattern with which a system or program reads and writes data to/from a memory device or location of a memory or storage device. Examples of memory access patterns include sequential, strided, linear, nearest neighbor, spatially coherent, scatter, gather, gather and scatter, and random.

The terms "configuration", "policy", "ruleset", and/or "operational parameters", at least in some examples refer to a machine-readable information object that contains instructions, conditions, parameters, and/or criteria that are relevant to a device, system, or other element/entity.

The term "datagram" at least in some examples refers to a basic transfer unit associated with a packet-switched network; a datagram may be structured to have header and payload sections. The term "datagram" at least in some examples may be synonymous with any of the following terms, even though they may refer to different aspects: "data unit", a "protocol data unit" or "PDU", a "service data unit" or "SDU", "frame", "packet", a "network packet", "segment", "block", "cell", "chunk", "Type Length Value" or "TLV", "transaction layer packet" or "TLP", "message", and/or the like. Examples of datagrams, network packets, and the like, include internet protocol (IP) packet, Internet Control Message Protocol (ICMP) packet, UDP packet, TCP packet, SCTP packet, ICMP packet, Ethernet frame, RRC messages/packets, SDAP PDU, SDAP SDU, PDCP PDU, PDCP SDU, MAC PDU, MAC SDU, BAP PDU. BAP SDU, RLC PDU, RLC SDU, WiFi frames as discussed in a [IEEE802] protocol/standard (e.g., [IEEE80211] or the like), Type Length Value (TLV), and/or other like data structures. Additionally or alternatively, the term "packet" at least in some examples refers to a fundamental unit of information transfer that includes, for example, a TLP prefix, followed by a header and in some cases, followed by a data payload. Additionally or alternatively, the term "transaction layer packet" or "TLP" at least in some examples refers to a packet generated in the transaction layer to convey a request or completion. Additionally or alternatively, the term "message" at least in some examples refers to a TLP used to communicate information outside of the Memory, I/O, and configuration spaces.

The term "information element" or "IE" at least in some examples refers to a structural element containing one or more fields. Additionally or alternatively, the term "information element" or "IE" at least in some examples refers to a field or set of fields defined in a standard or specification that is used to convey data and/or protocol information.

The term "field" at least in some examples refers to individual contents of an information element, or a data element that contains content. The term "data frame", "data field", or "DF" at least in some examples refers to a data type that contains more than one data element in a predefined order. The term "data element" or "DE" at least in some examples refers to a data type that contains one single data. Additionally or alternatively, the term "data element" at least in some examples refers to an atomic state of a particular object with at least one specific property at a certain point in time, and may include one or more of a data element name or identifier, a data element definition, one or more representation terms, enumerated values or codes (e.g., metadata), and/or a list of synonyms to data elements in other metadata registries. Additionally or alternatively, a "data element" at least in some examples refers to a data type that contains one single data. Data elements may store data, which may be referred to as the data element's content (or "content items"). Content items may include text content, attributes, properties, and/or other elements referred to as "child elements." Additionally or alternatively, data elements may include zero or more properties and/or zero or more attributes, each of which may be defined as database objects (e.g., fields, records, and the like), object instances, and/or other data elements. An "attribute" at least in some examples refers to a markup construct including a name-value pair that exists within a start tag or empty element tag. Attributes contain data related to its element and/or control the element's behavior.

The term "reference" at least in some examples refers to data useable to locate other data and may be implemented a variety of ways (e.g., a pointer, an index, a handle, a key, an identifier, a hyperlink, and/or the like).

The term "database" at least in some examples refers to an organized collection of data stored and accessed electronically. Databases at least in some examples can be implemented according to a variety of different database models, such as relational, non-relational (also referred to as "schema-less" and "NoSQL"), graph, columnar (also referred to as extensible record), object, tabular, tuple store, and multi-model. Examples of non-relational database models include key-value store and document store (also referred to as document-oriented as they store document-oriented information, which is also known as semi-structured data). A database may comprise one or more database objects that are managed by a database management system (DBMS). The term "database object" at least in some examples refers to any representation of information that is in the form of an object, attribute-value pair (AVP), key-value pair (KVP), tuple, and the like, and may include variables, data structures, functions, methods, classes, database records, database fields, database entities, associations between data and/or database entities (also referred to as a "relation"), blocks in block chain implementations, and links between blocks in block chain implementations. Furthermore, a database object may include a number of records, and each record may include a set of fields. A database object can be unstructured or have a structure defined by a DBMS (a standard database object) and/or defined by a user (a custom database object). In some implementations, a record may take different forms based on the database model being used and/or the specific database object to which it belongs. For example, a record may be: 1) a row in a table of a relational database; 2) a JavaScript Object Notation (JSON) object; 3) an Extensible Markup Language (XML) document; 4) a KVP; and the like.

The term "data set" or "dataset" at least in some examples refers to a collection of data; a "data set" or "dataset" may be formed or arranged in any type of data structure. In some examples, one or more characteristics can define or influence the structure and/or properties of a dataset such as the number and types of attributes and/or variables, and various statistical measures (e.g., standard deviation, kurtosis, and/or the like). The term "data structure" at least in some examples refers to a data organization, management, and/or storage format. Additionally or alternatively, the term "data structure" at least in some examples refers to a collection of data values, the relationships among those data values, and/or the functions, operations, tasks, and the like, that can be applied to the data. Examples of data structures include primitives (e.g., Boolean, character, floating-point numbers, fixed-point numbers, integers, reference or pointers, enumerated type, and/or the like), composites (e.g., arrays, records, strings, union, tagged union, and/or the like), abstract data types (e.g., data container, list, tuple, associative array, map, dictionary, set (or dataset), multiset or bag, stack, queue, graph (e.g., tree, heap, and the like), and/or the like), routing table, symbol table, quad-edge, blockchain, purely-functional data structures (e.g., stack, queue, (multi)set, random access list, hash consing, zipper data structure, and/or the like).

The term "authorization" at least in some examples refers to a prescription that a particular behavior shall not be prevented. The term "authentication" at least in some embodiments refers to a process of proving or verifying an identity. Additionally or alternatively, the term "authentication" at least in some embodiments refers to a mechanism by which a computer system checks or verifies that a user or entity is really the user or entity being claimed. Examples of the authentication and/or authorization techniques include using API keys, basic access authentication ("Basic Auth"), Open Authorization (OAuth), hash-based message authentication codes (HMAC), Kerberos protocol, OpenID, WebID, and/or other authentication and/or authorization techniques.

The term "cryptographic mechanism" at least in some examples refers to any cryptographic protocol and/or cryptographic algorithm. Examples of cryptographic mechanisms include a cryptographic hash algorithm, such as a function in the Secure Hash Algorithm (SHA) 2 set of cryptographic hash algorithms (e.g., SHA-226, SHA-256, SHA-512, and the like), SHA 3, and so forth, or any type of keyed or unkeyed cryptographic hash function and/or any other function discussed herein; an elliptic curve cryptographic (ECC) algorithm (e.g., Elliptic Curve cryptography Key Agreement algorithm (ECKA) algorithm, Elliptic Curve cryptography Digital Signature Algorithm (ECDSA), Lenstra elliptic-curve factorization or elliptic-curve factorization method (ECM), Menezes-Qu-Vanstone (MQV) or elliptic curve MQV (ECMQV), Elliptic Curve Diffie-Hellman (ECDH) key agreement, Elliptic Curve Integrated Encryption Scheme (ECIES) or Elliptic Curve Augmented Encryption Scheme, Edwards-curve Digital Signature Algorithm (EdDSA), and/or the like); Rivest-Shamir-Adleman (RSA) cryptography; Merkle signature scheme, advanced encryption system (AES) algorithm; a triple data encryption algorithm (3DES); Quantum cryptography algorithms; and/or the like. Additionally or alternatively, the term "cryptographic protocol" at least in some examples refers to a sequence of steps precisely specifying the actions required of two or more entities to achieve specific security objectives (e.g., cryptographic protocol for key agreement). Additionally or alternatively, the term "cryptographic algorithm" at least in some examples refers to an algorithm specifying the steps followed by a single entity to achieve specific security objectives (e.g., cryptographic algorithm for symmetric key encryption).

The term "cryptographic hash function", "hash function", or "hash") at least in some examples refers to a mathematical algorithm that maps data of arbitrary size (sometimes referred to as a "message") to a bit array of a fixed size (sometimes referred to as a "hash value", "hash", or "message digest"). A cryptographic hash function is usually a one-way function, which is a function that is practically infeasible to invert.

The term "cryptographic key" or "key "in cryptography at least in some examples refers to a piece of information, usually a string of numbers or letters that are stored in a file, which, when processed through a cryptographic algorithm can encode or decode cryptographic data. The term "symmetric-key algorithm" at least in some examples refers to a cryptographic algorithm that uses the same cryptographic key for both the encryption of plaintext and the decryption of ciphertext; the keys may be identical, or there may be a simple transformation to go between the two keys.

The term "encryption" at least in some examples refers to a process of encoding information wherein the original representation of information (referred to as "plaintext") into an alternative form (referred to as "ciphertext"). In some examples, an encryption scheme includes use of a pseudo-random encryption key generated by a cryptographic mechanism or some other algorithm to generate an encryption key, which can be used to encrypt and/or decrypt the plaintext.

The term "integrity" at least in some examples refers to a mechanism that assures that data has not been altered in an unapproved way. Examples of cryptographic mechanisms that can be used for integrity protection include digital signatures, message authentication codes (MAC), and secure hashes.

The term "public-key cryptography" or "asymmetric cryptography" at least in some examples refers to a cryptographic system that use pairs of related keys including, for example, a public key used for generating ciphertext, and a corresponding private key to decrypt the ciphertext to obtain the original message (e.g., plaintext); in some examples, these key pairs are generated with cryptographic algorithms based on one-way functions.

The term "signature" or "digital signature" at least in some examples refers to a mathematical scheme, process, or method for verifying the authenticity of a digital message or information object (e.g., an electronic document or other data structure).

The term "verification" at least in some examples refers to a process, method, function, or any other means of establishing the correctness of information or data.

The term "artificial intelligence" or "AI" at least in some examples refers to any intelligence demonstrated by machines, in contrast to the natural intelligence displayed by humans and other animals. Additionally or alternatively, the term "artificial intelligence" or "AI" at least in some examples refers to the study of "intelligent agents" and/or any device that perceives its environment and takes actions that maximize its chance of successfully achieving a goal.

The terms "artificial neural network", "neural network", or "NN" refer to an ML technique comprising a collection of connected artificial neurons or nodes that (loosely) model neurons in a biological brain that can transmit signals to other arterial neurons or nodes, where connections (or edges) between the artificial neurons or nodes are (loosely) modeled on synapses of a biological brain. The artificial neurons and edges typically have a weight that adjusts as learning proceeds. The weight increases or decreases the strength of the signal at a connection. Neurons may have a threshold such that a signal is sent only if the aggregate signal crosses that threshold. The artificial neurons can be aggregated or grouped into one or more layers where different layers may perform different transformations on their inputs. Signals travel from the first layer (the input layer), to the last layer (the output layer), possibly after traversing the layers multiple times. NNs are usually used for supervised learning, but can be used for unsupervised learning as well. Examples of NNs include deep NN (DNN), feed forward NN (FFN), deep FNN (DFF), convolutional NN (CNN), deep CNN (DCN), deconvolutional NN (DNN), a deep belief NN, a perception NN, recurrent NN (RNN) (e.g., including Long Short Term Memory (LSTM) algorithm, gated recurrent unit (GRU), echo state network (ESN), and the like), spiking NN (SNN), deep stacking network (DSN), Markov chain, perception NN, generative adversarial network (GAN), transformers, stochastic NNs (e.g., Bayesian Network (BN), Bayesian belief network (BBN), a Bayesian NN (BNN), Deep BNN (DBNN), Dynamic BN (DBN), probabilistic graphical model (PGM), Boltzmann machine, restricted Boltzmann machine (RBM), Hopfield network or Hopfield NN, convolutional deep belief network (CDBN), and the like), Linear Dynamical System (LDS), Switching LDS (SLDS), Optical NNs (ONNs), an NN for reinforcement learning (RL) and/or deep RL (DRL), and/or the like.

The term "mathematical model" at least in some examples refer to a system of postulates, data, and inferences presented as a mathematical description of an entity or state of affairs including governing equations, assumptions, and constraints. The term "statistical model" at least in some examples refers to a mathematical model that embodies a set of statistical assumptions concerning the generation of sample data and/or similar data from a population; in some examples, a "statistical model" represents a data-generating process. The term "machine learning" or "ML" at least in some examples refers to the use of computer systems to optimize a performance criterion using example (training) data and/or past experience. ML involves using algorithms to perform specific task(s) without using explicit instructions to perform the specific task(s), and/or relying on patterns, predictions, and/or inferences. ML uses statistics to build ML model(s) (also referred to as "models") in order to make predictions or decisions based on sample data (e.g., training data). The term "machine learning model" or "ML model" at least in some examples refers to an application, program, process, algorithm, and/or function that is capable of making predictions, inferences, or decisions based on an input data set and/or is capable of detecting patterns based on an input data set. In some examples, a "machine learning model" or "ML model" is trained on a training data to detect patterns and/or make predictions, inferences, and/or decisions. In some examples, a "machine learning model" or "ML model" is based on a mathematical and/or statistical model. For purposes of the present disclosure, the terms "ML model", "AI model", "AI/ML model", and the like may be used interchangeably. The term "machine learning algorithm" or "ML algorithm" at least in some examples refers to an application, program, process, algorithm, and/or function that builds or estimates an ML model based on sample data or training data. Additionally or alternatively, the term "machine learning algorithm" or "ML algorithm" at least in some examples refers to a program, process, algorithm, and/or function that learns from experience w.r.t some task(s) and some performance measure(s)/metric(s), and an ML model is an object or data structure created after an ML algorithm is trained with training data. For purposes of the present disclosure, the terms "ML algorithm", "AI algorithm", "AI/ML algorithm", and the like may be used interchangeably. Additionally, although the term "ML algorithm" may refer to different concepts than the term "ML model," these terms may be used interchangeably for the purposes of the present disclosure. The term "machine learning application" or "ML application" at least in some examples refers to an application, program, process, algorithm, and/or function that contains some AI/ML model(s) and application-level descriptions. Additionally or alternatively, the term "machine learning application" or "ML application" at least in some examples refers to a complete and deployable application and/or package that includes at least one ML model and/or other data capable of achieving a certain function and/or performing a set of actions or tasks in an operational environment. For purposes of the present disclosure, the terms "ML application", "AI application", "AI/ML application", and the like may be used interchangeably.

The term "fabrication" at least in some examples refers to the creation of a metal structure using fabrication means. The term "fabrication means" as used herein refers to any suitable tool or machine that is used during a fabrication process and may involve tools or machines for cutting (e.g., using manual or powered saws, shears, chisels, routers, torches including handheld torches such as oxy-fuel torches or plasma torches, and/or computer numerical control (CNC) cutters including lasers, mill bits, torches, water jets, routers, and the like), bending (e.g., manual, powered, or CNC hammers, pan brakes, press brakes, tube benders, roll benders, specialized machine presses, and the like), assembling (e.g., by welding, soldering, brazing, crimping, coupling with adhesives, riveting, using fasteners, and the like), molding or casting (e.g., die casting, centrifugal casting, injection molding, extrusion molding, matrix molding, three-dimensional (3D) printing techniques including fused deposition modeling, selective laser melting, selective laser sintering, composite filament fabrication, fused filament fabrication, stereolithography, directed energy deposition, electron beam freeform fabrication, and the like), and PCB and/or semiconductor manufacturing techniques (e.g., silk-screen printing, photolithography, photoengraving, PCB milling, laser resist ablation, laser etching, plasma exposure, atomic layer deposition (ALD), molecular layer deposition (MLD), chemical vapor deposition (CVD), rapid thermal processing (RTP), and/or the like).

The term "etch" or "etching" at least in some examples refers to a process in which a controlled quantity or thickness of material is removed (often selectively) from a surface by chemical reaction, electrolysis, or other means. The term "plasma etching" at least in some examples refers to a process in which material is removed by a reaction with chemically active radicals created by an ion bombardment in a glow discharge. In some cases, a mask is usually used in order to remove only selected areas.

The term "mask" at least in some examples refers to a patterned screen of any of several materials and types used in shielding selected areas of a semiconductor, photosensitive layer, or substrate from radiation during processing, so that the unshielded areas can be further processed to reproduce the chosen pattern. The type of mask can be designated either by type (e.g., oxide mask or metal mask) or by function (e.g., diffusion mask or vapor-deposition mask).

The term "fastener", "fastening means", or the like at least in some examples refers to a device that mechanically joins or affixes two or more objects together, and may include threaded fasteners (e.g., bolts, screws, nuts, threaded rods, and the like), pins, linchpins, r-clips, clips, pegs, clamps, dowels, cam locks, latches, catches, ties, hooks, magnets, molded or assembled joineries, and/or the like.

The terms "flexible," "flexibility," and/or "pliability" at least in some examples refer to the ability of an object or material to bend or deform in response to an applied force; "the term "flexible" is complementary to "stiffness." The term "stiffness" and/or "rigidity" refers to the ability of an object to resist deformation in response to an applied force. The term "elasticity" refers to the ability of an object or material to resist a distorting influence or stress and to return to its original size and shape when the stress is removed. Elastic modulus (a measure of elasticity) is a property of a material, whereas flexibility or stiffness is a property of a structure or component of a structure and is dependent upon various physical dimensions that describe that structure or component.

The term "substrate" at least in some examples refers to a supporting material upon which, or within which, the elements of a semiconductor device are fabricated or attached. Additionally or alternatively, the term "substrate of a film integrated circuit" at least in some examples refers to a piece of material forming a supporting base for film circuit elements and possibly additional components. Additionally or alternatively, the term "substrate of a flip chip die" at least in some examples refers to a supporting material upon which one or more semiconductor flip chip die are attached. Additionally or alternatively, the term "original substrate" at least in some examples refers to an original semiconductor material being processed. The original material may be a layer of semiconductor material cut from a single crystal, a layer of semiconductor material deposited on a supporting base, or the supporting base itself. Additionally or alternatively, the term "remaining substrate" at least in some examples refers to the part of the original material that remains essentially unchanged when the device elements are formed upon or within the original material.

The term "wafer" at least in some examples refers to a slice or flat disk, either of semiconductor material or of such a material deposited on a substrate, in which circuits or devices are simultaneously processed and subsequently separated into chips if there is more than one device. Additionally or alternatively, the term "wafer-level package" at least in some examples refers to a package whose size is generally equal to the size of the semiconductor device it contains and that is formed by processing on a complete wafer rather than on an individual device. In some cases, because of the wafer-level processing, the size of a wafer-level package may be defined by finer dimensions and tighter tolerances than those for a similar non-wafer-level package. Furthermore, the package size may change with changes in the size of the die.

The term "in situ", in the context of semiconductor fabrication and processing, at least in some examples refers a technique in which several processes are carried out in sequence without exposing a wafer to air between the process steps. These processes can be combinations of different deposition and/or annealing processes such as rapid thermal processing (RTP), oxidation, chemical vapor deposition (CVD), atomic layer deposition (ALD), molecular layer deposition (MLD), surface cleaning, rapid thermal oxidation, nitridation, polysilicon deposition, and the like. The term "in-situ scanning tunneling microscopy" or "STM" at least in some examples refers to a high-resolution technique for studying the structural and electronic properties of surfaces in coordinate space with atomic resolution directly under ultra-high vacuum (UHV) conditions, preserving the fabricated structures from oxidation and contamination.

Although many of the previous examples are provided with use of specific cellular / mobile network terminology, including with the use of 4G/5G 3GPP network components (or expected terahertz-based 6G/6G+ technologies), it will be understood these examples may be applied to many other deployments of wide area and local wireless networks, as well as the integration of wired networks (including optical networks and associated fibers, transceivers, and/or the like). Furthermore, various standards (e.g., 3GPP, ETSI, and/or the like) may define various message formats, PDUs, containers, frames, and/or the like, as comprising a sequence of optional or mandatory data elements (DEs), data frames (DFs), information elements (IEs), and/or the like. However, it should be understood that the requirements of any particular standard should not limit the examples discussed herein, and as such, any combination of containers, frames, DFs, DEs, IEs, values, actions, and/or features are possible in various examples, including any combination of containers, DFs, DEs, values, actions, and/or features that are strictly required to be followed in order to conform to such standards or any combination of containers, frames, DFs, DEs, IEs, values, actions, and/or features strongly recommended and/or used with or in the presence/absence of optional elements.

Aspects of the inventive subject matter may be referred to herein, individually and/or collectively, merely for convenience and without intending to voluntarily limit the scope of this application to any single aspect or inventive concept if more than one is in fact disclosed. Thus, although specific aspects have been illustrated and described herein, it should be appreciated that any arrangement calculated to achieve the same purpose may be substituted for the specific aspects shown. This disclosure is intended to cover any and all adaptations or variations of various aspects. Combinations of the above aspects and other aspects not specifically described herein will be apparent to those of skill in the art upon reviewing the above description.

Additional examples of the presently described methods, devices, systems, and networks discussed herein include the following, non-limiting implementations. Each of the following non-limiting examples may stand on its own or may be combined in any permutation or combination with any one or more of the other examples provided below or throughout the present disclosure.

### FIRST SET OF EXAMPLES

Example 1 includes a method of operating a retimer, comprising: capturing bits included in one or more messages; and performing optical conversion of the captured bits.

Example 2 includes the method of example 1 and/or some other example(s) herein, wherein the method includes: communicating sideband messages and local management control messages with a peer retimer.

Example 3 includes the method of examples 1-2 and/or some other example(s) herein, wherein the method includes: orchestrating link training between a set of ports.

Example 4 includes the method of examples 2-3 and/or some other example(s) herein, wherein the retimer is connected to the peer retimer via an optical link of an optical IX.

Example 5 includes the method of examples 1-4 and/or some other example(s) herein, wherein the retimer is connected to a device via an electrical link of an interconnect (IX) technology, wherein the device includes at least one port of the set of ports.

Example 6 includes the method of example 5 and/or some other example(s) herein, wherein the optical link is bandwidth (BW)-matched with a lower block error rate (BER) than the electrical link.

Example 7 includes the method of example 6 and/or some other example(s) herein, wherein the optical link has a lower first burst error rate (FBER) than 10⁻⁶ and a retry probability of a message of the one or more messages after forward error correction code (FEC) correction less than 3×10⁻⁵.

Example 8 includes the method of examples 6-7 and/or some other example(s) herein, wherein the method includes: passing each message of the one or more messages as-is; and reusing forward error correction (FEC) and cyclic redundancy check (CRC) bits of each message.

Example 9 includes the method of examples 6-8 and/or some other example(s) herein, wherein no flow control is required by the set of ports and the retimer.

Example 10 includes the method of example 5 and/or some other example(s) herein, wherein the optical link is BW-mismatched and/or has higher BER than the electrical link.

Example 11 includes the method of example 10 and/or some other example(s) herein, wherein the method includes: implementing local PHY-level flow control between a transmitter port and the retimer.

Example 12 includes the method of examples 10-11 and/or some other example(s) herein, wherein the method includes: generating or determining FEC and CRC bits for each message of the one or more messages.

Example 13 includes the method of example 12 and/or some other example(s) herein, wherein the generating or determining FEC and CRC bits includes: re-computing the FEC and CRC bits for the PHY-level flow.

Example 14 includes the method of examples 12-13 and/or some other example(s) herein, wherein the generating or determining FEC and CRC bits includes: regenerating the FEC and CRC bits based on the BER characteristics of the optical link.

Example 15 includes the method of examples 3-14 and/or some other example(s) herein, wherein the link training includes: increasing a data rate from an initial data rate to a highest achievable data rate.

Example 16 includes the method of example 15 and/or some other example(s) herein, wherein the link training includes: forcing a local port of the retimer into a detect mode if another port of the peer retimer is not ready to train.

Example 17 includes the method of example 16 and/or some other example(s) herein, wherein the forcing the local port into the detect mode includes: sending a special ordered set P1 to the peer retimer.

Example 18 includes the method of example 17 and/or some other example(s) herein, wherein the P1 is a TS1 ordered set with a reserved bit set to 1b to indicate it is a P1 ordered set.

Example 19 includes the method of examples 17-18 and/or some other example(s) herein, wherein the method includes: determining a set of optical channels to be used; and initializing a polling state after one or more initial TS1s indicate that the port supports its flavor of optical link.

Example 20 includes the method of example 19 and/or some other example(s) herein, wherein the method includes: mapping each lane of the electrical link to a corresponding optical channel.

Example 21 includes the method of example 20 and/or some other example(s) herein, wherein the mapping includes: mapping each message of the one or more messages directly to an available optical channel of the set of optical channels using byte interleaving.

Example 22 includes the method of example 20 and/or some other example(s) herein, wherein the mapping includes: mapping byte i to optical channel *i* mod(*n*) when *n* is not a multiple of 3 wherein *n* is a number of optical channels in the set of optical channels.

Example 23 includes the method of example 22 and/or some other example(s) herein, wherein the mapping includes: when *n* is a multiple of 3, shifting bytes by a shifting factor to preserve the burst error detection in a channel.

Example 24 includes the method of examples 2-23 and/or some other example(s) herein, wherein the method includes: signalling sideband messages using a Margin Command field in an SKP ordered set.

Example 25 includes the method of examples 1-24 and/or some other example(s) herein, wherein the device is a root port (RP), root complex (RC), switch, bridge, or endpoint (EP).

Example 26 includes the method of examples 1-25 and/or some other example(s) herein, wherein the device is a chip, system-on-chip (SoC), package, system-in-package (SiP), or integrated circuit (IC).

Example 27 includes the method of examples 1-26 and/or some other example(s) herein, wherein the one or more messages is/are packets and/or flits.

Example 28 includes the method of examples 1-27 and/or some other example(s) herein, wherein the retimer is a chip, SoC, package, SiP, or IC separate from the device.

Example 29 includes the method of examples 1-27 and/or some other example(s) herein, wherein the retimer is part of a same chip, SoC, package, SiP, or IC as the device.

Example 30 includes the method of examples 1-29 and/or some other example(s) herein, wherein the retimer and the peer retimer are part of a same or different chip, SoC, package, SiP, or IC.

### SECOND SET OF EXAMPLES

In one aspect, a method, includes determining an optical interconnect supports a defined optical mode, decoding electrical signals from an electrical interconnect, the electrical signals to represent a number of bits from one or more messages, converting the electrical signals to optical signals for the optical interconnect, and mapping the decoded bits to one or more optical channels of the optical interconnect.

The method may also include where the electrical interconnect is a dual-simplex communications channel between two components in a system includes a number of lanes, each lane representing a set of low-voltage differentially driven signal pairs, each signal pair to comprise one pair for transmission and one pair for reception.

The method may also include where the optical interconnect includes fiber optic cables, vertical cavity surface emitting lasers (VCSELs), single-mode fiber, multi-mode fiber, waveguides, free-space optical interconnects, optical printed circuit boards (PCBs), parallel optics interconnects, coherent optical interconnects, or silicon photonics.

The method may also include where the messages comprise flow control units (FLITs), and the decoded bits comprise data bits, forward error correction (FEC) bits, and cyclical redundancy check (CRC) bits.

The method may also include performing link training through the optical interconnect using a P1 ordered set, the P1 ordered set to comprise a training sequence 1 (TS1) ordered set with a reserved bit set to 1b to indicate it is the P1 ordered set.

The method may also include where the messages comprise sideband messages or inter-retimer messages, includes modifying a margin command field of a skip ordered set to represent decoded bits from the sideband messages or the inter-retimer messages, and mapping the skip ordered set to one or more optical channels of the optical interconnect. Other technical features may be readily apparent to one skilled in the art from the following figures, descriptions, and claims.

In one aspect, an optical retimer, includes an electronic integrated circuit (EIC) to process electrical signals for an electrical interconnect. The optical retimer also includes a photonics integrate circuit (PIC) communicatively coupled to the EIC, the PIC to process optical signals for an optical interconnect. The optical retimer also includes logic circuitry communicatively coupled to the EIC and the PIC, the logic circuitry to determine the optical interconnect supports a defined optical mode, decode electrical signals from the electrical interconnect, the electrical signals to represent a number of bits from one or more messages, and instruct the EIC and the PIC to convert the electrical signals to optical signals for the optical interconnect, and map the decoded bits to one or more optical channels of the optical interconnect.

The optical retimer may also include where the messages comprise flow control units (FLITs), and the decoded bits comprise data bits, forward error correction (FEC) bits, and cyclical redundancy check (CRC) bits.

The optical retimer may also include the logic circuitry to perform link training through the optical interconnect using a P1 ordered set, the P1 ordered set to comprise a training sequence 1 (TS 1) ordered set with a reserved bit set to 1b to indicate it is the P1 ordered set.

The optical retimer may also include where the messages comprise sideband messages or inter-retimer messages, the logic circuitry to modify a margin command field of a skip ordered set to represent decoded bits from the sideband messages or the inter-retimer messages, and map the skip ordered set to one or more optical channels of the optical interconnect. Other technical features may be readily apparent to one skilled in the art from the following figures, descriptions, and claims.

In one aspect, a system, includes a first system-on-a-chip (SoC), a first electrical interconnect communicatively coupled to the first SoC, an optical interconnect, and a first optical retimer communicatively coupled to the first electrical interconnect and the optical interconnect, the optical retimer to determine the optical interconnect supports a defined optical mode, decode electrical signals from the electrical interconnect, the electrical signals to represent a number of bits from one or more messages from the first SoC, convert the electrical signals to optical signals for the optical interconnect, and map the decoded bits from the first electrical interconnect to one or more optical channels of the optical interconnect.

The system may also include a second system-on-a-chip (SoC), a second electrical interconnect communicatively coupled to the second SoC, and a second optical retimer communicatively coupled to the second electrical interconnect and the optical interconnect, the second optical retimer to decode optical signals from the first optical retimer transported over the optical interconnect, the optical signals to represent a number of bits from the one or more messages from the first electrical interconnect mapped to the one or more optical channels of the optical interconnect, convert the optical signals to electrical signals for the second electrical interconnect, and map the decoded bits from the optical interconnect to one or more lanes of the second electrical interconnect for transport to the second SoC. Other technical features may be readily apparent to one skilled in the art from the following figures, descriptions, and claims.

The method may also include determining a bandwidth for the electrical interconnect matches a bandwidth for the optical interconnect, determining a bit error rate (BER) for the electrical interconnect is higher than a BER for the optical interconnect, and mapping the data bits, FEC bits, and the CRC bits of the decoded bits to the one or more optical channels of the optical interconnect using byte interleaving without modifications to a byte order.

The method may also include determining a bandwidth for the electrical interconnect does not match a bandwidth for the optical interconnect, determining a number of optical channels for the optical interconnect is not a multiple of three optical channels, and mapping the data bits, FEC bits, and the CRC bits of the decoded bits to the one or more optical channels of the optical interconnect using byte interleaving without modifications to a byte order.

The method may also include determining a bandwidth for the electrical interconnect does not match a bandwidth for the optical interconnect, determining a number of optical channels for the optical interconnect is a multiple of three optical channels, and mapping the data bits, FEC bits, and the CRC bits of the decoded bits to the multiple of three optical channels of the optical interconnect using byte interleaving with modifications to a byte order.

The method may also include determining a bandwidth for the electrical interconnect does not match a bandwidth for the optical interconnect, determining a bit error rate (BER) for the electrical interconnect is lower than a BER for the optical interconnect, and recalculating the FEC bits and the CRC bits to include physical layer credits.

The optical retimer may also include the logic circuitry to determine a bandwidth for the electrical interconnect matches a bandwidth for the optical interconnect, determine a bit error rate (BER) for the electrical interconnect is higher than a BER for the optical interconnect, and map the data bits, FEC bits, and the CRC bits of the decoded bits to the one or more optical channels of the optical interconnect using byte interleaving without modifications to a byte order.

The optical retimer may also include the logic circuitry to determine a bandwidth for the electrical interconnect does not match a bandwidth for the optical interconnect, determine a number of optical channels for the optical interconnect is not a multiple of three optical channels, and map the data bits, FEC bits, and the CRC bits of the decoded bits to the one or more optical channels of the optical interconnect using byte interleaving without modifications to a byte order.

The optical retimer may also include the logic circuitry to determine a bandwidth for the electrical interconnect does not match a bandwidth for the optical interconnect, determine a number of optical channels for the optical interconnect is a multiple of three optical channels, and map the data bits, FEC bits, and the CRC bits of the decoded bits to the multiple of three optical channels of the optical interconnect using byte interleaving with modifications to a byte order.

The optical retimer may also include the logic circuitry to determine a bandwidth for the electrical interconnect does not match a bandwidth for the optical interconnect, determine a bit error rate (BER) for the electrical interconnect is lower than a BER for the optical interconnect, and recalculate the FEC bits and the CRC bits to include physical layer credits. Other technical features may be readily apparent to one skilled in the art from the following figures, descriptions, and claims.

## Claims

1. A method, comprising:
determining an optical interconnect supports a defined optical mode;
decoding electrical signals from an electrical interconnect, the electrical signals to represent a number of bits from one or more messages;
converting the electrical signals to optical signals for the optical interconnect; and
mapping the decoded bits to one or more optical channels of the optical interconnect.

2. The method of claim 1, wherein the messages comprise flow control units (FLITs), and the decoded bits comprise data bits, forward error correction (FEC) bits, and cyclical redundancy check (CRC) bits.

3. The method of claim 2, comprising:
determining a bandwidth for the electrical interconnect matches a bandwidth for the optical interconnect;
determining a bit error rate (BER) for the electrical interconnect is higher than a BER for the optical interconnect; and
mapping the data bits, FEC bits, and the CRC bits of the decoded bits to the one or more optical channels of the optical interconnect using byte interleaving without modifications to a byte order.

4. The method of any of claims 2 to 3, comprising:
determining a bandwidth for the electrical interconnect does not match a bandwidth for the optical interconnect;
determining a number of optical channels for the optical interconnect is not a multiple of three optical channels; and
mapping the data bits, FEC bits, and the CRC bits of the decoded bits to the one or more optical channels of the optical interconnect using byte interleaving without modifications to a byte order.

5. The method of any of claims 2 to 4, comprising:
determining a bandwidth for the electrical interconnect does not match a bandwidth for the optical interconnect;
determining a number of optical channels for the optical interconnect is a multiple of three optical channels; and
mapping the data bits, FEC bits, and the CRC bits of the decoded bits to the multiple of three optical channels of the optical interconnect using byte interleaving with modifications to a byte order.

6. The method of any of claims 2 to 5, comprising:
determining a bandwidth for the electrical interconnect does not match a bandwidth for the optical interconnect;
determining a bit error rate (BER) for the electrical interconnect is lower than a BER for the optical interconnect; and
recalculating the FEC bits and the CRC bits to include physical layer credits.

7. The method of any of claims 1 to 6, comprising performing link training through the optical interconnect using a P1 ordered set, the P1 ordered set to comprise a training sequence 1 (TS1) ordered set with a reserved bit set to 1b to indicate it is the P1 ordered set.

8. The method of any of claims 1 to 7, wherein the messages comprise sideband messages or inter-retimer messages, comprising:
modifying a margin command field of a skip ordered set to represent decoded bits from the sideband messages or the inter-retimer messages; and
mapping the skip ordered set to one or more optical channels of the optical interconnect.

9. An optical retimer, comprising:
an electronic integrated circuit (EIC) to process electrical signals for an electrical interconnect;
a photonics integrate circuit (PIC) communicatively coupled to the EIC, the PIC to process optical signals for an optical interconnect; and
logic circuitry communicatively coupled to the EIC and the PIC, the logic circuitry to:
determine the optical interconnect supports a defined optical mode;
decode electrical signals from the electrical interconnect, the electrical signals to represent a number of bits from one or more messages; and
instruct the EIC and the PIC to convert the electrical signals to optical signals for the optical interconnect, and map the decoded bits to one or more optical channels of the optical interconnect.

10. The optical retimer of claim 9, wherein the messages comprise flow control units (FLITs), and the decoded bits comprise data bits, forward error correction (FEC) bits, and cyclical redundancy check (CRC) bits.

11. The optical retimer of claim 10, the logic circuitry to:
determine a bandwidth for the electrical interconnect matches a bandwidth for the optical interconnect;
determine a bit error rate (BER) for the electrical interconnect is higher than a BER for the optical interconnect; and
map the data bits, FEC bits, and the CRC bits of the decoded bits to the one or more optical channels of the optical interconnect using byte interleaving without modifications to a byte order.

12. The optical retimer of any of claims 10 to 11, the logic circuitry to:
determine a bandwidth for the electrical interconnect does not match a bandwidth for the optical interconnect;
determine a number of optical channels for the optical interconnect is not a multiple of three optical channels; and
map the data bits, FEC bits, and the CRC bits of the decoded bits to the one or more optical channels of the optical interconnect using byte interleaving without modifications to a byte order.

13. The optical retimer of any of claims 10 to 12, the logic circuitry to:
determine a bandwidth for the electrical interconnect does not match a bandwidth for the optical interconnect;
determine a number of optical channels for the optical interconnect is a multiple of three optical channels; and
map the data bits, FEC bits, and the CRC bits of the decoded bits to the multiple of three optical channels of the optical interconnect using byte interleaving with modifications to a byte order.

14. The optical retimer of any of claims 10 to 13, the logic circuitry to:
determine a bandwidth for the electrical interconnect does not match a bandwidth for the optical interconnect;
determine a bit error rate (BER) for the electrical interconnect is lower than a BER for the optical interconnect; and
recalculate the FEC bits and the CRC bits to include physical layer credits.

15. An apparatus comprising means to perform a method as claimed in any preceding claim.
